# EUROPEAN PATENT APPLICATION

(11) **EP 1 542 119 A1**
(43) Date of publication of application: **15.06.2005**
(21) Application number: 02783631.1
(22) Date of filing: 25.11.2002
(51) Int. Cl.: G06F 3/02, G06F 3/023, H04M 1/23, H04M 1/02

(54) **ULTRA HIGH-SPEED CHARACTER INPUT DEVICE OF CELLULAR TELEPHONE**

(30) Priority: 30.08.2002 JP 2002252212; 31.10.2002 JP 2002316987
(71) Applicant: Tanaka, Katsuzo, Nagasaki-shi, Nagasaki 852-8064 (JP)
(72) Inventor: Tanaka, Katsuzo, Nagasaki-shi, Nagasaki 852-8064 (JP)
(74) Representative: Grünecker, Kinkeldey, Stockmair & Schwanhäusser Anwaltssozietät
(86) International application number: PCT/JP2002/012341
(87) International publication number: WO 2003/042803

(57) **Abstract**

Letter input rate of a conventional cell phone is low because only thumb is used for inputting a letter. When the inventive cell phone provided with one joystick, two shift keys and twenty six keys on the opposite side faces is grasped by both hands and ten fingers are used, any one of twenty six alphabetical letters can be inputted by single push operation without switching the shift key and letters can be inputted at super-high rate by touch typing.

A novel and epoch-making field as the communication means of a cell phone is developed and convenience of user can be enhanced significantly.

## Description

### TECHNICAL FIELD

The present invention relates to a letter input device for a cell phone and a PDA (personal digital assistant) and a letter input device provided for a vehicle and a letter input device for communication device of a remote control unit.

### BACKGROUND ART

In accordance with the recent development of data communication techniques, there are cell phones provided with a function for transmitting and receiving e-mail or PDA (personal digital assistant) devices equipped with a letter input device with a data communication function.

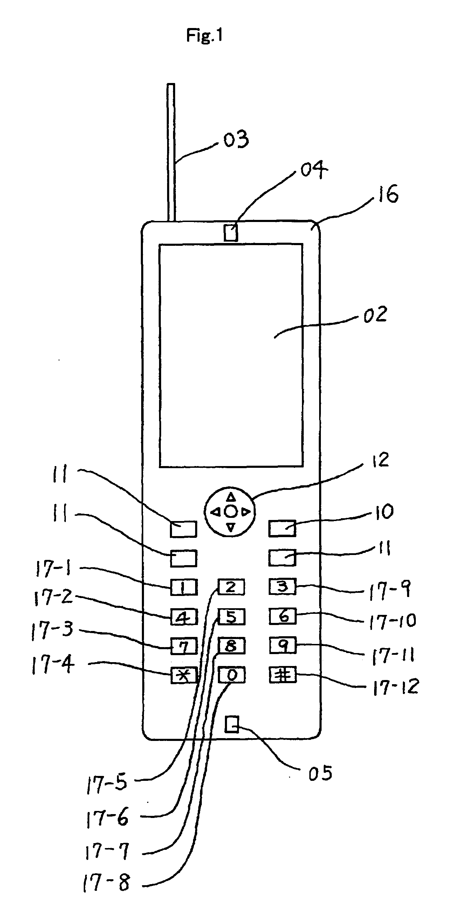

Fig. 1 illustrates a front view of a conventional general purpose cell phone. This cell phone is comprised of a display 02, an antenna 03, a loudspeaker 04, a microphone 05, a power switch 10, various mode switch keys 11, a joy key 12, letter keys 17, and a main body 16.

As shown in Fig. 1, the cell phone is generally equipped with about twelve letter keys, about four various mode conversion keys, and one joy key so that letters can be inputted through a same flat surface as a display (information display section).

A PDA device also has a similar number of keys on the same flat surface as a display. Some PDA devices have fewer keys than those of cell phones while other PDA devices have fifty keys or more as the key board of a personal computer does.

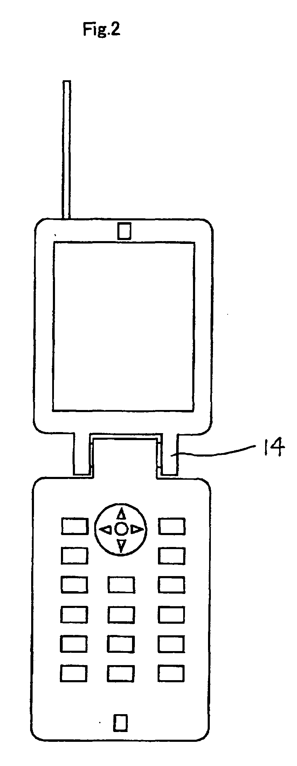

Fig. 2 illustrates a front view of a letter input device for a conventional folding type cell phone. This letter input device has at the center section thereof a hinge mechanism 14 by which the device is configured to be folded so that a display and a key board section oppose to each other when the device is not used. Such a mechanism allows the device to be smaller and thus to be conveniently carried.

A cell phone and a PDA device both have letter keys on a same flat surface as a display. Alternatively, the foldable type device, as shown in Fig. 2, in which one flat surface having the letter keys and another flat surface having the display can be folded when the device is not used has an angle of gradient between the display and the key board section as in a notebook computer. Both the devices shown in Figs. 1 and 2, however, have the key board section on the flat surface only which can be seen in front of a user.

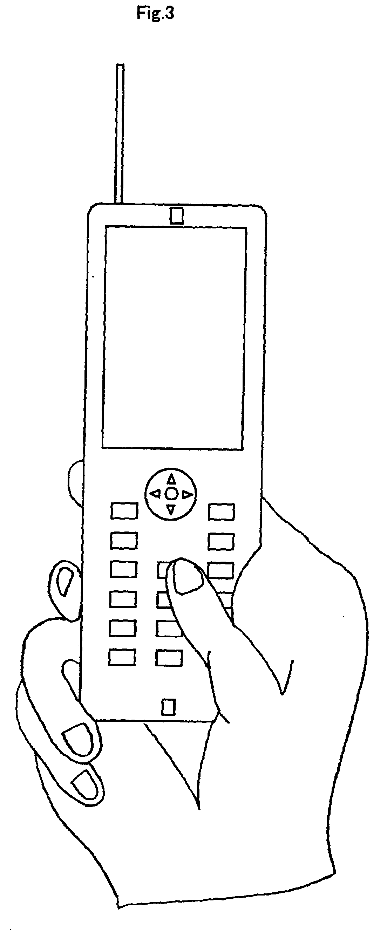

When letters are inputted using a cell phone, a right-handed user holds the cell phone with the right hand to move the display to the front of the user's eyes, thereby moving the right hand thumb to push one key to another, as shown in Fig. 3.

When the user holds the cell phone by the right hand to operate the right hand thumb to push the keys for letter input, the user's left hand is free and thus can be arbitrarily used for other tasks (e.g., hanging on a strap in a train or railcar or holding a bag).

Of the PDA devices, small types thereof which can be operated with one hand are used in a similar way as for a cell phone.

A large PDA device is placed on a desk so that the fingers of both hands are used to input letters, as in the case of the key board of a personal computer. This prevents one hand from arbitrarily being used for other tasks and also requires the use of the desk or knees. For a cell phone or a small PDA device which is held by one hand to be operated with the fingers of the same hand, such a device requires the one hand holding the device to use the thumb to sequentially operate about twelve keys on the key board section in front of the user for the letter input. Thus, the rate at which text is prepared is determined by the rate at which the thumb pushes each of the keys for the letter input.

The key board section provided on the front surface of the cell phone has about twelve keys to which twenty-six alphabet letters A to Z and ten numeric characters are assigned. On average, one key is assigned with three types of alphabet letters and one numeric character.

When a conventional cell phone is operated, as shown in Fig. 3, only one hand thumb is used to operate twelve keys on the flat surface provided in the same direction of the display. For example, when twenty-six English alphabet letters are to be inputted to the cell phone, three letters are inputted with one key. Specifically, when an alphabet capital letter of "C" is inputted as shown in Fig. 1, a key 17-5 assigned for alphabet letters of "ABC" must be continuously pushed three times. When an alphabet lower case of "c" is inputted to the cell phone on the other hand, the key 17-5 for "ABC" must be continuously pushed six times or a mode selector switch for inputting a lower case must be switched with a thumb before continuously pushing the key 17-5 for "A" three times. Thereafter, when another alphabet capital letter is desired to be inputted to the cell phone, the mode selector switch must be pushed again to return to the previous mode.

In order to input Japanese, keys for number input of "1", "2", ••• "9", "0" are set for Japanese character " 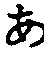 " row, " 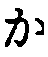 " row, " 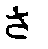 " row, •••, " 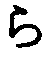 " row, " 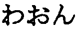 " in 50 sound arrangement. For example, in case of the key of " 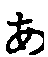 " row, typing the " 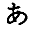 " key once may result in a indicated " 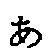 ", twice results in " 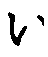 ", three times results in " 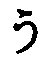 ", four times results in " 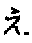 ", five times results in " 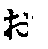 ".

These Japanese characters can be converted into Kanji (Chinese character) or Japanese "Katakana" by a joy key. By pushing the center part of the joy key, converted characters are fixed, and cursor position may be shifted to the next position to be inputed.

The joy key is used from the former times and it is a key of one surfaced-apparatas which have electric contact points in the upper, lower, left and right area part.

When the upper, lower, left or right area part of joy key is depressed respectively, the electrical signal will be inputted respectively. Generally, a joy key is used for shifting the cursor to the upper, lower, left or right direction.

The joy key is also used for converting Japanese "Hiragana" into "Kanji" (Chinese character) or Japanese "Katakana".

If a button of the center part of the joy key is pushed, another signal may be inputted, and the signal will be used for fixing the decision of selected words.

Although a joy stick is completely the same as that of the duty of the joy key, there is one button in the center and its height is farther high than the circumference height. If the button head is swung to four directions (upper, lower, left or right direction), another signal will be inputted respectively.

If the button head is depressed perpendicularly, another signal will be inputted, and the signal will be used for fixing the decision of selected words.

There is another kind of key which surface of the joy key is divided into four keys, and generally it is called four arrow direction keys. There is a button in the center part of the the four arrow direction key, it is used as a decision key.

In addition, there are another types of the kind which shifts the cursor to the upper or lower direction by rotating a cogwheel, and left and right side key of the cogwheel shifts the cursor to the left or right direction, and rotating a ball embedded by half shifts the cursor to the upper, lower, left or right direction.

The key which used only two electric contacts faced each other of the joy key is called two-direction joy key. The key which used only two electric contacts faced each other of the four arrow direction key is called two-arrow direction key. These are the completely same function as two keys.

If a mode selecter key is depressed to input a number, it will be in the state where a number can be inputted, and if a mode selecter key is depressed further once again, it will be in the state where the alphabet can be inputted.

The following is the description of the way of copying, cutting and pasting of e-mail sentence etc. which is already made in the display of conventional cell phone, and perfoming pasting it into the another position after copying a part of e-mail sentence.

First, the menu of "copying", "cutting" and "pasting" is displayed by depressing the mode selecter key 11, and the cursor is shifted to "copying" position by joy key 12. Then, "copying" is decided by depressing the decision key in the center position of the joy key 12, and shifting the cursor to the start point of the sentence to be copyed and depressing the decision key, and after shifting the cursor to the end point of the sentence to be copyed, and again decision key is depressed.

Next, the menu of "copying", "cutting" and "pasting" is displayed by depressing the mode selecter key 11, and the cursor is shifted to "pasting" position by joy key 12. Then, "pasting" is decided by depressing the decision key, and shifting the cursor to the insert point of the sentence to be patched and by depressing the decision key, then the pasting work can be perfomed. There are twelve steps of work in total.

A letter input rate when only the thumb is used to input letters is about one-fifth slower than that obtained when ten fingers of both hands are used for inputting letters as in a personal computer. Such a slow speed prevents even a technique enabling a faster data communication rate from being sufficiently utilized because the letter input rate is not improved. This is due to the fact that only one thumb of one hand is used, which requires the thumb to manage too many keys and thus requires the thumb to move in an excessively broad range. This is also due to the fact that the excessively broad range in which the thumb must move leads to an extreme difficulty of touch typing (i.e., an operation in which a user presses keys without looking at the keys the user pushes while looking at a display on which the letters corresponding to the pushed keys are displayed). The use of only the thumb for letter input also requires the user to alternately switch the user's field of view to the display and the key board on the front surface having twelve keys, which causes not only a slower input rate but also an increased amount of input errors.

Thus, it is desired to allow cell phones and small PDA devices to have a faster letter input rate. It is also desired to provide such a device that does not always require only one hand to input letters when using a cell phone in the case where both hands are free so that both hands are allowed to be used for the letter input, thereby providing a further faster letter input rate. Such a device is desired by all users.

If the letter input rate of a cell phone can be fast as that of a personal computer on a desk, then a demand for business communication through the cell phone can be drastically expanded.

At present, a cell phone or a PDA device having such letter keys is not marketed. Under the present situation, the following patents are published as the general technical level of this field:
JP2001-022501;
JP09-083402;
JP2000-59483;
JP2000-151774;
JP2001-060999;
EP 104709
JP2001-117709;
JP10-224288;
JP06-274257;
US4791408;
US4360892;
US5281966;
JP2000-244623; and
JP2000-27653,

All of these patents only attempt to provide a faster letter input rate by providing five keys on a side face so that up to five fingers of one hand can be used for the letter input or only try to eliminate the limitation of the number of keys due to a small space of the front surface of a cell phone when information is accessed using the cell phone by providing about four auxiliary keys on the side face so that about twelve keys on the front surface can play an increased number of roles.

There are a number of other publications of patent applications which try to provide a faster letter input rate of a cell phone by using only about twelve keys on a front surface by the contrivance of software. Neither of the patent applications, however, is effective.

At present, such techniques as suggested in the above publications are not practically marketed. The reason is that the letter input rate of a cell phone having the above-described side face keys and/or side face auxiliary keys does not remarkably faster than that of a currently-marketed product having on the front surface thereof a key board.

It should be noted that an external key board is a hot-selling product by which a cell phone and a JIS key board are connected through a cable as disclosed in JP2000-244623.

JP2000-27653 discloses a technique wherein the little fingers of both hands are fixed to a PDA device to hold it. The published patent applications described above indicate the difficulty to input letters with the current cell phones.

### DISCLOSURE OF THE INVENTION

The current techniques as described above do not provide an idea of allowing a main body of a cell phone to be held by both hands so that ten fingers of both hands are used to input letters and do not get out of a mere idea of the operation with only one hand. In other words, in these conventional techniques, it has not been noticed that the use of ten fingers of both hands provides a remarkably faster letter input rate. When ten fingers of both hands are used to input letters to a recent small cell phone which can be held with one hand, contrivance is required as to where and in what manner the hands should be positioned.

An idea of simultaneously using ten fingers for a cell phone is required before trying to dispose ten fingers on the cell phone.

In the above conventional techniques, it has not been noticed that the use of both hands for holding a cell phone can provide the function of fingers in which each finger of the ten fingers differentiates a plurality of (i.e., two or more) keys (six or more keys in the case of a thumb) to press the key. In other words, an idea according to the above conventional techniques in which a cell phone is held with one hand to allow the fingers of the hand holding the cell phone to press a key substantially prevents a forefinger, a middle finger, a fourth finger, and a little finger of the hand from differentiating the neighboring two or more keys arranged in the direction of the order of the fingers.

In addition, if both hands are used to hold a cell phone to use the ten fingers of both hands, one may find another problem in that when allowing a dominant hand (i.e., one hand whose fingers can move faster than those of the other hand) to provide a number of delicate operations, letter input means of a cell phone used by a right-handed user is provided at a position different from that at which the letter input means of a cell phone used by a left-handed user is provided, and that thus, it is difficult to use a single type of cell phone for both of a right-handed user and a left-handed user. Alternatively, a left-handed user will come to find that he or she uses a cell phone used by right-handed users without modification to train his or her right hand fast enough to use the cell phone.

The cell phones, which were conventionally started with a function of telephone, have been generally bound by a mere idea of the operation with one hand in spite of the current addition of an e-mail function. The reason is that they do not discover the fact that a user inputting a text for an e-mail to a cell phone very frequently has both hands which can be freely used. Alternatively, the reason may be that they considered that a cell phone held by both hands causes the right hand fingers and the left hand fingers to be superposed on the same position on the cell phone surface, thereby preventing the user from pushing ten keys.

When performing the copying and pasting of e-mail sentence which is already made in the display of conventional cell phone, there are twelve steps of work in total described above.

If the work is performed by only one thumb, since joy key 12 and mode selecter key 11 must be operated in order by the thumb, it becomes very troublesome work.

Now, the cell phone of the future cannot create the e-mail with several thousand characters etc.

The present inventors solved the above problems involved in the conventional techniques by noting the fact that when a user inputs a text for an e-mail to a cell phone, it is very often that the user is in a waiting room, in a vehicle, sitting on a bench, or standing at one point while both hands can be freely used.

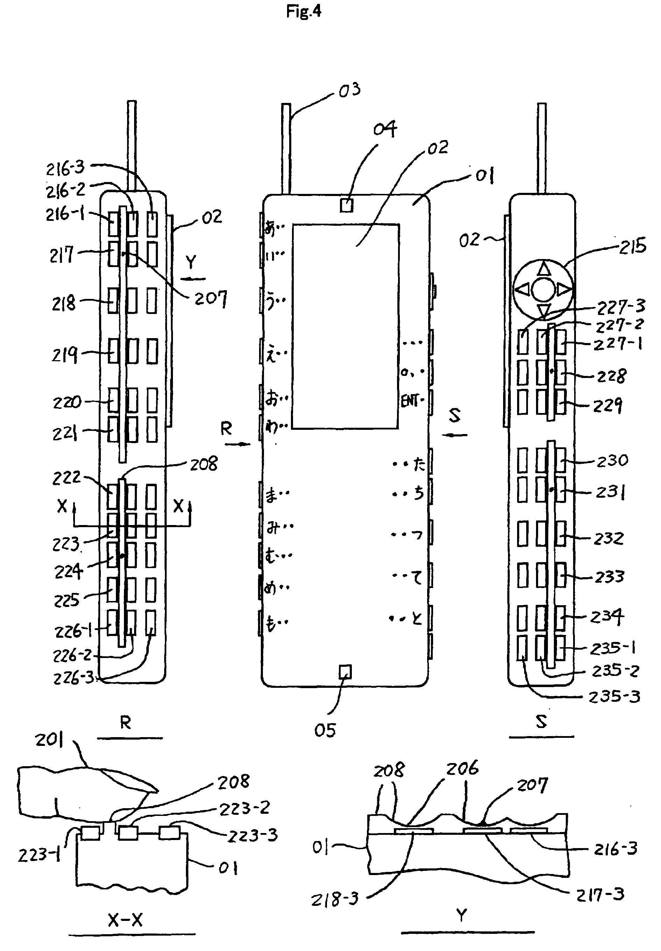

Fig. 4 illustrates a cell phone according to the present invention which is held by both hands without being placed on a desk or knees so that ten fingers of both hands can be used to input letters to the cell phone. Fig. 4 also illustrates invented super-high rate letter input device for a cell phone which uses the function of fingers in which both hands allow each finger of the ten fingers to differentiate three keys (fifteen keys in the case of a thumb) to depress a key, and the input device can input the language expressed with Japanese "Hiragana" or similar about fifty characters.

According to the present invention, a main body of a cell phone has a substantially rectanguler parallelepiped shape in which faces having narrower widths including the longest edge line both have thereon keys so that the thumbs and the respective remaining four fingers of both hands hold the cell phone. This allows a rotatory force by the depressing force and its reaction force by the keys on both faces to be minimized, thereby providing the cell phone with a structure by which the cell phone is easily held and the keys thereon are pushed with an extreme ease.

Moreover, the cell phone is held by a right hand and a left hand such that the right hand and the left hand are shifted in the forword and backward direction of the cell phone. This allows the ten fingers to be efficiently positioned over the entirety of the cell phone's side faces, thereby to enable pressing a number of keys. Moreover, since a display can be equipped all over the front surface of the cell phone by above reason, it can display a lot of information.

Cross-sections X-X as shown in Fig. 4 shows a frame which is provided on the position between the neighboring keys in the first and second column while three column keys are provided in one row. The frame is designed to be higher than these neiboring keys.

When the finger placed on the frame receives a reaction force caused when a key on the opposite side face is pushed, erroneous key depressing decreases. There is also an advantage which can distinguish by touch typing correctly the first and second column keys which are divided with the frame.

Fig. 4 illustrates one example of a super-high rate letter input device for a cell phone according to the present invention which can be held by both hands so that the ten fingers of both hands can be used for inputting Japanese and English languages.

The cell phone includes: a main body 01; a display 02; an antenna 03; a loudspeaker 04; a microphone 05; left side face keys consists of such as 216-1, 216-2, 216-3 in one row and three columns; total of thirty-three keys in eleven rows and three columns 217, 218, 219, 220, 221, 222, 223, 224, 225 and 226, and on right side face, a joy key 215; total of twenty-four keys in eight rows and three columns 227, 228, 229, 230, 231, 232, 233 and 234, and three function keys 235; fingers 201; concavities 206 provided on the frame to guide the fingers to the home positions; projections 207 provided on the frame which a user tactilely felt the finger's position by fingers; and a frame 208 for fingers rest while no key is being depressed.

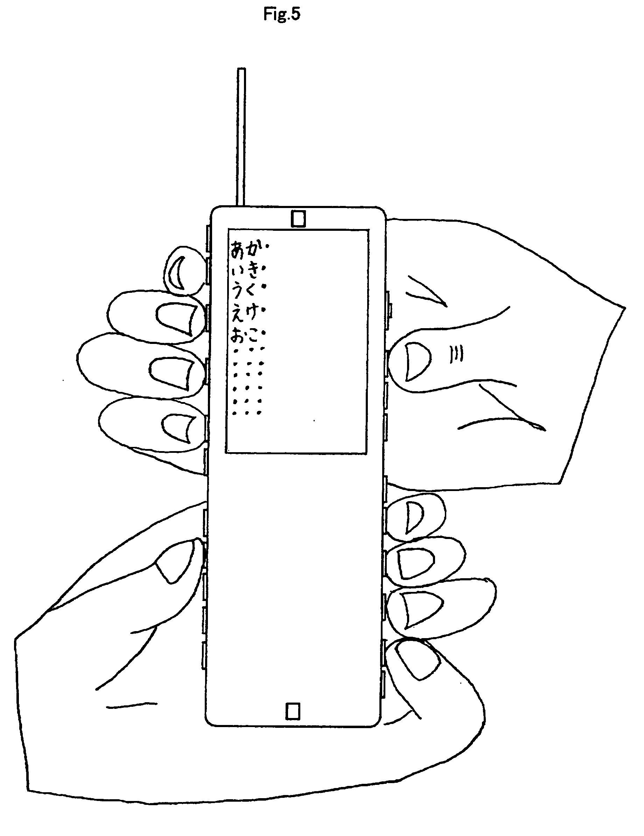

Fig. 5 illustrates a schematic view of the cell phone of Fig. 4 which is being inputted with letters by the ten fingers of both hands.

Fig. 5 schematically illustrates the cell phone being held by both hands, wherein ten fingers of both hands are positioned at home positions of the letter input means.

As shown in Fig. 5, the right hand thumb operates the joy key 215, nine keys in three rows and three columns 227, 228 and 229 on the right side face; the right hand forefinger operates six keys in two rows and three columns 216 and 217 on the left side face; the right hand middle finger operates three keys of 218; the right hand fourth finger operates three keys of 219; the right hand little finger operates six keys in two rows and three columns 220 and 221 on the left side face respectively.

The left hand thumb operates fifteen keys in five rows and three columns 222, 223, 224, 225 and 226 on the left side face; the left hand forefinger operates six keys in two rows and three columns 230 and 231 on the right side face; the left hand middle finger operates three keys of 232; the left hand fourth finger operates three keys of 233; the left hand little finger operates three keys of 234 and three function keys 235 on the right side face respectively.

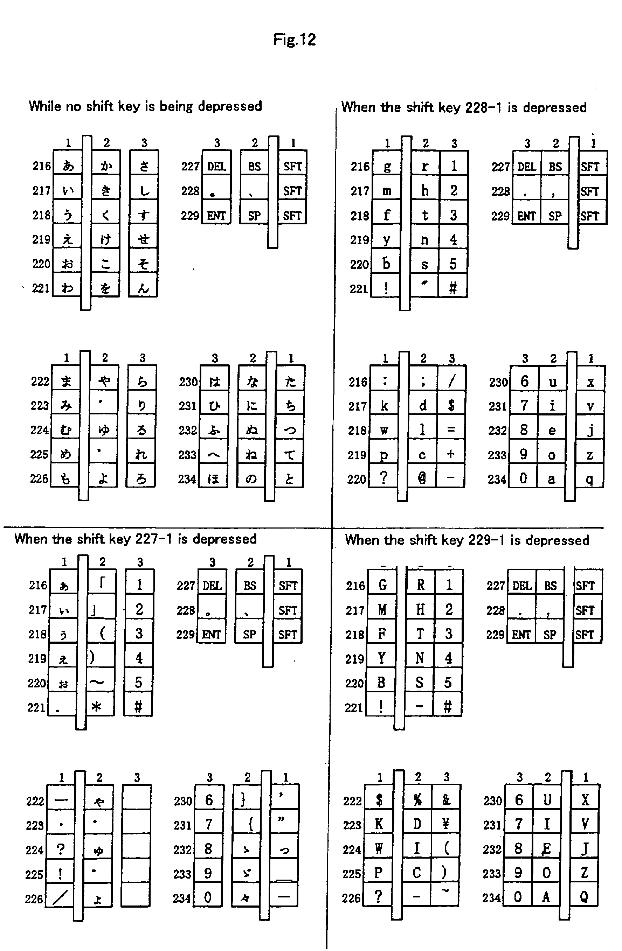

Fig. 12 illustrates the cell phone which is allocated forty-eight Japanese "Hiragana", alphabet and ten numerical characters to the keys of the cell phone of Fig. 4.

While no key is being depressed by right hand thumb, the remaining nine fingers can depress forty-eight keys, thereby allowing any one of forty-eight characters "Hiragana" of " 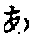 ", " 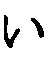 ", " 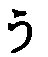 ", " 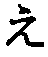 ", " 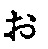 ", " 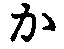 ", •••, " 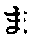 ", " 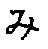 ", " 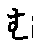 ", " 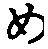 ", " 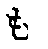 ", " 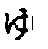 ", " 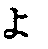 ", " 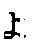 ", " 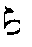 ", " 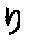 ", " 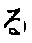 ", " 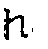 ", " 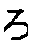 ", " 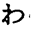 ", " 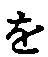 ", " 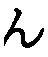 ", a voiced sound " 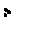 " and a voiceless sound "^{°} " to be inputted by single depressing operation.

Since "Hiragana" key arrangement can not be visible directly from the front side, it is easy to learn the position of the characters for the user by allowing the order of the " 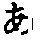 ", " 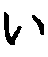 ", " 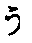 ", " 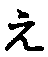 ", " 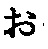 " to be provided in one column. Now, three keys of " 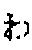 ", " 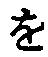 ", " 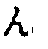 " are not concerned with other "Hiragana", therefore even if shifting these three keys to the operable position by left hand thumb does not cause any inconvenience to the users. Or the same function can be performed even if shifting it to the position operable by left hand little finger.

Above forty-eight characters may be changed by forty-eight characters of other language, and number of characters may not be forty-eight characters exactly. For example, in the case of language sufficient by about thirty-six characters, remaining twelve characters may be assigned to sign, if it is insufficient, several keys may be added.

Moreover, any one of nine Japanese lowercase of " 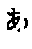 ", " 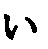 ", " 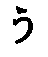 ", " 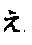 ", " 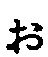 ", " 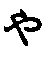 ", " 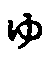 ", " 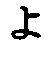 ", " 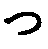 " can be inputted by single depressing the same key as mentioned above while the shift key 227-1 is being pushed by the right hand thumb.

And while the shift key 227-1 is being pushed remaining thirty-nine keys can be allocated comma, period and sign etc that are frequently used for Japanese language.

While the shift key 228-1 is being pushed by the right hand thumb, when the remaining nine fingers push the keys once, then it is possible to input any of the twenty-six alphabetical lower cases from alphabet letters of "a" to "z" and ten numeric characters of "1", "2", •••"9", "0".

The other remaining twelve keys can be allocated signs and functions required for inputting English text.

Then, while the right hand thumb pushes the key 229-1 when the remaining nine fingers push the keys as same as before alphabet keys, it is possible to input any of the twenty-six alphabetical capital letters from alphabet letters of "A" to "Z".

The joy key 215 is a key which have a task for moving a cursor to the upper, lower, left or right directions while waiting the input of Japanese characters. But, after inputting the Japanese characters when being pushed the lower part of the joy key, the characters can be converted into Kanji (Chinese character), and when being pushed once the upper part of the joy key, it can be converted into the full size Japanese "Katakana", when being pushed one more time it can be converted into the half size Japanese "Katakana".

If a button of the center part of the joy key 215 is pushed, converted characters can be fixed, performing a duty as a decision key.

This is completely the same as that of the duty of the conventional joy key.

Fig. 12 illustrates a table of input characters corresponding to the keys. By switching the shift keys and using the joy key, "Hiragana", "Katakana", "Kanji", full size numeric characters, half size numeric characters, sign, alphabetical capital letters and alphabetical lower cases can be inputted, thereby providing a lot of and a high rate letter input by the cell phone.

Six keys of 227-2, 227-3, 228-2, 228-3, 229-2 and 229-3 can be allocated function keys of "BS", ", ", "ₒ ", "RT", "SP", "DEL", or conversion key, decision key or other characters to increase the rate at which the text is inputted.

The following is the explanation for inputting English for a sense in the present invention. When an alphabet capital letter "C" is inputted, the key 225-2 on the left side may be pushed one time while the key 229-1 on the right side face is being pushed by the right hand thumb as shown in Fig. 4. And when an alphabet lower case "c" is inputted, the key 225-2 on the left side face may be pushed one time while the key 228-1 on the right side face is being pushed by the right hand thumb.

The present invention has a particularly superior characteristic in that it is not required to switch the keys on the right side face to be operated by the right hand thumb when the remaining nine fingers are used to push forty-eight keys, thereby allowing any one letter of forty-eight Japanese "Hiragana" letters to be inputted by a single depression.

The present invention also has a particularly superior characteristic in that while a shift key is being pushed by the right hand thumb, when any of the remaining nine fingers depress a key once, any one of Japanese lowercase, sign, numeric characters, alphabet capital letter or alphabet lower case can be directly inputted.

In this description, there are expressed about forty-eight keys. This number means that no problem is caused even if about three keys are added for the left hand little finger. Therefore, even if the number of keys is increased or decreased by a few, the number will be included in the scope of the present invention.

The present invention allows one key to have limited two roles "alphabet • numeric character" and Japanese "Hiragana", thereby allowing a user to learn easily the position of keys. Therefore, touch typing can be performed by practice of the same grade as that of a personal computer on a desk generally used.

In case of inputting Japanese language, when it is required to use the Roman character input method, the user changes from "Hiragana" mode into the Roman character mode by the mode key, and then if the key which is having the alphabet of twenty-six characters assigned is depressed, the alphabet will be automatically changed into the "Hiragana".

And the "Hiragana" characters can be converted into Kanji (Chinese character) or Japanese "Katakana" by the joy key, and then the converted characters can be fixed.

This is fundamentally the same as how to use the "Japanese Roman character input method" which is used for a conventional personal computer except for key arrangements.

The characteristic in that twenty-six alphabet letters can be inputted without switching the keys on the right side face to be operated by the right hand thumb has a advantage that what is necessary is just to memorise the position of twenty-six key characters when inputting by the Roman character input method.

Specifically, a Roman character input method for Japanese language does not use the seven alphabet letters of "C", "F", "J", "L", "Q", "V", and "X" and thus allows nineteen alphabet letters to be used for the input of "Kana characters" of Japanese language. As a result, the remaining twenty-nine letters can be allocated to such keys that are frequently used for Japanese language (e.g., keys for ",", "ₒ", "RET", "DEL", "Space", "BackSpace", or keys responsible for the collection of special characters). This allows all "Hiragana" to be continuously inputted without pushing the mode switch key and also allows the right hand thumb to always stay at the joy key so that the right hand thumb can be exclusively used for "Kanji (Chinese character)" conversion, thereby providing a super-high rate letter input.

In this way, the present invention can be applied to any language including English and Japanese and the other language.

The joy key 215 on the right side face has a main task of moving a cursor on the display 02 in the lateral and virtical directions. The joy key 215 also may be allocated for a task of conversion from "Hiragana" to "Kanji" and "Katakana" or other tasks when Japanese Kanji needs to be inputted.

By switching modes by the joy key 215, in a native language input mode, the key of 227-1 can be used as a shift key for a native language (e.g., "Hiragana" for Japanese language, "Kanji" for China, and "Hangul characters" for South Korea) and two keys of 228-1, 229-1 can be used as a shift key for alphabet • numeric character. This allows the input of English • numeric character by only the operation of the shift key without switching modes while a native language other than English is inputted.

The following is the description of the way of copying, cutting and pasting of e-mail sentence etc. which is already made in the display of the cell phone according to the present invention, and the description below shows the steps for perfoming pasting it into the another position after copying a part of e-mail sentence.

First, after shifting the cursor to the start point of the sentence to be copyed by joy key 215, user shifts the cursor to the end point of the sentence to be copyed by the joy key 215 while the key 235-1 is being pushed by the left hand little finger, then removes the left hand little finger from the key 235-1.

Next, shifting the cursor to the "pasting" position by joy key 215 and "pasting" is performed by depressing the decision key in the center position of the joy key 215. The works of twelve steps in total under the conventional cell phone becomes the works of four steps in the present invention.

When performing the "cutting" and "pasting" work, the function key 235-2 is used. If the function key 235-3 is used for the function menu (inserting of telephone number, mail adress, adress and person's name) which are not frequently used for Japanese language, it can be used for multiple purposes although input rate becomes slow.

The use of the present invention provides about five times faster letter input rate as compared to that obtained by a key layout using only one hand thumb for the letter input.

Naturally, the present letter input means also can be simply used as a cell phone by which a telephone number can be inputted with one hand. In this case, by switching modes, keys in the first and second columns of the keys 222, 223, 224, 225 and 226 are assigned the numeric characters 1, 2, .., 9, and 0.

Under a condition where both hands can be used, the cell phone is used as shown in Fig. 5. When a user must use only one hand (e.g., when a user hangs by the strap of a train), then the user can depress the key 227-3 for about three seconds period of time to switch to the one hand mode. When the user pushes the key 227-3 one more time, then the user can use both hand mode. The mode also may be switched by the joy key 215.

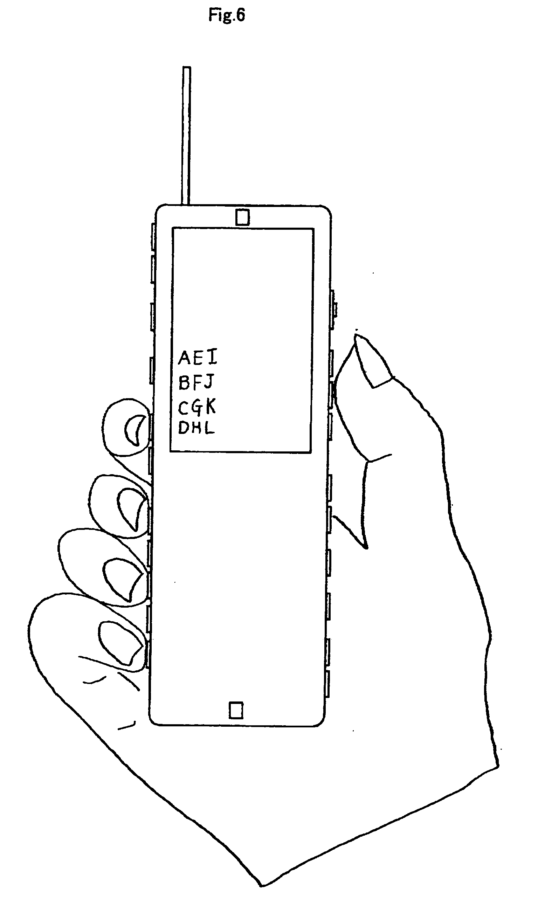

Fig. 6 illustrates the cell phone of Fig. 4 according to the present invention which is being used with the right handed one hand mode.

Fig. 6 schematically illustrates the letter input means being held by a right hand, wherein the five fingers of the right hand are always placed at the home positions of the letter input means.

The one hand mode herein means a mode where the twelve left side face keys in four rows and three columns 220, 222, 224 and 226, the joy keys 215, and the six keys on the right side face 227-1, 227-2, 228-1, 228-2, 229-1 and 229-2 are provided with the right of controlling the input of letters; and the remaining twenty-one keys in seven rows and three columns on the left side face 216, 217, 218, 219, 221, 223 and 225, and the twenty keys on the right side face 228-3, 229-3, 230, 231, 232, 233, 234 and function keys 235 are disabled.

In the one hand mode, the right hand thumb on the right side is used to obtain six key combinations by each of the keys and one combination by pushing no keys (total of seven combinations). The left side face has twelve keys, thereby establishing the calculation of 7 X 12 to allow a total of 84 characters to be inputted.

For inputting English which generally includes numeric characters, it is sufficient to provide 80 characters by key combinations.

It may think that twelve keys of the conventional front key are shifted to the position of the left side face. By using six shift keys of the right side face properly, a high rate letter input can be performed using the shift keys instead of the conventional mode selecter key.

The cell phone as shown in Fig.2 can be folded into two at a substantially center position in the longitudinal direction for providing a small shape which can be conveniently carried, allowing the cell phone of Fig. 4 to provide a hinge mechanism 14 at a substantially center position in the longitudinal direction.

In Fig. 4, the cell phone always has, on the front surface near the key of the main body, printed letters associated with the keys of the cell phone so that inputted letters corresponding to the key are guided. Such a printed guide is convenient when a user inputs letter to a cell phone or a small PDA device according to the present invention.

Figs. 5 and 6 show the cell phone of Fig. 4 having on the display thereof letters inputted corresponding to the keys selected by the thumb in order to show the letters corresponding to the keys selected by the mode keys and the thumb. When a user pushes the key 216-1 on the top of the left side face while the display is as shown in Fig. 5, for example, then a Japanese letter of " 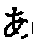 " on the left top of the display can be inputted. When the thumb selects another key, then the details of a letter indicated on the display are changed accordingly. The exemplary cell phone shown in Fig. 6 is in the one hand mode and thus has twelve keys on the left side face, thereby allowing the display to indicate twelve letters. Any of the above key layouts allows a user to utilize efficiently the guidance of input of keys in a small display of the cell phone.

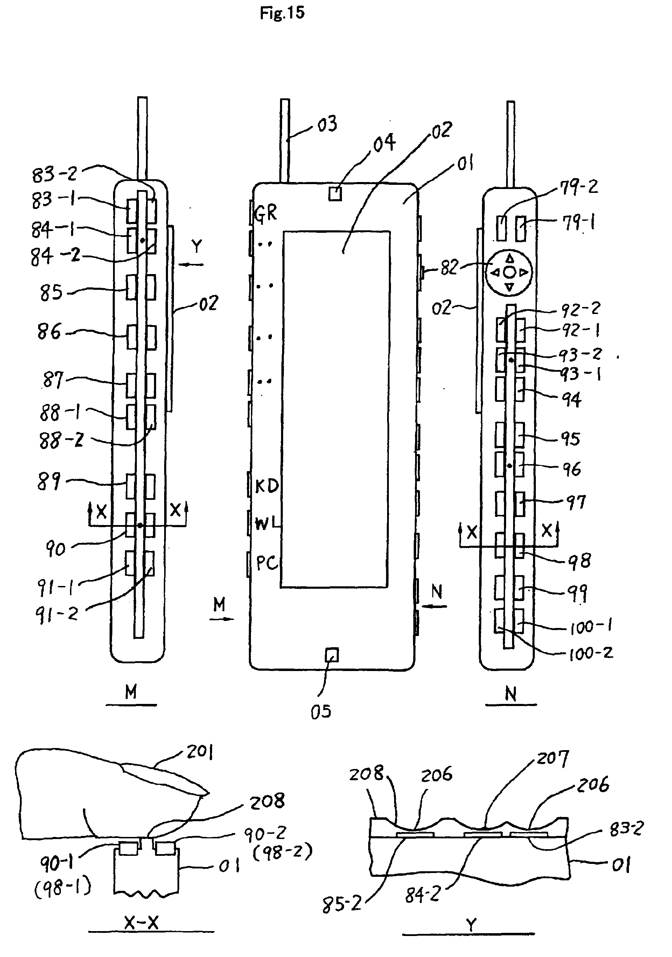

Fig. 15 illustrates one example of super-high rate letter input device for the cell phone according to the present invention which can be held by both hands so that the ten fingers of both hands can be used for inputting English or the other languages.

The cell phone includes: a main body 01; a display 02; an antenna 03; a loudspeaker 04; a microphone 05; left side face keys consists of such as 83-1, 83-2 in one row and two columns; total of eighteen keys in nine rows and two columns 84, 85, 86, 87, 88, 89, 90 and 91, and on right side face, a joy key 82; total of twenty keys in ten rows and two columns 79, 92, 93, 94, 95, 96, 97, 98, 99 and 100; fingers 201; concavities 206 provided on the frame 208 to guide the fingers to the home positions; projections 207 provided on the frame which a user tactilely felt the finger's position by fingers; and a frame 208 for fingers rest while no key is being depressed.

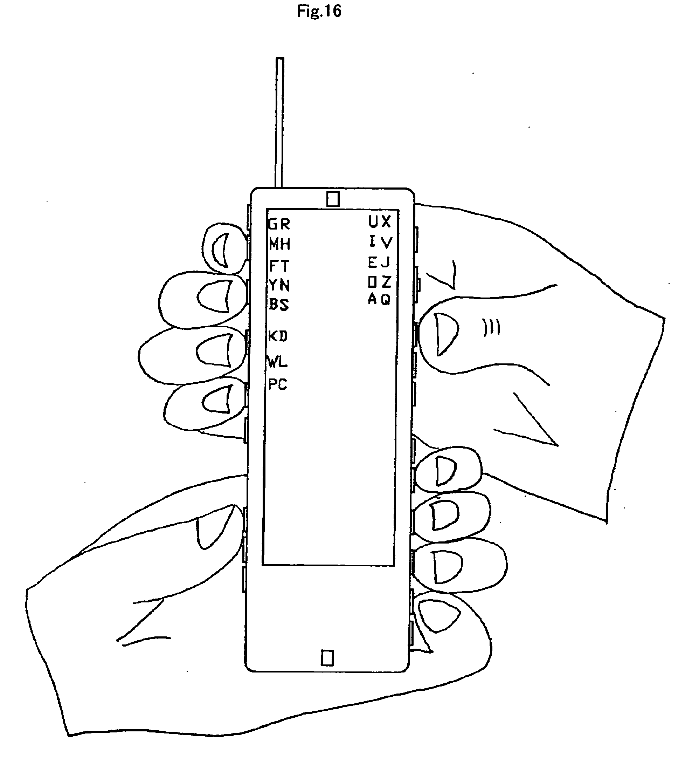

Fig. 16 illustrates a schematic view of the cell phone of Fig. 15 which is being inputted with letters by the ten fingers of both hands.

Fig. 16 also schematically illustrates the cell phone being held by both hands, wherein ten fingers of both hands are positioned at home positions of the letter input means.

As shown in Fig. 16, the right hand thumb operates the joy key 82, six keys in three rows and two columns 92, 93 and 94 on the right side face; the right hand forefinger operates four keys in two rows and two columns 83 and 84 on the left side face; the right hand middle finger operates two keys of 85; the right hand fourth finger operates two keys of 86; the right hand little finger operates four keys in two rows and two columns 87 and 88 on the left side face.

Similarly, the left hand thumb operates six keys in three rows and two columns 89, 90 and 91 on the left side face; the left hand forefinger operates four keys in two rows and two columns 95 and 96 on the right side face; the left hand middle finger operates two keys of 97; the left hand fourth finger operates two keys of 98; the left hand little finger operates four keys in two rows and two columns 99 and 100 on the right side face.

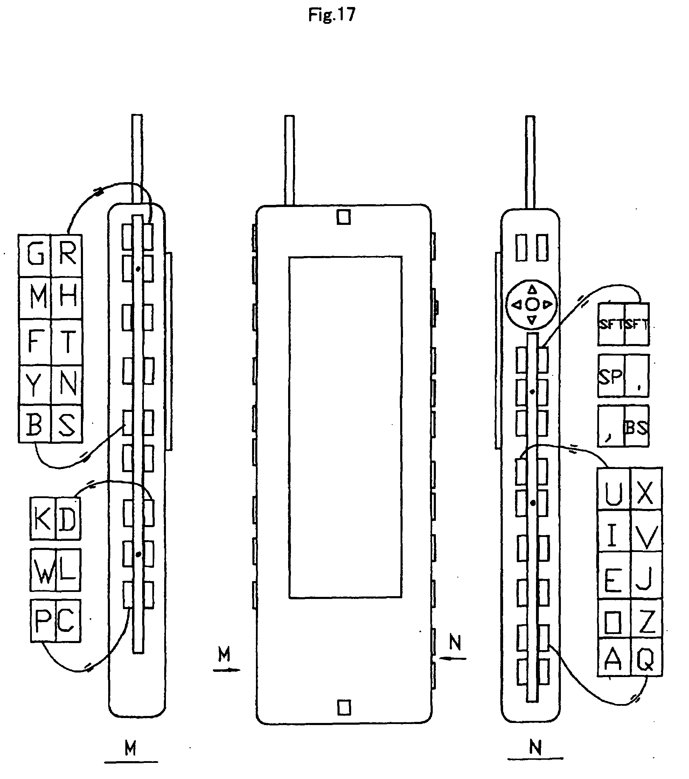

Fig. 17 illustrates the cell phone which is allocated twenty-six alphabet and ten numerical characters to the keys of the cell phone of Fig. 15.

When an alphabet lower case "c" is inputted, the key 91-2 on the left side face may be pushed one time by the left hand thumb while no keys are pushed with the other finger. And when a capital letter "C" is inputted, as shown in Fig. 16, the key 91-2 on the left side may be pushed one time by the left hand thumb while the shift key 88-2 on the left side face is being pushed by the right hand little finger.

Similarly, when an alphabet lower case "r" is inputted, the key 83-2 on the left side face may be pushed one time by the right hand forefinger while no keys are pushed with the other finger. And when a capital letter "R" is inputted, the key 83-2 on the left side may be pushed one time by the right hand forefinger while the shift key 100-2 on the right side face is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while depressing the shift keys 88-2 or 100-2, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted when any of the keys 83-2, 84-2, 85-2, 86-2, 87-2, 95-2, 96-2, 97-2, 98-2 and 99-2 is pushed while the shift key 88-1 or 100-1 is being depressed.

Shift keys 88 or 100 may be also assigned to the forefinger, middle finger or fourthfinger instead of the little finger by shifting the position of the keys.

It is convenient to use for operating the shift key the little finger of the other side hand different from the hand for inputting the characters even when inputting alphabetical capital letter as well as inputting the number.

The other remaining sixteen keys which are not assigned numeric characters can be allocated signs.

When one key for one character is specified as a representative key for the collection of special signs, then a specific one character is inputted by the key and then a number of special signs can be subsequently selected by repeatedly moving the joy key 82, and the selected character can be fixed by depressing a button of the center part of the joy key 82. The representative key can be increased to sixteen keys.

Moreover, since six keys of 92, 93 and 94 on the right side face are not allocated any alphabet, the function keys of "DEL", "RT", or "Space", ".", ",", "?" that are frequently used can be allocated to the keys.

The present invention has a particularly superior characteristic in that it is not required to switch the shift key when the ten fingers are used to push twenty-six keys, thereby allowing any one letter of at least twenty-six alphabet letters to be inputted.

In this way, the present invention can be applied to make normal English including numeric characters and signs, by using four shift keys properly.

Thus, the present invention allows one key to have limited two roles (e.g., alphabet and numeric character • sign), thereby allowing a user to perform touch typing with an extreme ease.

In case of inputting Japanese language, when it is required to use the Roman character input method, the user changes the mode into the Roman character mode by the joy key 82, and then if the key which is having the alphabet of twenty-six characters assigned is depressed, the alphabet will be automatically changed into the Japanese "Hiragana".

And the "Hiragana" characters can be converted into Kanji (Chinese character) or Japanese "Katakana" by the joy key 82, and then the converted characters can be fixed.

This is fundamentally the same as how to use the "Japanese Roman character input method" which is used for a conventional personal computer except for key arrangements.

The characteristic in that twenty-six alphabet letters can be inputted without switching the shift keys has a advantage that what is necessary is just to memorise the position of twenty-six key characters when inputting Japanese language by the Roman character input method.

Specifically, a Roman character input method for Japanese language does not use the seven alphabet letters of "C", "F", "J", "L", "Q", "V", and "X" and thus allows nineteen alphabet letters to be used for the input of "Kana characters" of Japanese language. As a result, the remaining seven letters can be allocated to such keys that are frequently used for Japanese language (e.g., keys responsible for " 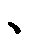 ", "_{°}", "RET", "DEL", "Space", and "BackSpace", or keys responsible for the collection of special characters). This allows all "Hiragana" to be continuously inputted without pushing the mode switch key and also allows the right hand thumb to always stay at the joy key so that the right hand thumb can be exclusively used for "Kanji (Chinese character)" conversion, thereby providing a super-high rate letter input.

The joy key 82 is a key which have a task for moving a cursor in the upper, lower, left or right directions while waiting the input of Japanese characters. But, after inputting the Japanese characters when being pushed the lower part of the joy key, the characters can be converted into Kanji (Chinese character), and when being pushed once the upper part of the joy key, it can be converted into the full size Japanese "Katakana", when being pushed the upper part one more time it can be converted into the half size Japanese "Katakana".

If a button of the center part of the joy key 82 is pushed, converted characters can be fixed, performing a duty as a decision key.

This is completely the same as that of the duty of the conventional joy key.

In this way, the present invention can be applied to any language including English, Japanese, Chinese and Hangul so long as the language allows the conversion with about twenty-six alphabet letters or other about twenty-six characters.

Cross-sections X-X shown in Fig. 15 illustrates the letter input means designed to provide an accurate letter input by neighboring keys without input errors.

The cross-section X-X includes a finger 201, a frame 208, keys 90-1 and 90-2, and a main body 01.

The cross-section X-X includes the frame 208 which is provided between the neighboring keys 90-1 and 90-2 and which is higher than these keys. The frame 208 is a frame for putting finger which accepts a reaction force caused by the pushing force to a key on the opposite side face by a finger. The reason why the frame 208 is higher than the keys 90-1 and 90-2 is that, allowing the finger 201 to be provided on the frame 208 prevents the keys 90-1 and 90-2 from being erroneously pushed even when the reaction force to the key on the opposite side face is accepted by the finger 201 on the frame 208. While being positioned on the frame 208, the finger 201 can push any of the neighboring keys 90-1 and 90-2 without departing from the frame 208.

The frame shown in Fig. 15 also has, on a specific position thereon, a projection shown by a solid circle 207 which can be tactilely felt by fingers so that a user can know where the home position is for the input by touch typing.

There are also concavities 206 as shown in the cross section Y of Fig. 15 by which a user can know the home position for the fingers for the input by touch typing. The concavities 206 are provided at home positions for at least ten fingers on the surface of the frame 208 to accept the fingers. By the concavities 206, a user can tactilely feel the concavities 206 by the ten fingers to guide the ten fingers to the home positions.

In Fig. 15, the cell phone always has, on the front surface of the main body, printed letters associated with the keys of the cell phone so that input letters corresponding to the key are guided. Such a printed guide is convenient when a user inputs letter to a cell phone or a small PDA device according to the present invention.

Fig. 16 shows the cell phone of Fig. 15 having on the display thereof input letters corresponding to the keys selected by the little fingers in order to show the letters corresponding to the keys selected by the little fingers. When a user pushes the key 83-1 on the top of the left side face while the display is as shown in Fig. 16, for example, then an alphabet letter of "G" on the left top of the display can be inputted. When the little finger selects another key, then the details of a letter indicated on the display are changed accordingly.

When a user must use only one hand, then the user can switch to one hand mode with the joy key 82 of Fig.15, making only the joy key 82 and keys 79, 92, 93, 94, 87, 88, 89, 90 and 91 effective, and the remaining keys disable.

In the one hand mode, six keys of 92, 93 and 94 are changed into shift keys or mode selecter keys, ten keys of 87, 88, 89, 90 and 91 are changed into character keys, and character input can be carried out.

Since all five fingers of one hand are used, the character input can be carried out more quickly than the conventional case of only thumb. In case of the one hand mode, the cell phone is held by one hand as shown in Fig.6.

In the cell phone of other examples, one hand mode also can be used under the limited functions, making the keys which can be operated by one hand effective and other remaining key disable.

The following is the description of invented communication equipment provided on the automobile.

Time for receiving and transmitting the information from/to the exterior can be utilized effectively at the time zone under the automatic steering of the automobile in the future, or at the parking time of the automobile.

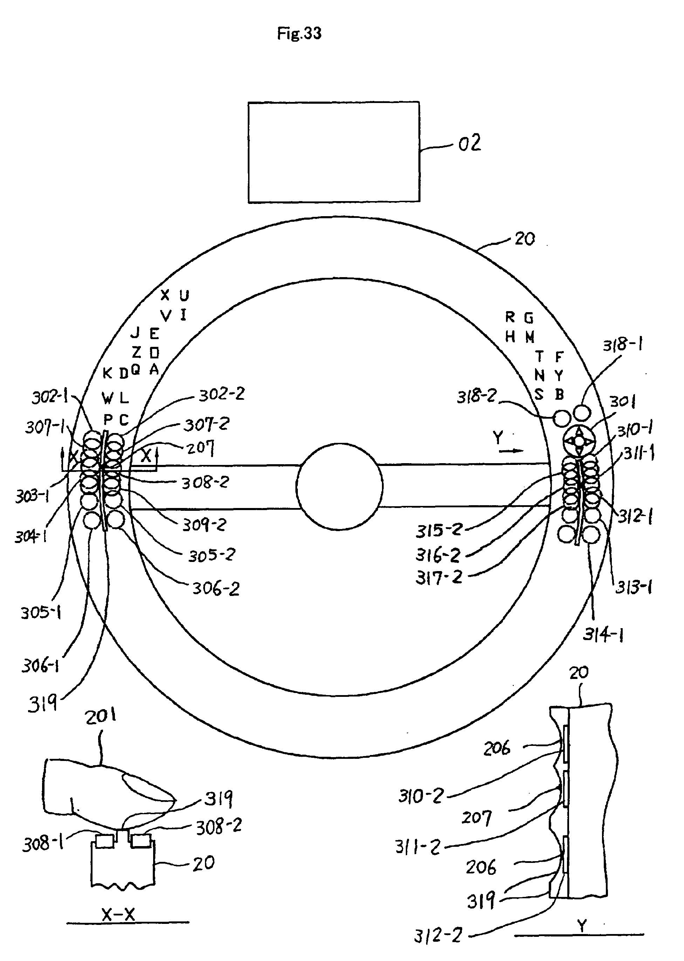

Fig.33 illustrates one example of the input device of the communication equipment provided on the steering handle of the automobile according to the present invention which can be gripped by both hands so that the ten fingers of both hands can be used for letter input of English and the other languages, for communicating while driving.

Fig.33 also shows the state of the handle angle at the time of going straight while driving the automobile.

The equipment includes: a handle 20; a display 02; keys in five rows and two columns 302, 303, 304, 305 and 306 in the manner of one row and two columns key 302-1 and 302-2 on the surface of left side of the handle gripped by left hand forefinger, middle finger, fourth finger and little finger; keys in three rows and two columns 307, 308 and 309 on the surface of the handle gripped by left hand thumb, in total of sixteen keys in eight rows and two columns, and keys in five rows and two columns 310, 311, 312, 313 and 314 on the surface of right side of the handle gripped by right hand forefinger, middle finger, fourth finger and little finger; a joy key 301 and keys in four rows and two columns 318, 315, 316 and 317 on the surface of the handle gripped by right hand thumb, in total of eighteen keys in nine rows and two columns on the right side; a finger 201; concavities 206 provided on the frame 319 to know the home position for the fingers; a projection 207 provided on the frame which can be tactilely felt by fingers so that a user can know where the user's finger position is; and a frame 319 allowing fingers to be positioned while no key is depressing.

Since the handle is inserted between the thumb and the other four fingers and gripped, the position of the keys which the thumb takes charge of and the position of the keys which the other four fingers take charge of are substantially opposite side face mutually in the holding portion of the handle.

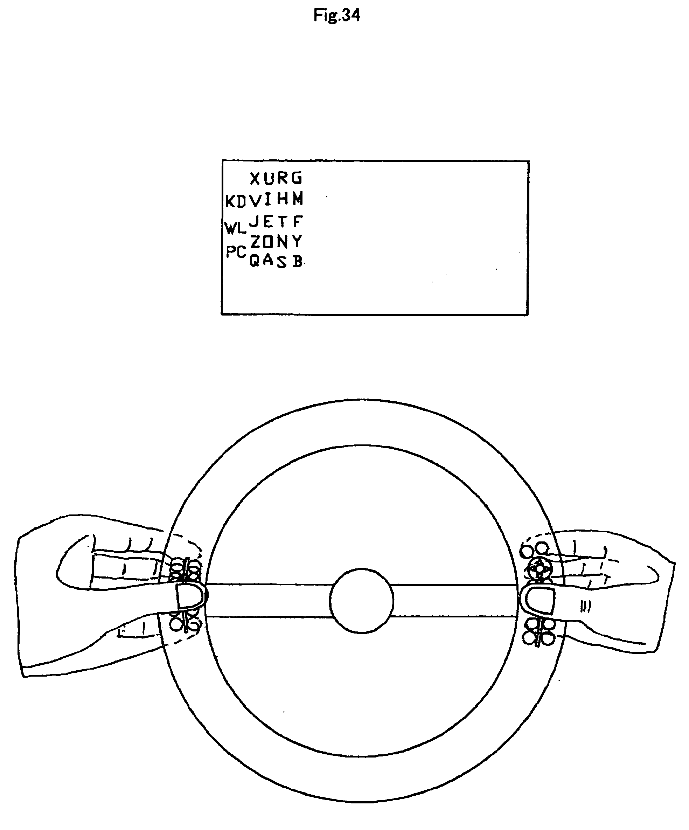

Fig. 34 illustrates a schematic view of the communication equipment of Fig. 33 which is being inputted with letters by the ten fingers of both hands.

Fig. 34 also schematically illustrates the communication equipment being held by both hands, wherein ten fingers of both hands are positioned at home positions of the letter input means.

The user inputs the keys by gripping and inserting the handle between the thumb and the other four fingers of both hands while watching the display provided on the position near the driver's seat. Two keys 318 are a power key and a call key.

As shown in Fig. 34, the right hand thumb operates the joy key 301, eight keys in four rows and two columns 318, 315, 316 and 317 on the right side of the handle 20; the right hand forefinger operates four keys in two rows and two columns 310 and 311 on the right side of the handle; the right hand middle finger operates two keys of 312; the right hand fourth finger operates two keys of 313; the right hand little finger operates two keys of 314 respectively.

Similarly, the left hand thumb operates six keys in three rows and two columns 307, 308 and 309 on the left side of the handle 20; the left hand forefinger operates four keys in two rows and two columns 302 and 303 on the left side of the handle; the left hand middle finger operates two keys of 304; the left hand fourth finger operates two keys of 305; the left hand little finger operates two keys of 306 respectively.

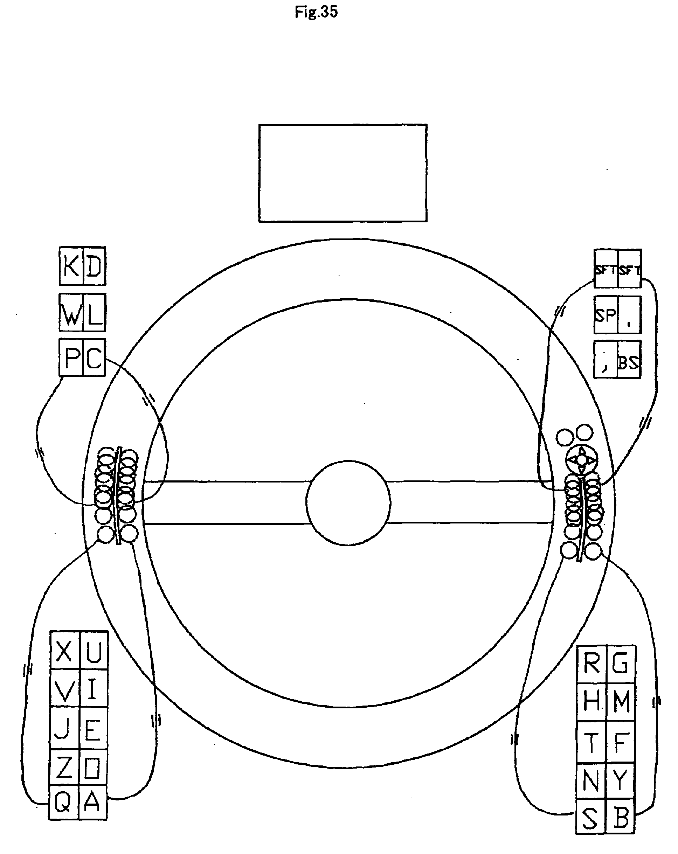

Fig. 35 illustrates the communication equipment which is allocated twenty-six alphabet and ten numerical characters to the keys of the communication equipment of Fig. 33.

When an alphabet lower case "c" is inputted, the key 309-2 on the left side may be pushed one time by the left hand thumb while no keys are pushed with the other finger. And when a capital letter "C" is inputted, as shown in Fig. 33, the key 309-2 on the left side may be pushed one time by the left hand thumb while the shift key 315-2 on the right side is being pushed by the right hand thumb.

Similarly, when an alphabet lower case "r" is inputted, the key 310-2 on the right side may be pushed one time by the right hand forefinger while no keys are pushed with the other finger. And when a capital letter "R" is inputted, the key 310-2 on the right side may be pushed one time by the right hand forefinger while the shift key 315-2 on the right side is being pushed by the right hand thumb.

When the ten fingers depress any of twenty-six keys while the other finger does not push any key, then it is possible to input any of the twenty-six alphabetical lower cases from alphabet letters of "a" to "z". Then, when the fingers depress the same key while the shift keys 315-2 on the right side is being pushed by the right hand thumb, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted when any of the keys 302-2, 303-2, 304-2, 305-2, 306-2, 310-2, 311-2, 312-2, 313-2 and 314-2 is pushed while the shift key 315-1 is being depressed,

The other remaining sixteen keys which are not assigned numeric characters can be allocated signs.

Moreover, since four keys of 316 and 317 on the right side are not allocated any alphabet, the function keys of "DEL" or "Space", ".", "," that are frequently used can be allocated to the keys.

The present invention has a particularly superior characteristic in that it is not required to switch the shift key when the ten fingers are used to push twenty-six keys, thereby allowing any one letter of at least twenty-six alphabet letters to be inputted.

In this way, the present invention can be applied to make normal English including numeric characters and signs, by using two shift keys properly.

Thus, the present invention allows one key to have limited two roles (e.g., alphabet and numeric character • sign), thereby allowing a user to perform touch typing with an extreme ease.

In case of inputting Japanese language, when it is required to use the Japanese Roman character input method, the user changes the mode into the Roman character input mode by the joy key 301, and then if the key which is having the alphabet of twenty-six characters assigned is depressed, the alphabet will be automatically changed into the "Hiragana".

And the "Hiragana" characters can be converted into Kanji (Chinese character) or Japanese "Katakana" by the joy key 301, and then the converted characters can be fixed.

This is fundamentally the same as how to use the "Japanese Roman character input method" which is used for a conventional personal computer except for key arrangements.

Use method of the Roman character input method in Japanese described above is the same as those of Chinese and Hangul of Asia and thus will not be further described.

Cross-sections X-X and Looking Y shown in Fig. 33 illustrates the letter input means designed to provide an accurate letter input by neighboring two columns keys without input errors.

The cross-section X-X in Fig. 33 includes a finger 201, a frame 319, keys 308-1 and 308-2, and a handle 20.

The cross-section X-X includes the frame 319 which is provided between the neighboring keys 308-1 and 308-2 and which is higher than the height of these keys. The frame 319 is a frame for putting finger which accepts a reaction force caused by the pushing force to a key on the opposite side face by a finger. The reason why the frame 319 is higher than the height of the keys 308-1 and 308-2 is that, allowing the finger 201 to be provided on the frame 319 prevents the keys 308-1 and 308-2 from being erroneously pushed even when the reaction force to the key on the opposite side face is accepted by the finger 201 on the frame 319. While being positioned on the frame 319, the finger 201 can push any of the neighboring keys 308-1 and 308-2 without departing from the frame 319.

The frame shown in Fig. 33 also has, on a specific position thereon, a projection shown by a solid circle 207 which can be tactilely felt by fingers so that a user can know where the home position is for the input by touch typing.

There are also concavities 206 as shown in the looking Y of Fig. 33 by which a user can know the home position for the fingers for the input by touch typing. The concavities 206 are provided at home positions for at least ten fingers on the surface of the frame 319 to accept the fingers. By the concavities 206, a user can tactilely feel the concavities 206 by the ten fingers to guide the ten fingers to the home positions.

In Fig. 33, the communication equipment always has, on the front surface of the main body, printed letters associated with the keys of the communication equipment so that input letters corresponding to the key are guided. Such a printed guide is convenient when a user inputs letter to the communication equipment according to the present invention.

Fig. 34 shows the communication equipment of Fig. 33 having on the display thereof input letters corresponding to the keys selected by the thumb in order to show the letters corresponding to the keys selected by the thumb. When a user pushes the key 310-1 on the top of the right rear side while the display is as shown in Fig. 34, for example, then an alphabet letter of "G" on the right top of the display can be inputted. When the thumb selects another key, then the details of a letter indicated on the display are changed accordingly.

In this invention, there is no necessity of embedding the letter input means (a joy stick and keys) on the handle body directly and manufacturing the handle.

A letter input means can be manufactured independently apart from the handle body, and the letter input means can be also attached by covering the handle of the automobile which have not equipped this equipment.

Therefore, when the letter input means breaks down, it can be exchanged easily by removing only the letter input means from the handle.

### BRIEF DESCRIPTION OF THE DRAWINGS

Fig. 1 illustrates a front view of a conventional letter input device for a cell phone.
Fig. 2 illustrates the front view of a letter input device for a conventional folding type cell phone.
Fig. 3 illustrates a view of appearance of the conventional cell phone of Fig. 1 being inputted with letters.
Fig. 4 illustrates an exemplary cell phone according to the present invention which is held by both hands so that the fingers of both hands can be used for letter input.
Fig. 5 illustrates a view of appearance of the cell phone of Fig. 4 being inputted with letters.
Fig. 6 illustrates the cell phone of Fig. 4 being used with the one hand mode.
Fig. 7 illustrates one example of the super-high rate letter input device for a cell phone according to the present invention which can be held by both hands so that the ten fingers of both hands can be used for letter input, which letter input device causes less fatigue of the hands.
Fig. 8 illustrates a view of appearance of the cell phone of Fig. 7 being inputted with letters.
Fig. 9 illustrates the cell phone of Fig. 7 being used with the one hand mode.
Fig. 10 illustrates another example of a super-high rate letter input device for a notebook-type cell phone according to the present invention which can be held by both hands so that ten fingers of both hands can be used for letter input.
Fig. 11 illustrates a schematic view of the cell phone of Fig. 10 which is being inputted with letters by the ten fingers of both hands.
Fig. 12 illustrates the allocation according to the concept of the present invention of the letters to the keys of the cell phone of Fig. 4.
Fig. 13 illustrates the allocation according to the concept of the present invention of the letters to the keys of the cell phone of Fig. 7.
Fig. 14 illustrates the allocation according to the concept of the present invention of the letters to the keys of the cell phone of Fig. 10.
Fig. 15 illustrates one example of a super-high rate letter input device for a cell phone according to the present invention which can be held by both hands so that the ten fingers of both hands can be used for letter input.
Fig. 16 illustrates a view of appearance of the cell phone of Fig. 15 being inputted with letters.
Fig. 17 illustrates the allocation according to the concept of the present invention of the letters to the keys of the cell phone of Fig. 15.
Fig. 18 illustrates one example of the super-high rate letter input device for a cell phone according to the present invention which can be held by both hands so that the ten fingers of both hands can be used for letter input, which letter input device causes less fatigue of the hands.
Fig. 19 illustrates a view of appearance of the cell phone of Fig. 18 being inputted with letters.
Fig. 20 illustrates the allocation according to the concept of the present invention of the letters to the keys of the cell phone of Fig. 18.
Fig. 21 illustrates one example of a super-high rate letter input device for a cell phone according to the present invention which can be held by both hands so that the ten fingers of both hands can be used for letter input.
Fig. 22 illustrates a view of appearance of the cell phone of Fig. 21 being inputted with letters.
Fig. 23 illustrates the allocation according to the concept of the present invention of the letters to the keys of the cell phone of Fig. 21.
Fig. 24 illustrates one example of a super-high rate letter input device for a cell phone according to the present invention which can be held by both hands so that the ten fingers of both hands can be used for letter input.
Fig. 25 illustrates a view of appearance of the cell phone of Fig. 24 being inputted with letters.
Fig. 26 illustrates the allocation according to the concept of the present invention of the letters to the keys of the cell phone of Fig. 24.
Fig. 27 illustrates one example of the super-high rate letter input device for a cell phone according to the present invention which can be held by both hands so that the ten fingers of both hands can be used for letter input, which letter input device causes less fatigue of the hands.
Fig. 28 illustrates a view of appearance of the cell phone of Fig. 27 being inputted with letters.
Fig. 29 illustrates the allocation according to the concept of the present invention of the letters to the keys of the cell phone of Fig. 27.
Fig. 30 illustrates one example of a super-high rate letter input device for a cell phone according to the present invention which can be held by both hands so that the ten fingers of both hands can be used for letter input.
Fig. 31 illustrates a view of appearance of the cell phone of Fig. 30 being inputted with letters.
Fig. 32 illustrates the allocation according to the concept of the present invention of the letters to the keys of the cell phone of Fig. 30.
Fig. 33 illustrates one example of a super-high rate letter input device of the communication equipment provided on the automobile according to the present invention which can be gripped by both hands so that the ten fingers of both hands can be used for letter input.
Fig. 34 illustrates a view of appearance of the cell phone of Fig. 33 being inputted with letters.
Fig. 35 illustrates the allocation according to the concept of the present invention of the letters to the keys of the cell phone of Fig. 33.
Fig. 36 illustrates one example of a super-high rate letter input device for a cell phone according to the present invention which can be held by both hands so that the ten fingers of both hands can be used for letter input.
Fig. 37 illustrates a view of appearance of the cell phone of Fig. 36 being inputted with letters.
Fig. 38 illustrates the allocation according to the concept of the present invention of the letters to the keys of the cell phone of Fig. 36.
Fig. 39 illustrates one example of the super-high rate letter input device for a cell phone according to the present invention which can be held by both hands so that the ten fingers of both hands can be used for letter input, which letter input device causes less fatigue of the hands.
Fig. 40 illustrates a view of appearance of the cell phone of Fig. 39 being inputted with letters.
Fig. 41 illustrates the allocation according to the concept of the present invention of the letters to the keys of the cell phone of Fig. 39.

### BEST MODE FOR CARRYING OUT THE INVENTION

### Embodiment 1

Fig. 4 illustrates one example of a super-high rate letter input device for a cell phone according to the present invention which can be held by both hands so that the ten fingers of both hands can be used for inputting Japanese and English languages.

The cell phone includes: a main body 01; a display 02; an antenna 03; a loudspeaker 04; a microphone 05; left side face keys consists of such as 216-1, 216-2, 216-3 in one row and three columns; total of thirty-three keys in eleven rows and three columns 217, 218, 219, 220, 221, 222, 223, 224, 225 and 226, and on right side face, a joy key 215; total of twenty-four keys in eight rows and three columns 227, 228, 229, 230, 231, 232, 233 and 234, and three function keys 235; fingers 201; concavities 206 provided on the frame to guide the fingers to the home positions; projections 207 provided on the frame which a user tactilely felt the finger's position by fingers; and a frame 208 for fingers rest while no key is being depressed.

Fig. 5 illustrates a schematic view of the cell phone of Fig. 4 which is being inputted with letters by the ten fingers of both hands.

Fig. 5 also schematically illustrates the cell phone being held by both hands, wherein ten fingers of both hands are positioned at home positions of the letter input means.

As shown in Fig. 5, the right hand thumb operates the joy key 215 and nine keys in three rows and three columns 227, 228 and 229 on the right side face; the right hand forefinger operates six keys in two rows and three columns 216 and 217 on the left side face; the right hand middle finger operates three keys of 218; the right hand fourth finger operates three keys of 219; the right hand little finger operates six keys in two rows and three columns 220 and 221 on the left side face respectively.

The left hand thumb operates fifteen keys in five rows and three columns 222, 223, 224, 225 and 226 on the left side face; the left hand forefinger operates six keys in two rows and three columns 230 and 231 on the right side face; the left hand middle finger operates three keys of 232; the left hand fourth finger operates three keys of 233; the left hand little finger operates three keys of 234 and three function keys 235 on the right side face respectively.

Fig. 12 illustrates the cell phone which is allocated forty-eight Japanese "Hiragana", alphabet and ten numerical characters to the keys of the cell phone of Fig. 4.

While no key is being depressed by right hand thumb, the remaining nine fingers can depress forty-eight keys, thereby allowing any one of forty-eight characters "Hiragana" of " 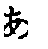 ", " 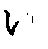 ", " 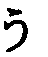 ", " 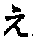 ", " 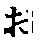 ", " 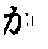 ", • • •, " 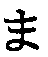 ", " 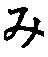 ", " 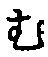 ", " 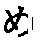 ", " 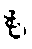 ", " 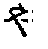 ", " 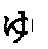 ", " 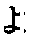 ", " 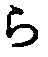 ", " 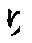 ", " 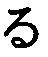 ", " 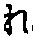 ", " 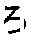 ", " 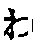 ", " 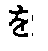 ", " 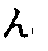 ", a voiced sound " 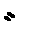 " and a voiceless sound "° " to be inputted by single depressing operation.

Since "Hiragana" key arrangement can not be visible directly from the front side, it is easy to learn the position of the characters for the user by allowing the order of the " 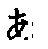 ", " 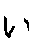 ", " 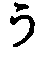 ", " 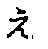 ", " 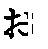 " to be provided in one column. Now, three keys of " 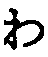 ", " 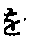 ", " 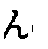 " are not concerned with other "Hiragana", therefore even if shifting these three keys to the operable position by left hand thumb does not cause any inconvenience to the users. Or the same function can be performed even if shifting it to the position operable by left hand little finger.

Above forty-eight characters may be changed by forty-eight characters of other language, and number of characters need not be forty-eight characters exactly. For example, in the case of language sufficient by about thirty-six characters, remaining twelve characters may be assigned to sign, if it is insufficient, several keys may be added.

Moreover, any one of nine Japanese lowercase of " 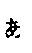 ", " 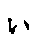 ", " 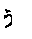 ", " 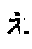 ", " 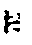 ", " 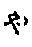 ", " 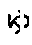 ", " 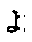 ", " 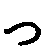 " can be inputted by single depressing the same key as mentioned above while the shift key 227-1 is being pushed by the right hand thumb.

And while the shift key 227-1 is being pushed remaining thirty-nine keys can be allocated comma, period and sign etc that are frequently used for Japanese language.

While the shift key 228-1 is being pushed by the right hand thumb, when the remaining nine fingers push the keys once, then it is possible to input any of the twenty-six alphabetical lower cases from alphabet letters of "a" to "z" and ten numeric characters of "1", "2", • • • "9", "0".

The other remaining twelve keys can be allocated signs and functions required for inputting English text.

Then, while the right hand thumb pushes the key 229-1 when the remaining nine fingers push the keys as same as before alphabet keys, it is possible to input any of the twenty-six alphabetical capital letters from alphabet letters of "A" to "Z".

The joy key 215 is a key which have a task for moving a cursor to the upper, lower, left or right directions while waiting the input of Japanese characters. But, after inputting the Japanese characters when being pushed the lower part of the joy key, the characters can be converted into Kanji (Chinese character), and when being pushed once the upper part of the joy key, it can be converted into the full size Japanese "Katakana", when being pushed one more time it can be converted into the half size Japanese "Katakana".

If a button of the center part of the joy key 215 is pushed, converted characters can be fixed, performing a duty as a decision key.

This is completely the same as that of the duty of the conventional joy key.

Fig. 12 illustrates a table of input characters corresponding to the keys. By switching the shift keys and using the joy key, "Hiragana", "Katakana", "Kanji", full size numeric characters, half size numeric characters, sign, alphabetical capital letters and alphabetical lower cases can be inputted, thereby providing a lot of and a high rate letter input by the cell phone.

Six keys of 227-2, 227-3, 228-2, 228-3, 229-2 and 229-3 can be allocated function keys of "BS", ", ", "° ", "RT", "SP", "DEL", or conversion key, decision key or other characters to increase the rate at which the text is inputted.

The following is the explanation for inputting English for a sense in the present invention. When an alphabet capital letter "C" is inputted, the key 225-2 on the left side may be pushed one time while the key 229-1 on the right side face is being pushed by the right hand thumb as shown in Fig. 4. And when an alphabet lower case "c" is inputted, the key 225-2 on the left side face may be pushed one time while the key 228-1 on the right side face is being pushed by the right hand thumb.

The present invention has a particularly superior characteristic in that it is not required to switch the keys on the right side face to be operated by the right hand thumb when the remaining nine fingers are used to push forty-eight keys, thereby allowing any one letter of forty-eight Japanese "Hiragana" letters to be inputted by a single depression.

The present invention also has a particularly superior characteristic in that while a shift key is being pushed by the right hand thumb, when any of the remaining nine fingers depress a key once, any one of Japanese lowercase, sign, numeric characters, alphabet capital letter or alphabet lower case can be directly inputted.

In this description, there are expressed about forty-eight keys. This number means that no problem is caused even if about three keys are added for the left hand little finger. Therefore, even if the number of keys is increased or decreased by a few, the number will be included in the scope of the present invention.

The present invention allows one key to have limited two roles "alphabet • numeric character" and Japanese "Hiragana", thereby allowing a user to learn easily the position of keys. Therefore, touch typing can be performed by practice of the same grade as that of a personal computer on a desk generally used.

In case of inputting Japanese language, when it is required to use the Japanese Roman character input method, the user changes from "Hiragana" mode into the Roman character mode by the mode key, and then if the key which is having the alphabet of twenty-six characters assigned is depressed, the alphabet will be automatically changed into the "Hiragana".

And the "Hiragana" characters can be converted into Kanji (Chinese character) or Japanese "Katakana" by the joy key, and then the converted characters can be fixed.

This is fundamentally the same as how to use the "Japanese Roman character input method" which is used for a conventional personal computer except for key arrangements.

The characteristic in that twenty-six alphabet letters can be inputted without switching the keys on the right side face to be operated by the right hand thumb has a advantage that what is necessary is just to memorise the position of twenty-six key characters when inputting by the Japanese Roman character input method.

Specifically, a Roman character input method for Japanese language does not use the seven alphabet letters of "C", "F", "J", "L", "Q", "V" and "X" and thus allows nineteen alphabet letters to be used for the input of "Kana characters" of Japanese language. As a result, the remaining twenty-nine keys can be allocated to such keys that are frequently used for Japanese language (e.g., keys for " 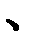 ,", "_{°}", "RET", "DEL", "Space", "BackSpace", or keys responsible for the collection of special characters). This allows all "Hiragana" to be continuously inputted without pushing the mode switch key and also allows the right hand thumb to always stay at the joy key so that the right hand thumb can be exclusively used for "Kanji (Chinese character)" conversion, thereby providing a super-high rate letter input.

In this way, the present invention can be applied to any language including English and Japanese and the other language.

The joy key 215 on the right side face has a main task of moving a cursor on the display 02 in the lateral and virtical directions. The joy key 215 also may be allocated for a task of conversion from "Hiragana" to "Kanji" and "Katakana" or other tasks when Japanese Kanji needs to be inputted.

By switching modes by the joy key 215, a native language input mode, the key of 227-1 can be used as a shift key for a native language (e.g., "Hiragana" for Japanese language, "Kanji" for China, and "Hangul characters" for South Korea) and two keys of 228-1, 229-1 can be used as a shift key for alphabet • numeric character. This allows the input of English • numeric character by only the operation of the shift key without switching modes while a native language other than English is inputted.

The following is the description of the way of copying, cutting and pasting of e-mail sentence etc. which is already made in the display of the cell phone according to the present invention, and the description below shows the steps for perfoming pasting it into the another position after copying a part of e-mail sentence.

First, after shifting the cursor to the start point of the sentence to be copyed by joy key 215, user shifts the cursor to the end point of the sentence to be copyed by the joy key 215 while the key 235-1 is being pushed by the left hand little finger, then removes the left hand little finger from the key 235-1.

Next, shifting the cursor to the "pasting" position by joy key 215 and "pasting" is performed by depressing the decision key in the center position of the joy key 215. The works of twelve steps in total under the conventional cell phone becomes the works of four steps in the present invention.

When performing the "cutting" and "pasting" work, the function key 235-2 is used. If the function key 235-3 is used for the function menu (inserting of telephone number, mail adress, adress and person's name) which are not frequently used for Japanese language, it can be used for multiple purposes although input rate becomes slow.

The use of the present invention provides about five times faster letter input rate as compared to that obtained by a key layout using only one hand thumb for the letter input.

Naturally, the present letter input means also can be simply used as a cell phone by which a telephone number can be inputted with one hand. In this case, by switching modes, keys in the first and second columns of the keys 222, 223, 224, 225 and 226 are assigned the numeric characters 1, 2, .., 9, and 0.

Under a condition where both hands can be used, the cell phone is used as shown in Fig. 5. When a user must use only one hand (e.g., when a user hangs by the strap of a train), then, for example, the user can depress the key 227-3 for about three seconds period of time to switch to the one hand mode. When the user pushes the key 227-3 shortly one more time, then the user can use both hand mode. The mode also may be switched by the joy key 215.

Fig. 6 illustrates the cell phone of Fig. 4 according to the present invention which is being used with the right handed one hand mode.

Fig. 6 also schematically illustrates the letter input means being held by a right hand, wherein the five fingers of the right hand are always placed at the home positions of the letter input means.

The one hand mode herein means a mode where the twelve left side face keys in four rows and three columns 220, 222, 224 and 226, the joy keys 215, and the six keys on the right side face 227-1, 227-2, 228-1, 228-2, 229-1 and 229-2 are provided with the right of controlling the input of letters; and the remaining twenty-one keys in seven rows and three columns on the left side face 216, 217, 218, 219, 221, 223 and 225, and the twenty keys on the right side face 228-3, 229-3, 230, 231, 232, 233, 234 and function keys 235 are disabled.

In the one hand mode, the right hand thumb on the right side is used to obtain six key combinations by each of the keys and one combination by pushing no keys (total of seven combinations). The left side face has twelve keys, thereby establishing the calculation of 7 X 12 to allow a total of 84 characters to be inputted.

For inputting English which generally includes numeric characters, it is sufficient to provide 80 characters by key combinations.

It may think that twelve keys of the conventional front key are shifted to the position of the left side face. By using six shift keys of the right side face properly, a high rate letter input can be performed using the shift keys instead of the conventional mode selecter key.

The cell phone as shown in Fig.2 can be folded into two at a substantially center position in the longitudinal direction for providing a small shape which can be conveniently carried, allowing the cell phone of Fig. 4 to provide a hinge mechanism 14 at a substantially center position in the longitudinal direction.

In Fig. 4, the cell phone always has, on the front surface near the key of the main body, printed letters associated with the keys of the cell phone so that input letters corresponding to the key are guided. Such a printed guide is convenient when a user inputs letter to a cell phone or a small PDA device according to the present invention.

Figs. 5 and 6 show the cell phone of Fig. 4 having on the display thereof letters inputted corresponding to the keys selected by the thumb in order to show the letters corresponding to the keys selected by the mode keys and the thumb. When a user pushes the key 216-1 on the top of the left side face while the display is as shown in Fig. 5, for example, then a Japanese letter of " 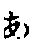 " on the left top of the display can be inputted. When the thumb selects another key, then the details of a letter indicated on the display are changed accordingly. The exemplary cell phone shown in Fig. 6 is in the one hand mode and thus has twelve keys on the left side face, thereby allowing the display to indicate twelve letters. Any of the above key layouts allows a user to utilize efficiently the guidance of input of keys in a small display of the cell phone.

### Embodiment 2

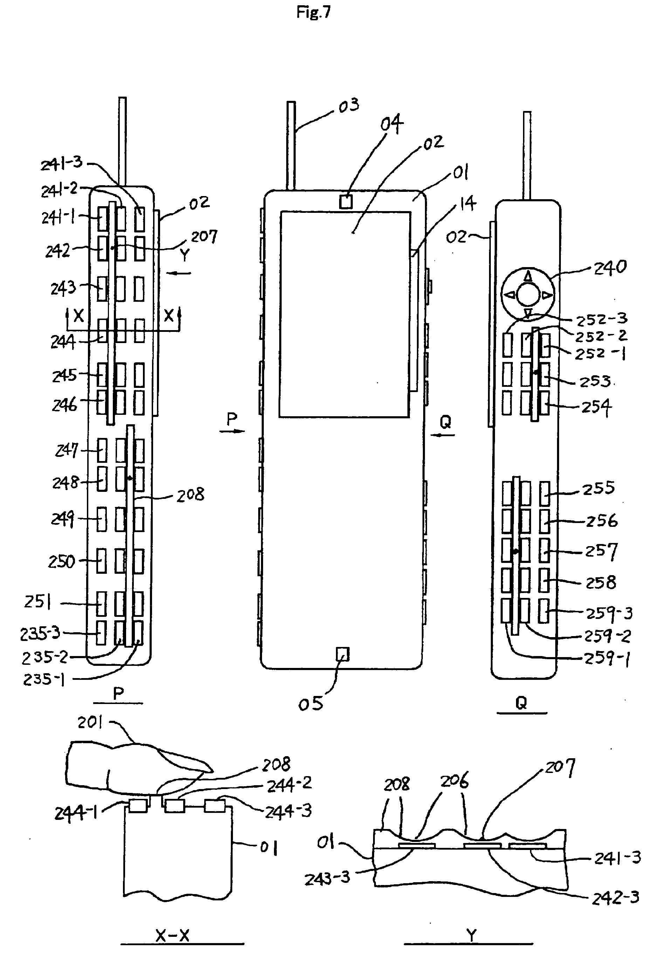

Fig. 7 illustrates one example of a super-high rate letter input device for a cell phone according to the present invention which can be held by both hands so that the ten fingers of both hands can be used for letter input.

The cell phone according to the present invention includes: a main body 01; a display 02; an antenna 03; a loudspeaker 04; a microphone 05; a hinge mechanism 14; left side face keys consists of such as 241-1, 241-2, 241-3 in one row and three columns; total of thirty-three keys in eleven rows and three columns 242, 243, 244, 245, 246, 247, 248, 249, 250 and 251 plus three function keys 235, and on right side face, a joy key 240; total of twenty-four keys in eight rows and three columns 252, 253, 254, 255, 256, 257, 258 and 259; and fingers 201; concavities 206 provided on the frame to guide the fingers to the home positions; projections 207 provided on the frame which a user tactilely felt the finger's position by fingers; and a frame 208 for fingers rest while no key is being depressed.

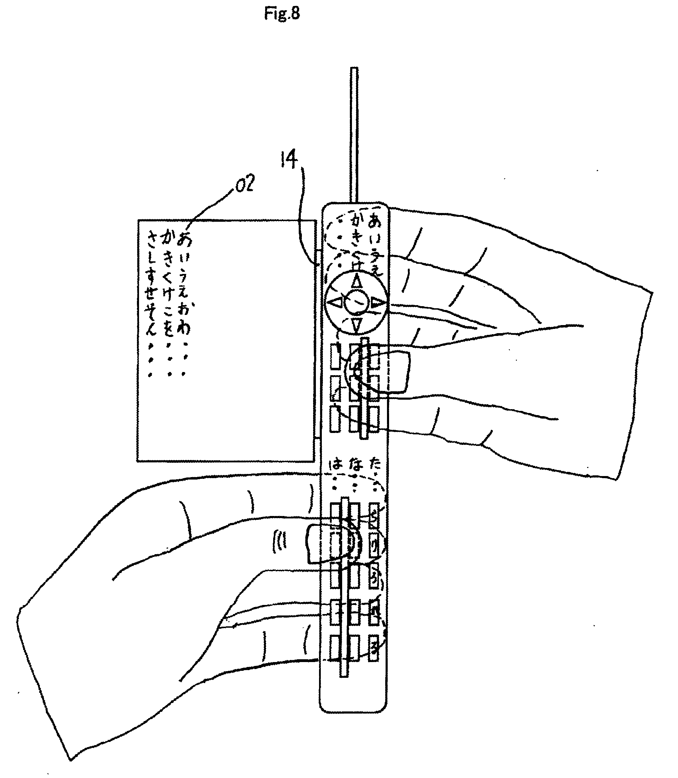

Fig. 8 illustrates a schematic view of the cell phone of Fig. 7 which is being inputted with letters by the ten fingers of both hands.

Fig. 8 also schematically illustrates the cell phone being held by both hands, wherein ten fingers of both hands are positioned at home positions of the letter input means.

In the method of holding the cell phone, the hands are placed naturally to give very little fatigue to a user while the user is operating the cell phone.

When the cell phone is used for the input by both hands, then the right side face shown in Fig. 7 is moved to a position in front of a user. When the display 02 positioned as shown in Fig. 7 is rotated by 90 degrees around the hinge mechanism 14 and then the display 02 as shown in Fig. 8 is obtained.

Fig. 8 illustrates the appearance of the cell phone being used and having a structure convenient for the right-handed user.

As can be seen from Fig. 8, the cell phone includes the joy key 240 and shift keys 252-1, 253-1 and 254-1 operated by which the fast-moving right hand thumb can perform a number of delicate tasks.

This cell phone also can be sufficiently used for the left-handed user by training his right hand.

As shown in Fig. 8, the right hand thumb operates the joy key 240, nine keys in three rows and three columns 252, 253 and 254 on the front side face of the user; the right hand forefinger operates six keys of 241 and 242 on the back side face to the user; the right hand middle finger operates three keys of 243 on the back side face; the right hand fourth finger operates three keys of 244 on the back side face; and right hand little finger operates six keys 245 and 246 on the back side face respectively.

The left hand thumb operates fifteen keys of 255, 256, 257, 258 and 259 on the front side face of the user; the left hand forefinger operates operates six keys of 247 and 248 on the back side face to the user; the left hand middle finger operates three keys of 249 on the back side face; the left hand fourth finger operates three keys of 250 on the back side face; and left hand little finger operates three keys of 251 and three function keys 235 on the back side face respectively.

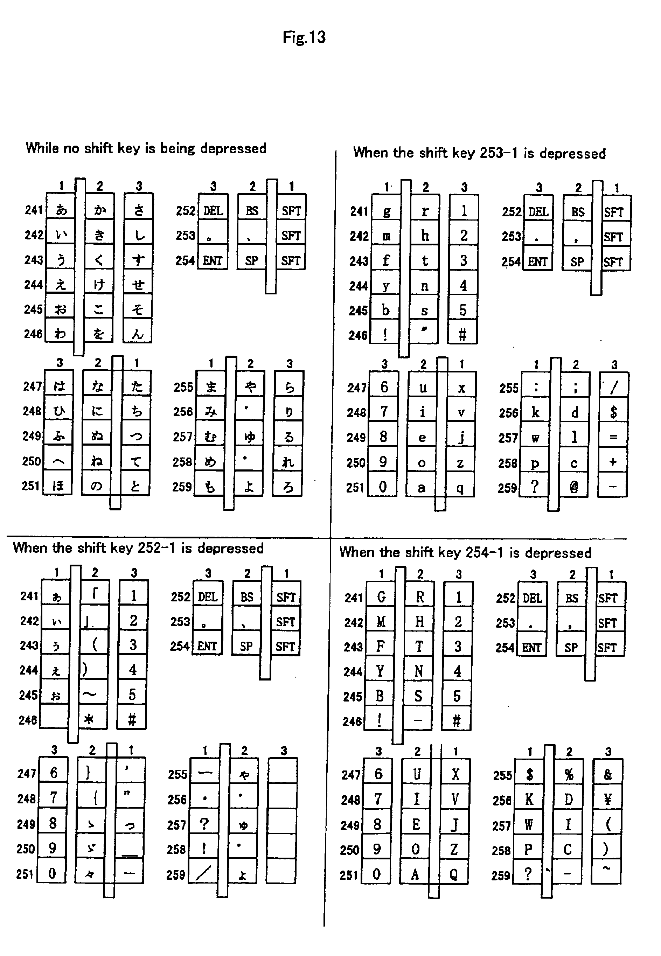

Fig. 13 illustrates the cell phone which is allocated forty-eight Japanese "Hiragana", alphabet and ten numerical characters to the keys of the cell phone of Fig. 7.

This embodiment is functionally the same as Embodiment 1 except for how to hold and key arrangement of the cell phone, and thus will not be further described.

Fig. 13 illustrates a table of input characters corresponding to the keys. By switching the shift keys and using the joy key, "Hiragana", "Katakana", "Kanji", full size numeric characters, half size numeric characters, sign, alphabetical capital letters and alphabetical lower cases can be inputted, thereby providing a lot of and a high rate letter input by the cell phone.

Under a condition where both hands can be used, the cell phone is used as shown in Fig. 8. When a user must use only one hand (e.g., when a user hangs by the strap of a train), then the user can depress the key 252-3 for about three seconds period of time to switch to the one hand mode. When the user pushes the key 252-3 shortly one more time, then the user can use both hand mode. The mode also may be switched by the joy key 240.

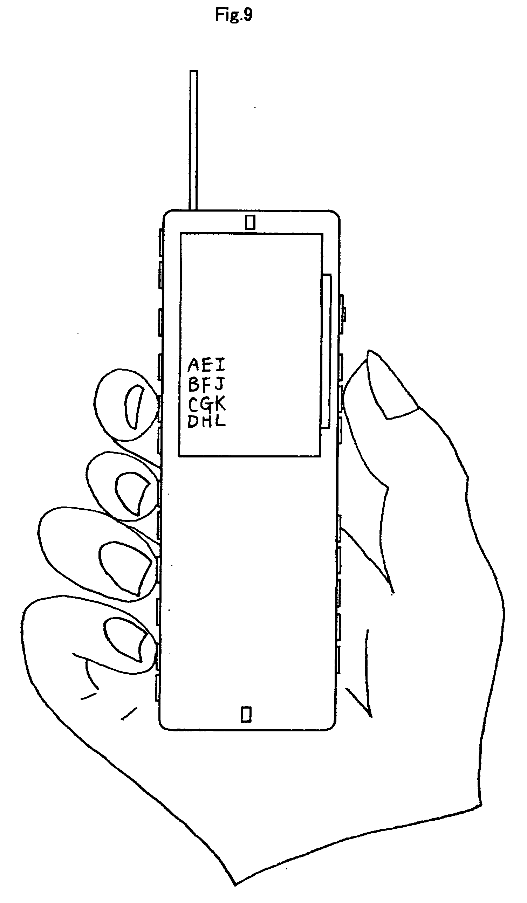

Fig. 9 illustrates the cell phone of Fig. 7 according to the present invention which is being used with the right handed one hand mode.

Fig. 9 also schematically illustrates the letter input means being held by a right hand, wherein the five fingers of the right hand are always placed at the home positions of the letter input means.

The one hand mode herein is completely the same as how to use in Embodiment 1 except for use of keys 245, 247, 249 and 251, and thus will not be further described.

In Fig. 8, the cell phone always has, on the front surface of the main body (in front of user's face), on the opposite side of rear face (to distinguish rear keys), printed letters associated with the keys of the cell phone so that input letters corresponding to the key are guided. Such a printed guide is convenient when a user inputs letter to a cell phone or a small PDA device according to the present invention.

Figs. 8 and 9 show the cell phone of Fig. 7 having on the display thereof input letters corresponding to the keys selected by the thumb in order to show the letters corresponding to the keys selected by the mode keys and the thumb. When a user pushes the key 241-1 on the top of the left side face while the display is as shown in Fig. 8, for example, then a Japanese letter of " 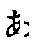 " from the top left to the 3rd of the display can be inputted. When the thumb selects another key, then the details of a letter indicated on the display are changed accordingly. The exemplary cell phone shown in Fig. 9 is in the one hand mode and thus has twelve keys on the left side face, thereby allowing the display to indicate twelve letters. Any of the above key layouts allows a user to utilize efficiently the guidance of input of keys in a small display of the cell phone.

### Embodiment 3

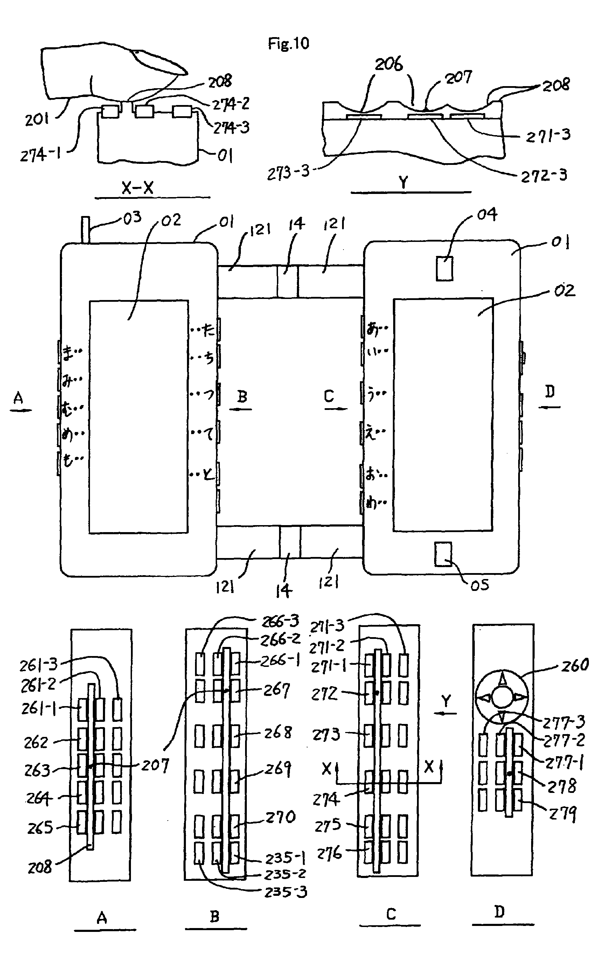

Fig. 10 illustrates another example of a super-high rate letter input device for a cell phone according to the present invention which can be held by both hands so that ten fingers of both hands can be used for letter input.

This letter input means characterize in that two housings provided at right and left are connected. This cell phone can be folded like a book in the left-and-right direction. This letter input means has two displays provided at the left and right sides and can be used as both of an electronic databook and a cell phone by which a number of pieces of letter information or the like can be recognized at one glance and characters can be inputted at a high rate.

The cell phone according to the present invention includes: two main housing 01 at the right and left side; two display 02 at the right and left side; an antenna 03; a loudspeaker 04; a microphone 05; two sets of hinge mechanism 14 of upper and lower side; four sets of bar 121; four sets of bar storage groove 122; and total of fifteen keys in five rows and three columns 261, 262, 263, 264 and 265 on the left side face of the left housing; total of fifteen keys in five rows and three columns 266, 267, 268, 269 and 270 plus three function keys 235 on the right side face of the left housing; total of eighteen keys in six rows and three columns 271, 272, 273, 274, 275 and 276 on the left side face of the right housing; a joy key 260, and total of nine keys in three rows and three columns 277, 278 and 279 on the right side face of the right housing, and fingers 201; concavities 206 provided on the frame to guide the fingers to the home positions; projections 207 provided on the frame which a user tactilely felt the finger's position by fingers; and a frame 208 for fingers rest while no key is being depressed.

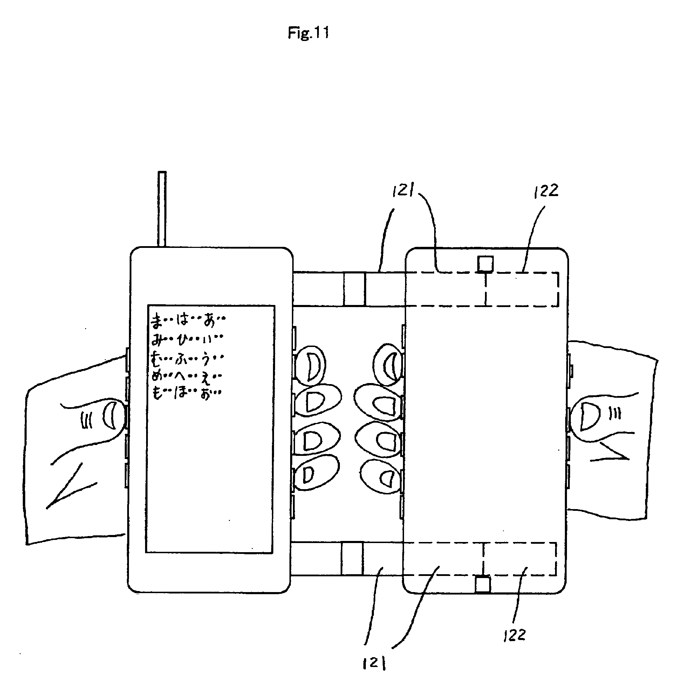

Fig. 11 illustrates a schematic view of the cell phone of Fig. 10 which is being inputted with letters by the ten fingers of both hands.

Fig. 11 also schematically illustrates the cell phone being held by both hands, wherein ten fingers of both hands are positioned at home positions of the letter input means.

Except for the case where the cell phone is used by both hands, the letter input means takes a folded-configuration by allowing a user to apply a compressive force to the main housing 01 from left and right sides to push a bar 121 into a bar storage groove 122 and to subsequently allow the hinge mechanism 14 to oppose the back faces to each other as shown in Fig. 10. As a result, the two displays 02 face outside.

When being folded, the letter input means also can be used as a usual telephone in which the display 02 can display information. And reception and transmission of information can be provided by a limited number of keys as compared to the number for the use by both hands.

Fig. 11 illustrates the appearance of the cell phone of Fig. 10 being used.

As can be seen from Fig. 11, the cell phone includes the joy key 260 and shift keys 277-1, 278-1 and 279-1 opeated by the fast-moving right hand thumb which can perform a number of delicate tasks.

As shown in Fig. 11, the left hand thumb operates fifteen keys in five rows and three columns 261, 262, 263, 264 and 265 on the left side face of the left housing; the left hand forefinger operates six keys in two rows and three columns 266 and 267, the left hand middle finger operates three keys 268, the left hand fourth finger operates three keys 269, and left hand little finger operates three keys 270 and three function keys 235 on the right side face of the left housing.

The right hand forefinger operates six keys in two rows and three columns 271 and 272, the right hand middle finger operates three keys 273, the right hand fourth finger operates three keys 274, and right hand little finger operates six keys 275 and 276 on the left side face of the right housing; the right hand thumb operates the joy key 260, nine keys in three rows and three columns 277, 278 and 279 on the right side face of the right housing respectively.

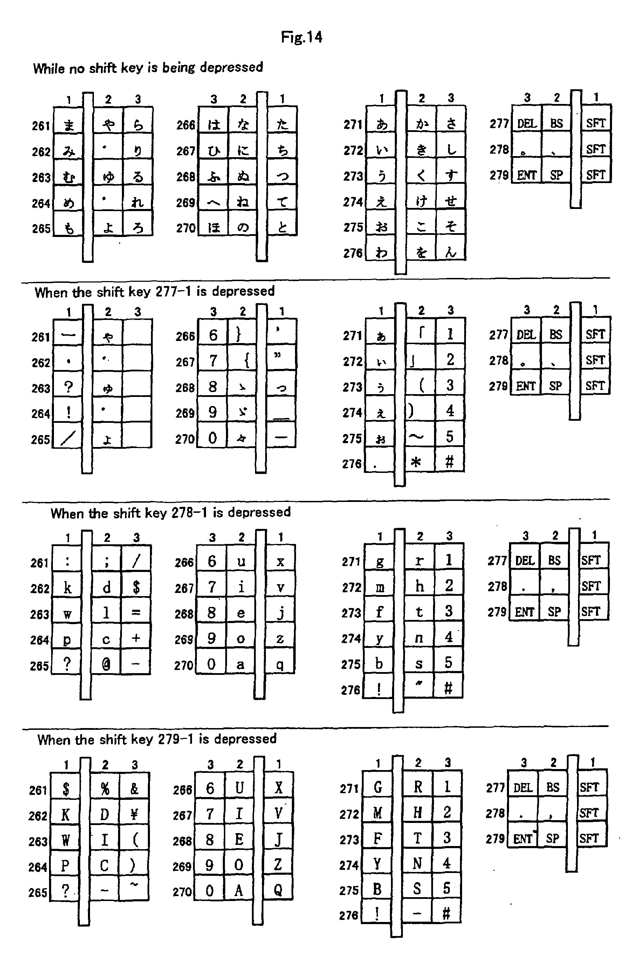

Fig. 14 illustrates the cell phone which is allocated forty-eight Japanese "Hiragana", alphabet and ten numerical characters to the keys of the cell phone of Fig. 10.

While no key is being depressed by right hand thumb, the remaining nine fingers can depress forty-eight keys, thereby allowing any one of forty-eight characters "Hiragana" of " 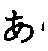 ", " 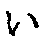 ", " 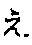 ", " 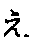 ", " 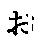 ", " 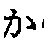 ", • • •, " 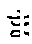 ", " 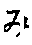 ", " 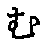 ", " 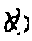 ", " 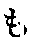 ", " 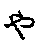 ", " 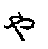 ", " 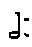 ", " 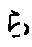 ", " 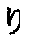 ", " 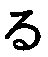 ", " 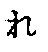 ", " 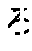 ", " 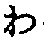 ", " 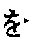 ", " 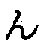 ", a voiced sound " 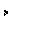 " and a voiceless sound "^{°} " to be inputted by single depressing operation.
Since "Hiragana" key arrangement can not be visible directly from the front side, it is easy to learn the position of the characters for the user by allowing the order of the " 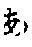 ", " 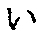 ", " 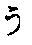 ", " 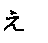 ", " 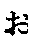 " to be provided in one column.

This embodiment is fundamentally the same as Embodiment 1 except for the structure and how to hold concerning the structure of the cell phone.

Fig. 14 illustrates a table of input characters corresponding to the keys. By switching the shift keys and using the joy key, "Hiragana", "Katakana", "Kanji", full size numeric characters, half size numeric characters, sign, alphabetical capital letters and alphabetical lower cases can be inputted, thereby providing a lot of and a high rate letter input by the cell phone.

Naturally, the present letter input means also can be simply used as a cell phone by which a telephone number can be inputted with one hand, by detecting with sencer when foled, and switching to one hand mode and keys in the first and second columns of the keys 271, 272, 273, 274 and 275 are assigned the numeric characters 1, 2, .., 9, and 0.

Under a condition where both hands can be used, the cell phone is used as shown in Fig. 11. When a user must use only one hand (e.g., when a user hangs by the strap of a train), then the user can use the cell phone under the one hand mode by folding the cell phone as described above.

The one hand mode herein means a mode where the twelve left side face keys in four rows and three columns 272, 273, 274 and 275, the joy keys 260, and the six keys on the right side face 277-1, 277-2, 278-1, 278-2, 279-1 and 279-2 are provided with the right of controlling the input of letters; and the remaining all keys in right and left face of the left housing, and the eight keys 271, 276, 278-3 and 279-3 on the right housing are disabled.

In the one hand mode, the right hand thumb on the right side is used to obtain six key combinations by each of the keys and one combination by pushing no keys (total of seven combinations). The left side face has twelve keys, thereby establishing the calculation of 7 X 12 to allow a total of 84 characters to be inputted.

For inputting English which generally includes numeric characters, it is sufficient to provide 80 characters by key combinations.

It may think that twelve keys of the conventional front key are shifted to the position of the left side face. By using six shift keys of the right side face properly, a high rate letter input can be performed using the shift keys instead of the conventional mode selecter key.

In Fig. 10, the cell phone always has, on the front surface near the key of the main body, printed letters associated with the keys of the cell phone so that input letters corresponding to the key are guided. Such a printed guide is convenient when a user inputs letter to a cell phone or a small PDA device according to the present invention.

Fig. 11 shows the cell phone of Fig. 10 having on the display thereof input letters corresponding to the keys selected by the thumb in order to show the letters corresponding to the keys selected by the mode keys and the thumb. How to use is the same as Embodiment 1, and thus will not be further described.

### Embodiment 4

Fig. 15 illustrates one example of a super-high rate letter input device for a cell phone according to the present invention which can be held by both hands so that the ten fingers of both hands can be used for letter input of English or other language.

The cell phone according to the present invention includes: a main body 01; a display 02; an antenna 03; a loudspeaker 04; a microphone 05; left side face keys consists of such as 83-1, 83-2 in one row and two columns; total of eighteen left side face keys in nine rows and two columns 84, 85, 86, 87, 88, 89, 90 and 91, and on right side face, a joy key 82; total of twenty right side face keys in ten rows and two columns 79, 92, 93, 94, 95, 96, 97, 98, 99 and 100; and fingers 201; concavities 206 provided on the frame 208 guide the fingers to the home positions; projections 207 provided on the frame which a user tactilely felt the finger's position by fingers; and a frame 208 for fingers rest while no key is being depressed. Fig. 16 illustrates a schematic view of the cell phone of Fig. 15 which is being inputted with letters by the ten fingers of both hands.

Fig. 16 also chematically illustrates the cell phone being held by both hands, wherein ten fingers of both hands are positioned at home positions of the letter input means. Two keys 79 are a power key and a call key.

As shown in Fig. 16, the right hand thumb operates the joy key 82, six keys in three rows and two columns 92, 93 and 94 on the right side face; the right hand forefinger operates four keys in two rows and two columns 83 and 84 on the left side face; the right hand middle finger operates two keys 85 on the left side face; the right hand fourth finger operates two keys 86 on the left side face; and right hand little finger operates four keys in two rows and two columns 87 and 88 on the left side face respectively.

The left hand thumb operates six keys in three rows and two columns 89, 90 and 91 on the left side face; the left hand forefinger operates four keys in two rows and two columns 95 and 96 on the right side face; the left hand middle finger operates two keys 97 on the right side face; the left hand fourth finger operates two keys 98 on the right side face; and left hand little finger operates four keys in two rows and two columns 99 and 100 on the right side face respectively.

Fig. 17 illustrates the cell phone which is allocated twenty-six alphabet and ten numerical characters to the keys of the cell phone of Fig. 15.

When an alphabet lower case "c" is inputted, the key 91-2 on the left side face may be pushed one time by the left hand thumb while no keys are pushed with the other finger. And when a capital letter "C" is inputted, as shown in Fig. 16, the key 91-2 on the left side face may be pushed one time by the left hand thumb while the shift key 88-2 on the left side face is being pushed by the right hand little finger.

Similarly, when an alphabet lower case "r" is inputted, the key 83-2 on the left side face may be pushed one time by the right hand forefinger while no keys are pushed with the other finger. And when a capital letter "R" is inputted, as shown in Fig. 16, the key 83-2 on the left side face may be pushed one time by the right hand forefinger while the shift key 100-2 on the right side face is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while the shift key 88-2 or 100-2 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 83-2, 84-2, 85-2, 86-2, 87-2, 95-2, 96-2, 97-2, 98-2 or 99-2 is pushed while the shift key 88-1 or 100-1 is being depressed.

Shift key 88 or 100 may be also assigned to the forefinger, middle finger or fourthfinger instead of the little finger.

It is convenient to use for operating the shift key the little finger of the other side hand different from the hand for inputting the characters even when inputting alphabetical capital letter as well as inputting the number.

The other remaining sixteen keys which are not assigned numeric characters can be allocated signs.

When one key for one character is specified as a representative key for the collection of special signs, then a specific one character is inputted by the key and then a number of special signs can be subsequently selected by repeatedly moving the joy key 82, and the selected character can be fixed by depressing a button of the center part of the joy key 82. The representative key can be increased up to sixteen keys.

Moreover, since six keys of 92, 93 and 94 on the right side face are not allocated any alphabet, the function keys of "DEL", "RT", or "Space", ".", ",", "?" that are frequently used can be allocated to the keys.

The present invention has a particularly superior characteristic in that it is not required to switch the shift key when the ten fingers are used to push twenty-six keys, thereby allowing any one letter of at least twenty-six alphabet letters to be inputted.

In this way, the present invention can be applied to make normal English including numeric characters and signs, by using four shift keys properly.

Thus, the present invention allows one key to have limited two roles (e.g., alphabet and numeric character • sign), thereby allowing a user to perform touch typing with an extreme ease.

In case of inputting Japanese language, when it is required to use the Roman character input method, the user changes the mode into the Roman character mode by the joy key 82, and then if the key which is having the alphabet of twenty-six characters assigned is depressed, the alphabet will be automatically changed into the "Hiragana".

And the "Hiragana" characters can be converted into Kanji (Chinese character) or Japanese "Katakana" by the joy key 82, and then the converted characters can be fixed.

This is fundamentally the same as how to use the "Japanese Roman character input method" which is used for a conventional personal computer except for key arrangements.

The characteristic in that twenty-six alphabet letters can be inputted without switching the shift keys has a advantage that what is necessary is just to memorise the position of twenty-six key characters when inputting by the Roman character input method.

Specifically, a Roman character input method for Japanese language does not use the seven alphabet letters of "C", "F", "J", "L", "Q", "V", and "X" and thus allows nineteen alphabet letters to be used for the input of "Kana characters" of Japanese language. As a result, the remaining seven letters can be allocated to such keys that are frequently used for Japanese language (e.g., keys responsible for ",", "_{°}", "RET", "DEL", "Space", and "BackSpace", or keys responsible for the collection of special characters). This allows all "Hiragana" to be continuously inputted without pushing the shift key and also allows the right hand thumb to always stay at the joy key 82 so that the right hand thumb can be exclusively used for "Kanji (Chinese character)" conversion, thereby providing a super-high rate letter input.

The joy key 82 is a key which have a task for moving a cursor to the upper, lower, left or right directions while waiting the input of Japanese characters. But, after inputting the Japanese characters when being pushed the lower part of the joy key, the characters can be converted into Kanji (Chinese character), and when being pushed once the upper part of the joy key, it can be converted into the full size Japanese "Katakana", when being pushed one more time it can be converted into the half size Japanese "Katakana".

If a button of the center part of the joy key 82 is pushed, converted characters can be fixed, performing a duty as a decision key.

This is completely the same as that of the duty of the conventional joy key.

In this way, the present invention can be applied to any language including English, Japanese, Chinese and Hangul so long as the language allows the conversion with about twenty-six alphabet letters or other about twenty-six characters.

Cross-sections X-X and the cross section Y shown in Fig. 15 illustrates the letter input means designed to provide an accurate letter input by neighboring keys in two columns without input errors.

The cross-section X-X in Fig. 15 includes a finger 201, a frame 208, keys 90-1 and 90-2, and a main body 01.

The cross-section X-X includes the frame 208 which is provided between the neighboring keys 90-1 and 90-2 and which is higher than these keys. The frame 208 is a frame for putting finger which accepts a reaction force caused by the pushing force to a key on the opposite side face by a finger. The reason why the frame 208 is higher than the keys 90-1 and 90-2 is that, allowing the finger 201 to be provided on the frame 208 prevents the keys 90-1 and 90-2 from being erroneously pushed even when the reaction force to the key on the opposite side face is accepted by the finger 201 on the frame 208. While being positioned on the frame 208, the finger 201 can push any of the neighboring keys 90-1 and 90-2 without departing from the frame 208.

The frame shown in Fig. 15 also has, on a specific position thereon, a projection shown by a solid circle 207 which can be tactilely felt by fingers so that a user can know where the home position is for the input by touch typing. There are also concavities 206 as shown in the cross section Y of Fig. 15 by which a user can know the home position for the fingers for the input by touch typing. The concavities 206 are provided at home positions for at least ten fingers on the surface of the frame 208 to accept the fingers. By the concavities 206, a user can tactilely feel the concavities 206 by the ten fingers to guide the ten fingers to the home positions.

In Fig. 15, the cell phone always has, on the front surface of the main body, printed letters associated with the keys of the cell phone so that input letters corresponding to the key are guided. Such a printed guide is convenient when a user inputs letter to a cell phone or a small PDA device according to the present invention.

Fig. 16 shows the cell phone of Fig. 15 having on the display thereof input letters corresponding to the keys selected by the little fingers in order to show the letters corresponding to the keys selected by the little fingers. When a user pushes the key 83-1 on the top of the left side face while the display is as shown in Fig. 16, for example, then an alphabet letter of "G" on the left top of the display can be inputted. When the little finger selects another key, then the details of a letter indicated on the display are changed accordingly.

When a user must use only one hand, then the user can switch to one hand mode with the joy key 82 of Fig.15, making only the joy key 82 and keys 79, 92, 93, 94, 87, 88, 89, 90 and 91 effective, and the remaining keys disable.

In the one hand mode, six keys of 92, 93 and 94 are changed into shift keys or mode selecter keys, ten keys of 87, 88, 89, 90 and 91 are changed into character keys, and character input can be carried out.

Since five fingers of one hand are used, the character input can be carried out more quickly than the conventional case of only thumb. In case of the one hand mode, the cell phone is held by one hand as shown in Fig.6.

In the cell phone of other examples, one hand mode also can be used under the limited functions, making the keys which can be operated by one hand effective and other remaining key disable.

### Embodiment 5

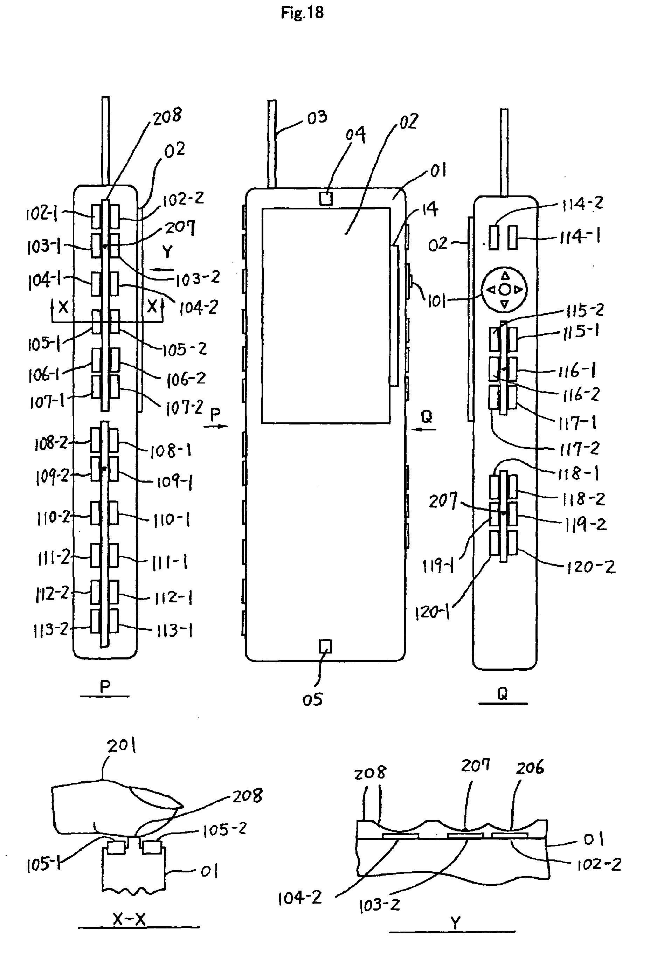

Fig. 18 illustrates one example of a super-high rate letter input device for a cell phone according to the present invention which can be held by both hands so that the ten fingers of both hands can be used for letter input of English or other language.

The cell phone according to the present invention includes: a main body 01; a display 02; an antenna 03; a loudspeaker 04; a microphone 05; a hinge mechanism 14; left side face keys consists of such as 102-1, 102-2 in one row and two columns; total of twenty-four left side face keys in twelve rows and two columns 103, 104, 105, 106, 107, 108, 109, 110, 111, 112 and 113, and on right side face, a joy key 101; total of fourteen right side face keys in seven rows and two columns 114, 115, 116, 117, 118, 119 and 120; and fingers 201; concavities 206 provided on the frame 208 to guide the fingers to the home positions; projections 207 provided on the frame 208 which a user tactilely felt the finger's position by fingers; and a frame 208 for fingers rest while no key is being depressed.

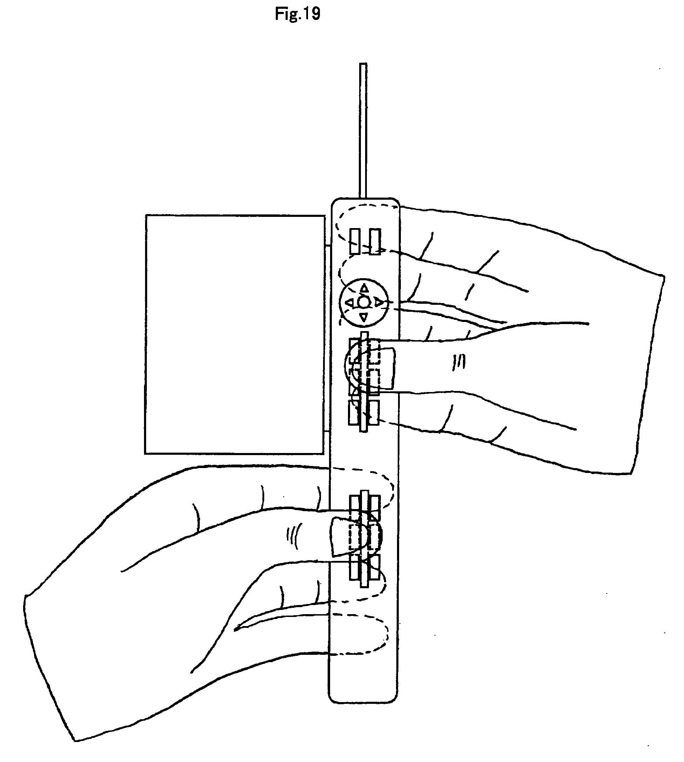

Fig. 19 illustrates a schematic view of the cell phone of Fig. 18 which is being inputted with letters by the ten fingers of both hands.

Fig. 19 also schematically illustrates the cell phone being held by both hands, wherein ten fingers of both hands are positioned at home positions of the letter input means.

In the method of holding the cell phone, the hands are placed naturally to give very little fatigue to a user while the user is operating the cell phone.

When the cell phone is used for the input by both hands, then the right side face shown in Fig. 18 is moved to a position in front of a user. When the display 02 positioned as shown in Fig. 18 is rotated by 90 degrees around the hinge mechanism 14 and then the display 02 as shown in Fig. 19 is obtained. Two keys 114 are a power key and a call key.

As shown in Fig. 19, the right hand thumb operates the joy key 101 and six keys in three rows and two columns 115, 116 and 117 on the right side face; the left hand thumb operates six keys in three rows and two columns 118, 119 and 120 on the right side face; the right hand forefinger operates four keys in two rows and two columns of 102 and 103 on the left side face; the right hand middle finger operates two keys of 104; the right hand fourth finger operates two keys of 105; and right hand little finger operates four keys in two rows and two columns of 106 and 107 on the left side face respectively.

The left hand forefinger operates four keys in two rows and two columns of 108 and 109 on the left side face; the left hand middle finger operates two keys of 110; the left hand fourth finger operates two keys of 111; and left hand little finger operates four keys in two rows and two columns of 112 and 113 on the left side face respectively.

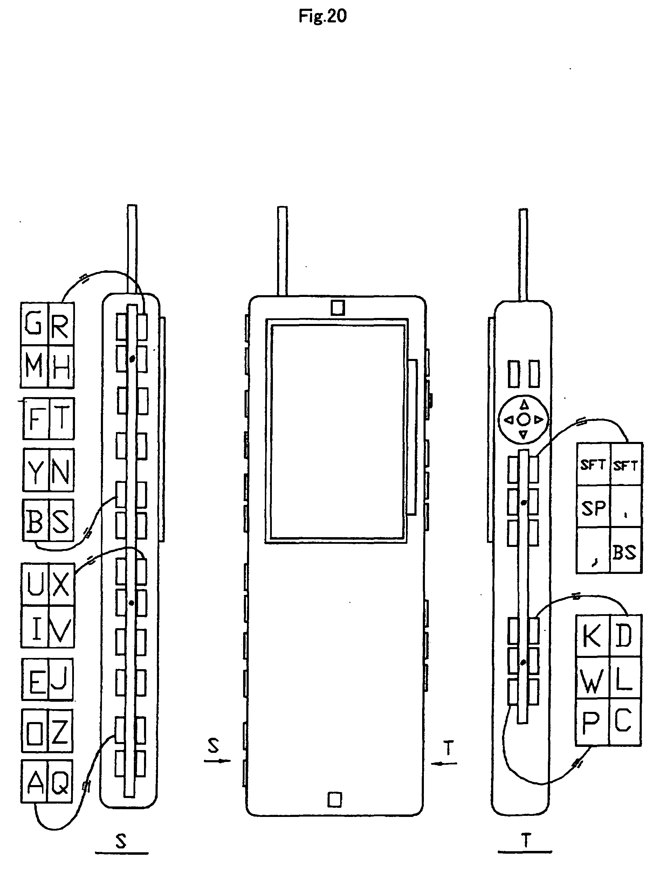

Fig. 20 illustrates the cell phone which is allocated twenty-six alphabet and ten numerical characters to the keys of the cell phone of Fig. 18.

When an alphabet lower case "c" is inputted, the key 120-2 on the right side face may be pushed one time by the left hand thumb while no keys are pushed with the other finger. And when a capital letter "C" is inputted, as shown in Fig. 19, the key 120-2 on the right side face may be pushed one time by the left hand thumb while the shift key 107-2 on the left side face is being pushed by the right hand little finger.

Similarly, when an alphabet lower case "r" is inputted, the key 102-2 on the left side face may be pushed one time by the right hand forefinger while no keys are pushed with the other finger. And when a capital letter "R" is inputted, as shown in Fig. 19, the key 102-2 on the left side face may be pushed one time by the right hand forefinger while the shift key 113-2 on the left side face is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while the shift key 107-2 or 113-2 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 102-2, 103-2, 104-2, 105-2, 106-2, 108-2, 109-2, 110-2, 111-2 or 112-2 is pushed while the shift key 107-1 or 113-1 is being depressed.

Shift key 107 or 113 may be also assigned to the forefinger, middle finger or fourthfinger instead of the little finger.

It is convenient to use for operating the shift key the little finger of the other side hand different from the hand for inputting the characters even when inputting alphabetical capital letter as well as inputting the number.

Moreover, since six keys of 115, 116 and 117 on the right side face are not allocated any alphabet, the function keys of "DEL", "RT", or "Space", ".", ",", "?" that are frequently used can be allocated to the keys.

How to use others is completely the same as that of Embodiment 4, therefore thus will not be further described.

### Embodiment 6

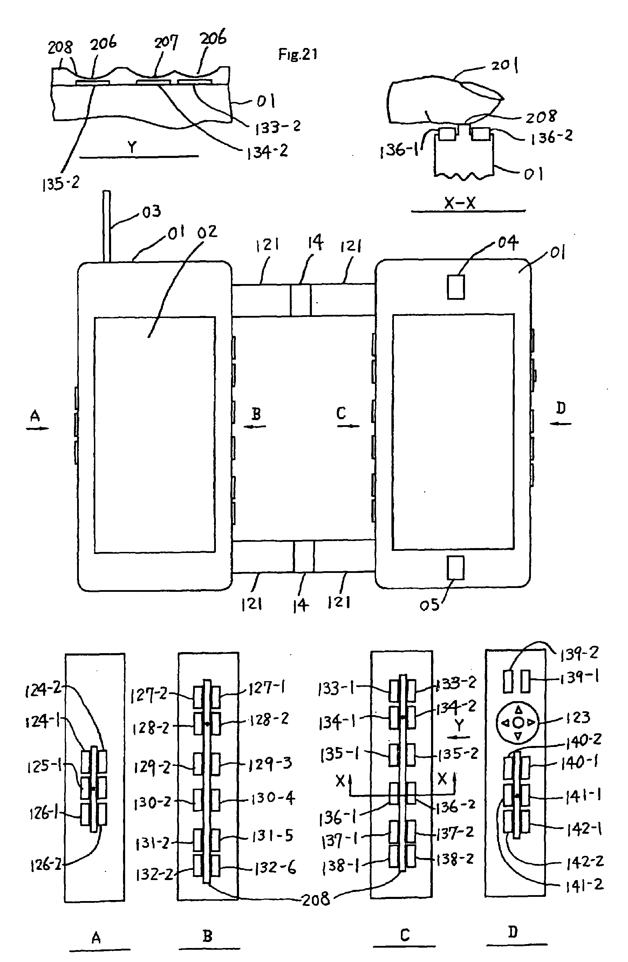

Fig. 21 illustrates another example of a super-high rate letter input device for a cell phone according to the present invention which can be held by both hands so that ten fingers of both hands can be used for letter input of English or other language.

This letter input means characterize in that two housings provided at right and left are connected. This cell phone can be folded like a book in the left-and-right direction. This letter input means has two displays provided at the left and right sides and can be used as both of an electronic databook and a cell phone by which a number of pieces of letter information or the like can be recognized at one glance and characters can be inputted at a high rate.

The cell phone according to the present invention includes: two main housing 01 at the right and left side; two display 02 at the right and left side; an antenna 03; a loudspeaker 04; a microphone 05; two sets of hinge mechanism 14 of upper and lower side; four sets of bar 121; four sets of bar storage groove 122; and total of six keys in three rows and two columns 124, 125 and 126 on the left side face of the left housing 01; total of twelve keys in six rows and two columns 127, 128, 129, 130, 131 and 132 on the right side face of the left housing 01; total of twelve keys in six rows and two columns 133, 134, 135, 136, 137 and 138 on the left side face of the right housing 01; a joy key 123, and total of eight keys in four rows and two columns 139, 140, 141 and 142 on the right side face of the right housing 01; and concavities 206 provided on the frame 208 to guide the fingers to the home positions; projections 207 provided on the frame 208 which a user tactilely felt the finger's position by fingers; and a frame 208 for fingers rest while no key is being depressed.

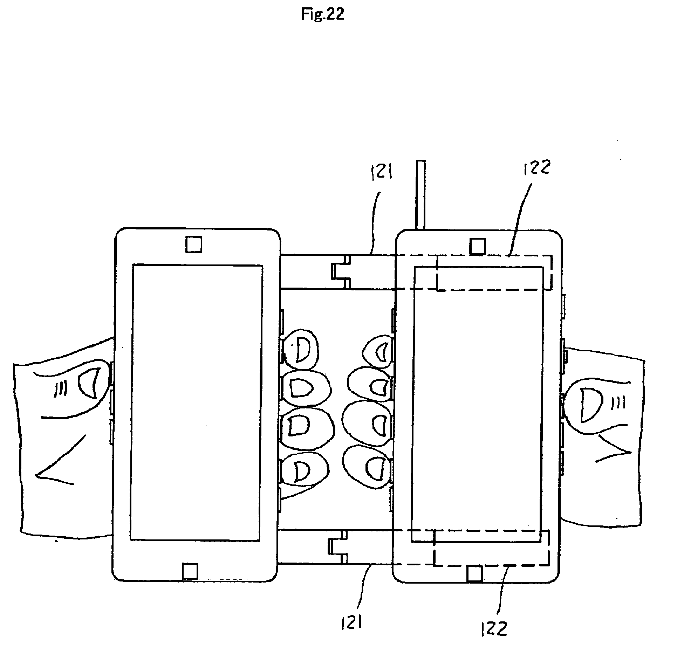

Fig. 22 illustrates a schematic view of the cell phone of Fig. 21 which is being inputted with letters by the ten fingers of both hands.

Fig. 22 also schematically illustrates the cell phone being held by both hands, wherein ten fingers of both hands are positioned at home positions of the letter input means.

Except for the case where the cell phone is used by both hands, the letter input means takes a folded-configuration by allowing a user to apply a compressive force to the main housing 01 from left and right sides to push a bar 121 into a bar storage groove 122 and to subsequently allow the hinge mechanism 14 to oppose the back faces to each other as shown in Fig. 21. As a result, the two displays 02 face outside. The cell phone may be folded so as to oppose the two displays 02 to each other. In this case, rear side of the display 02 is equipped with the loudspeaker 04, the microphone 05 and an auxiliary display, and the information restricted to telephone information may be displayed by the auxiliary display.

When being folded, the letter input means also can be used as a usual telephone in which the display 02 can display information, and reception and transmission of information can be provided by a limited number of keys as compared to the number for the use by both hands.

Fig. 22 illustrates the appearance of the cell phone of Fig. 21 being used. Two keys 139 are a power key and a call key.

As shown in Fig. 22, the left hand thumb operates six keys in three rows and two columns 124, 125 and 126 on the left side face of the left housing 01; the left hand forefinger operates four keys in two rows and two columns 127 and 128, the left hand middle finger operates two keys 129, the left hand fourth finger operates two keys 130, and left hand little finger operates four keys in two rows and two columns 131 and 132 on the right side face of the left housing 01.

The right hand forefinger operates four keys in two rows and two columns 133 and 134, the right hand middle finger operates two keys 135, the right hand fourth finger operates two keys 136, and right hand little finger operates four keys in two rows and two columns 137 and 138 on the left side face of the right housing 01; the right hand thumb operates the joy key 123, six keys in three rows and two columns 140, 141 and 142 on the right side face of the right housing 01 respectively.

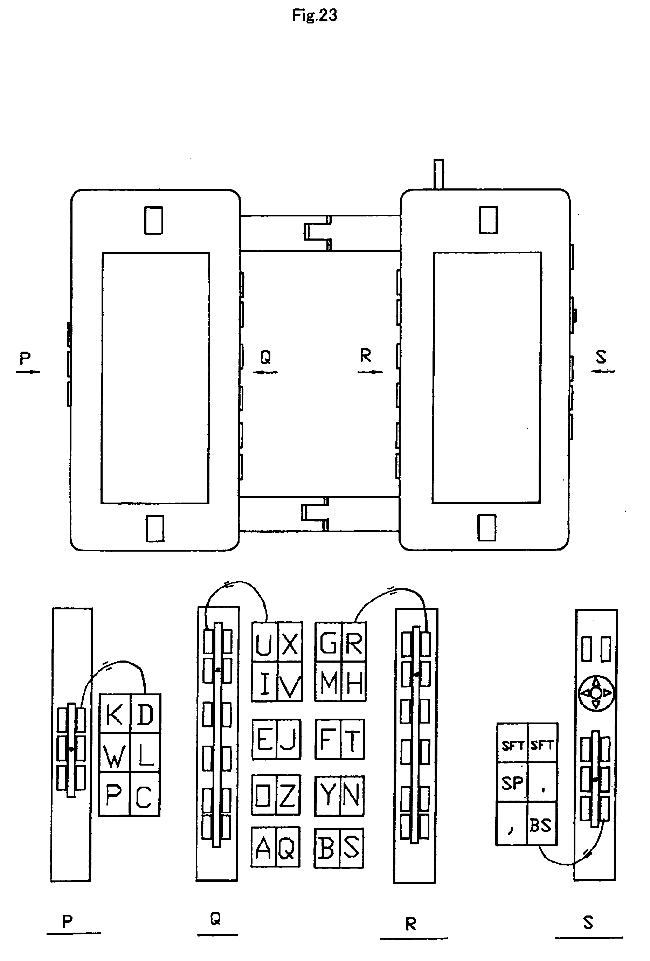

Fig. 23 illustrates the cell phone which is allocated twenty-six alphabet and ten numerical characters to the keys of the cell phone of Fig. 21.

When an alphabet lower case "c" is inputted, the key 126-2 on the left side face of the left housing 01 may be pushed one time by the left hand thumb while no keys are pushed with the other finger. And when a capital letter "C" is inputted, as shown in Fig. 22, the key 126-2 on the left side face of the left housing 01 may be pushed one time by the left hand thumb while the shift key 138-2 on the left side face of the right housing 01 is being pushed by the right hand little finger.

Similarly, when an alphabet lower case "r" is inputted, the key 133-2 on the left side face of the right housing 01 may be pushed one time by the right hand forefinger while no keys are pushed with the other finger. And when a capital letter "R" is inputted, as shown in Fig. 22, the key 133-2 on the left side face of the right housing 01 may be pushed one time by the right hand forefinger while the shift key 132-2 on the right side face of the left housing 01 is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while the shift key 132-2 or 138-2 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 127-2, 128-2, 129-2, 130-2, 131-2, 133-2, 134-2, 135-2, 136-2 or 137-2 is pushed while the shift key 132-1 or 138-1 is being depressed.

Shift key 132 or 138 may be also assigned to the forefinger, middle finger or fourthfinger instead of the little finger.

It is convenient to use for operating the shift key the little finger of the other side hand different from the hand for inputting the characters even when inputting alphabetical capital letter as well as inputting the number.

Moreover, since six keys of 140, 141 and 142 on the right side face are not allocated any alphabet, the function keys of "DEL", "RT", or "Space", ".", ",", "?" that are frequently used can be allocated to the keys.

How to use others is completely the same as that of Embodiment 4, therefore thus will not be further described.

### Embodiment 7

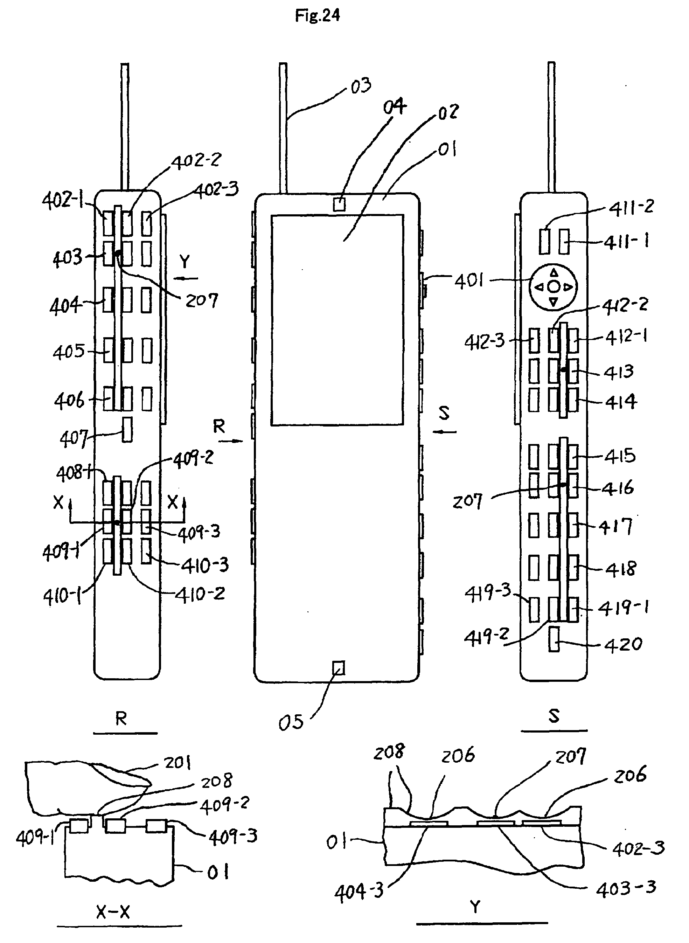

Fig. 24 illustrates one example of a super-high rate letter input device for a cell phone according to the present invention which can be held by both hands so that the ten fingers of both hands can be used for letter input of English or other language.

The cell phone according to the present invention includes: a main body 01; a display 02; an antenna 03; a loudspeaker 04; a microphone 05; left side face keys consists of such as 402-1, 402-2, 402-3 in one row and three columns; total of twenty-four left side face keys in eight rows and three columns 403, 404, 405, 406, 408, 409 and 410 plus a shift key 407. Two keys 411 of the right side face are a power key and a call key, and on right side face, a joy key 401; total of twenty-four left side face keys in eight rows and three columns 412, 413, 414, 415, 416, 417, 418 and 419 plus a shift key 420; and concavities 206 provided on the frame 208 to guide the fingers to the home positions; projections 207 provided on the frame 208 which a user tactilely felt the finger's position by fingers; and a frame 208 for fingers rest while no key is being depressed.

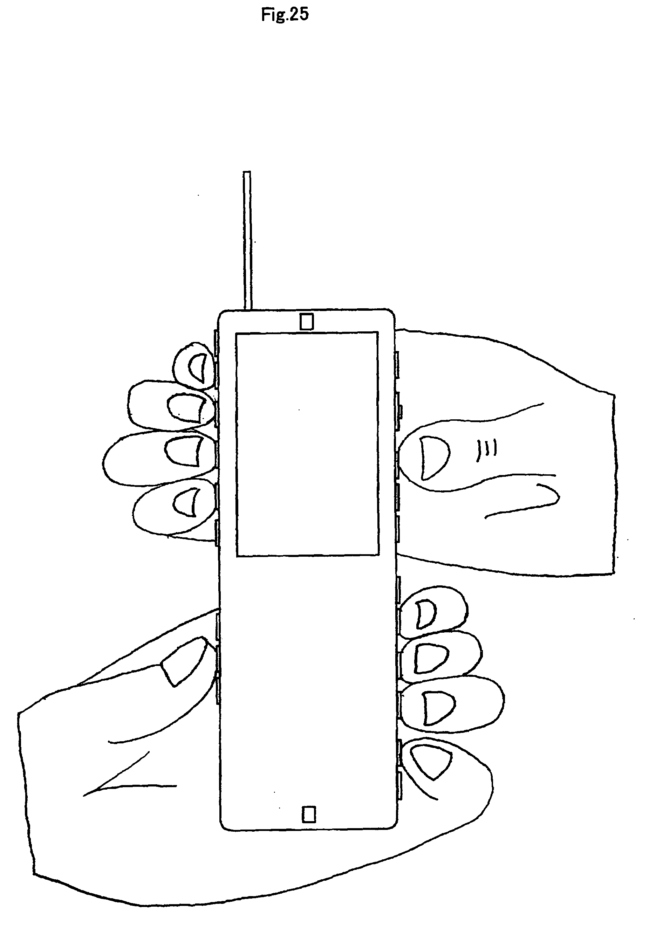

Fig. 25 illustrates a schematic view of the cell phone of Fig. 24 which is being inputted with letters by the ten fingers of both hands.

Fig. 25 also schematically illustrates the cell phone being held by both hands, wherein ten fingers of both hands are positioned at home positions of the letter input means.

As shown in Fig. 25, the right hand thumb operates the joy key 401, nine keys in three rows and three columns 412, 413 and 414 on the right side face; the right hand forefinger operates six keys in two rows and three columns 402 and 403 on the left side face; the right hand middle finger operates three keys 404 on the left side face; the right hand fourth finger operates three keys 405 on the left side face; and right hand little finger operates three keys 406 and the shift key 407 on the left side face respectively.

The left hand thumb operates nine keys in three rows and three columns 408, 409 and 410 on the left side face; the left hand forefinger operates six keys in two rows and three columns 415 and 416 on the right side face; the left hand middle finger operates three keys 417 on the right side face; the left hand fourth finger operates three keys 418 on the right side face; and left hand little finger operates three keys 419 and the shift key 420 on the right side face respectively.

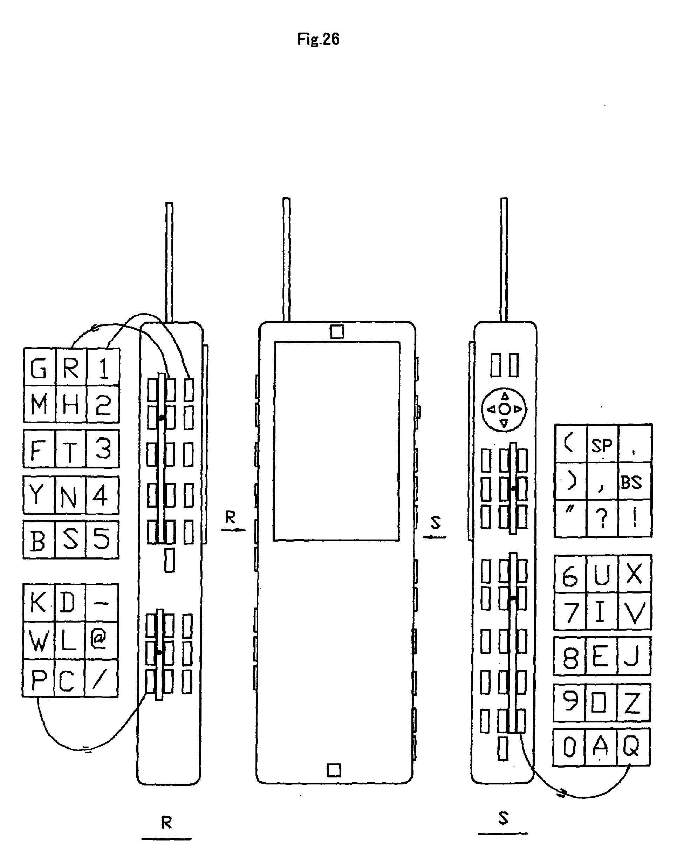

Fig. 26 illustrates the cell phone which is allocated twenty-six alphabet and ten numerical characters etc. to the keys of the cell phone of Fig. 24.

When an alphabet lower case "c" is inputted, the key 410-2 on the left side face may be pushed one time by the left hand thumb while no keys are pushed with the other finger. And when a capital letter "C" is inputted, as shown in Fig. 25, the key 410-2 on the left side face may be pushed one time by the left hand thumb while the shift key 407 on the left side face is being pushed by the right hand little finger.

Similarly, when an alphabet lower case "r" is inputted, the key 402-2 on the left side face may be pushed one time by the right hand forefinger while no keys are pushed with the other finger. And when a capital letter "R" is inputted, as shown in Fig. 25, the key 402-2 on the left side face may be pushed one time by the right hand forefinger while the shift key 420 on the right side face is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while the shift key 407 or 420 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 402-3, 403-3, 404-3, 405-3, 406-3, 415-3, 416-3, 417-3, 418-3 or 419-3 is depressed.

The other remaining three keys 408-3, 409-3 and 410-3 which are not assigned numeric characters can be allocated signs.

Any of thirteen signs can be inputted when any of ten numeric character keys or three keys 408-3, 409-3 or 410-3 is depressed while the shift key 407 or 420 is being pushed.

Shift key 407 or 420 may be also assigned to the forefinger, middle finger or fourthfinger instead of the little finger by shifting the position of the keys.

It is convenient to use for operating the shift key the little finger of the other side hand different from the hand for inputting the characters even when inputting alphabetical capital letter as well as inputting the thirteen signs described above.

When one key for one character is specified as a representative key for the collection of special signs, then a specific one character is inputted by the key and then a number of special signs can be subsequently selected by repeatedly moving the joy key 401, and the selected character can be fixed by depressing a button of the center part of the joy key 401. The representative key can be increased to sixteen keys.

Moreover, since nine keys of 412, 413 and 414 on the right side face are not allocated any alphabet, the function keys of "DEL", "BS", "RT", or "Space", ".", ",", "?", "!", etc. that are frequently used can be allocated to the keys.

The present invention has a particularly superior characteristic in that it is not required to switch the shift key when the ten fingers are used to push twenty-six keys, thereby allowing any one letter of at least twenty-six alphabet letters, ten numeric characters, function keys and signs to be inputted.

In this way, the present invention can be applied to make normal English including numeric characters and signs, by using two shift keys properly.

Thus, the present invention allows one key to have limited one role, thereby allowing a user to perform touch typing with an extreme ease.

How to use others is the same as that of Embodiment 4, therefore thus will not be further described.

### Embodiment 8

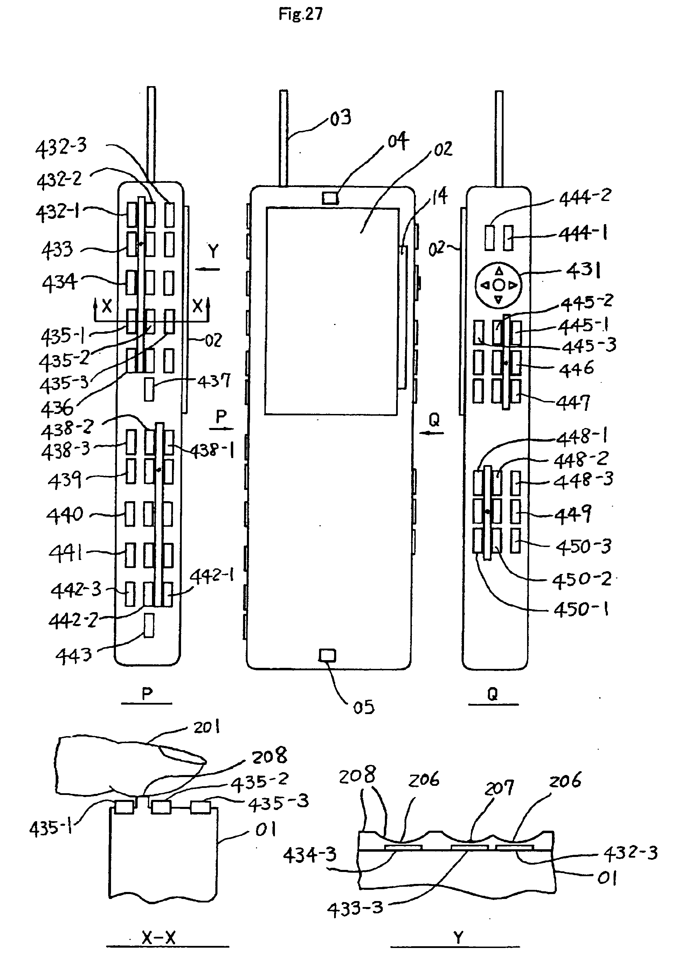

Fig. 27 illustrates one example of a super-high rate letter input device for a cell phone according to the present invention which can be held by both hands so that the ten fingers of both hands can be used for letter input of English or other language.

The cell phone according to the present invention includes: a main body 01; a display 02; an antenna 03; a loudspeaker 04; a microphone 05; left side face keys consists of such as 432-1, 432-2 and 432-3 in one row and three columns; total of thirty left side face keys in ten rows and three columns 433, 434, 435, 436, 438, 439, 440, 441, 442 and two shift keys 437 and 443, and on right side face, a joy key 431; total of eighteen right side face keys in six rows and three columns 445, 446, 447, 448, 449 and 450; and concavities 206 provided on the frame 208 to guide the fingers to the home positions; projections 207 provided on the frame 208 which a user tactilely felt the finger's position by fingers; and a frame 208 for fingers rest while no key is being depressed. Two keys 444 are a power key and a call key.

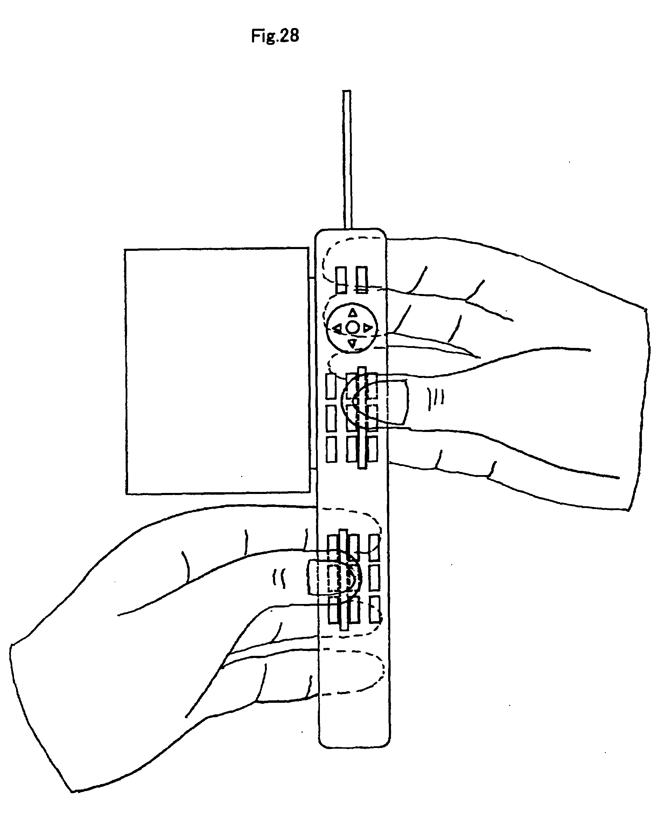

Fig. 28 illustrates a schematic view of the cell phone of Fig. 27 which is being inputted with letters by the ten fingers of both hands.

Fig. 28 also schematically illustrates the cell phone being held by both hands, wherein ten fingers of both hands are positioned at home positions of the letter input means.

In the method of holding the cell phone, the hands are placed naturally to give very little fatigue to a user while the user is operating the cell phone.

When the cell phone is used for the input by both hands, then the right side face shown in Fig. 27 is moved to the position in front of user. When the display 02 positioned as shown in Fig. 27 is rotated by 90 degrees around the hinge mechanism 14 and then the display 02 as shown in Fig. 28 is obtained.

As shown in Fig. 28, the right hand thumb operates the joy key 431 and nine keys in three rows and three columns 445, 446 and 447 on the right side face; the right hand forefinger operates six keys in two rows and three columns of 432 and 433 on the left side face; the right hand middle finger operates three keys of 434; the right hand fourth finger operates three keys of 435; and right hand little finger operates three keys of 436 and and a shift key 437 on the left side face respectively.

The left hand thumb operates nine keys in three rows and three columns 448, 449 and 450 on the right side face; the left hand forefinger operates six keys in two rows and three columns of 438 and 439 on the left side face; the left hand middle finger operates three keys of 440; the left hand fourth finger operates three keys of 441; and left hand little finger operates three keys of 442 and a shift key 443 on the left side face respectively.

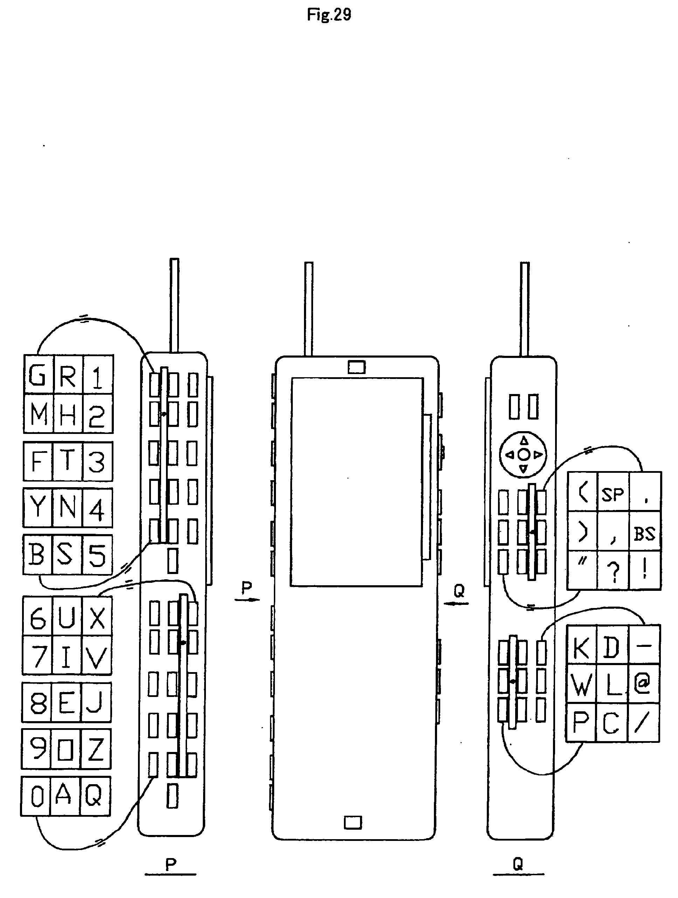

Fig. 29 illustrates the cell phone which is allocated twenty-six alphabet and ten numerical characters etc. to the keys of the cell phone of Fig. 27.

When an alphabet lower case "c" is inputted, the key 450-2 on the right side face may be pushed one time by the left hand thumb while no keys are pushed with the other finger. And when a capital letter "C" is inputted, as shown in Fig. 28, the key 450-2 on the right side face may be pushed one time by the left hand thumb while the shift key 437 on the left side face is being pushed by the right hand little finger.

Similarly, when an alphabet lower case "r" is inputted, the key 432-2 on the left side face may be pushed one time by the right hand forefinger while no keys are pushed with the other finger. And when a capital letter "R" is inputted, as shown in Fig. 28, the key 432-2 on the left side face may be pushed one time by the right hand forefinger while the shift key 443 on the left side face is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while the shift key 437 or 443 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 432-3, 433-3, 434-3, 435-3, 436-3, 438-3, 439-3, 440-3, 441-3 or 442-3 is depressed.

The other remaining three keys 448-3, 449-3 and 450-3 which are not assigned numeric characters can be allocated signs.

Any of thirteen signs can be inputted when any of ten numeric character keys or three keys 448-3, 449-3 or 450-3 is depressed while the shift key 437 or 443 is being pushed.

Shift key 437 or 443 may be also assigned to the forefinger, middle finger or fourthfinger instead of the little finger by shifting the position of the keys.

It is convenient to use for operating the shift key the little finger of the other side hand different from the hand for inputting the characters even when inputting alphabetical capital letter as well as inputting the thirteen signs described above.

When one key for one character is specified as a representative key for the collection of special signs, then a specific one character is inputted by the key and then a number of special signs can be subsequently selected by repeatedly moving the joy key 431, and the selected character can be fixed by depressing a button of the center part of the joy key 431. The representative key can be increased to sixteen keys.

Moreover, since nine keys of 445, 446 and 447 on the right side face are not allocated any alphabet, the function keys of "DEL", "BS", "RT", or "Space", ".", ",", "?", "!", etc. that are frequently used can be allocated to the keys.

The present invention has a particularly superior characteristic in that it is not required to switch the shift key when the ten fingers are used to push twenty-six keys, thereby allowing any one letter of at least twenty-six alphabet letters, ten numeric characters, function keys and signs to be inputted.

In this way, the present invention can be applied to make normal English including numeric characters and signs, by using two shift keys properly.

Thus, the present invention allows one key to have limited one role, thereby allowing a user to perform touch typing with an extreme ease.

How to use others is the same as that of Embodiment 4, therefore thus will not be further described.

### Embodiment 9

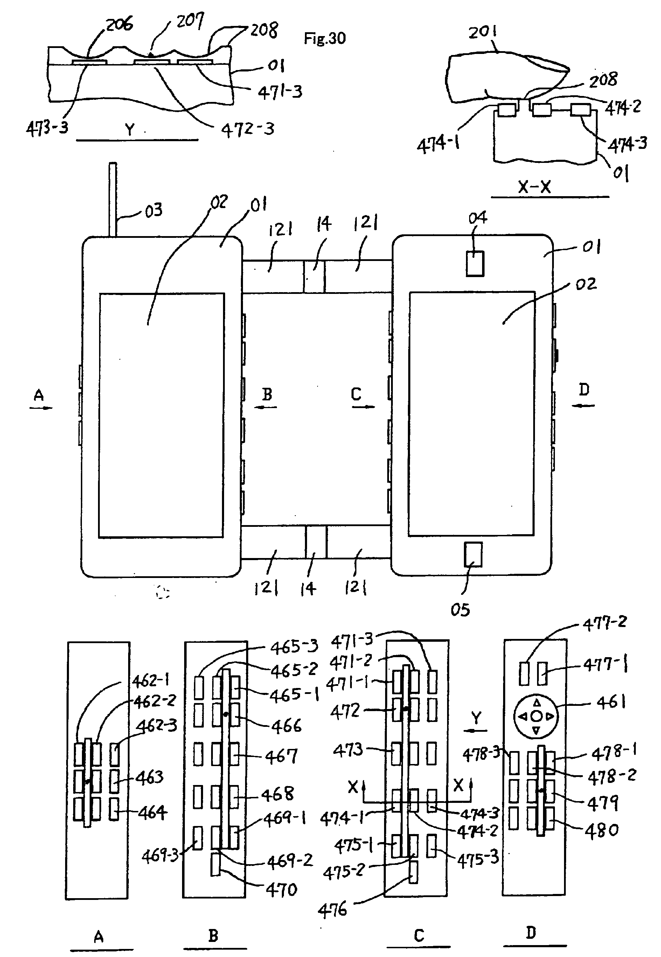

Fig. 30 illustrates another example of a super-high rate letter input device for a cell phone according to the present invention which can be held by both hands so that ten fingers of both hands can be used for letter input of English or other language.

This letter input means characterize in that two housings provided at right and left are connected. This cell phone can be folded like a book in the left-and-right direction. This letter input means has two displays provided at the left and right sides and can be used as both of an electronic databook and a cell phone by which a number of pieces of letter information or the like can be recognized at one glance and characters can be inputted at a high rate.

The cell phone according to the present invention includes: two main housing 01 at the right and left side; two display 02 at the right and left side; an antenna 03; a loudspeaker 04; a microphone 05; two sets of hinge mechanism 14 of upper and lower side; four sets of bar 121; four sets of bar storage groove 122; and total of nine keys in three rows and three columns 462, 463 and 464 on the left side face of the left housing 01; total of fifteen keys in five rows and three columns 465, 466, 467, 468 and 469 and a shift key 470 on the right side face of the left housing 01; total of fifteen keys in five rows and three columns 471, 472, 473, 474 and 475 and a shift key 476 on the left side face of the right housing 01; a joy key 461 and total of nine keys in three rows and three columns 478, 479 and 480 on the right side face of the right housing 01; and concavities 206 provided on the frame 208 to guide the fingers to the home positions; projections 207 provided on the frame 208 which a user tactilely felt the finger's position by fingers; and a frame 208 for fingers rest while no key is being depressed. Two keys 477 on the right side face are a power key and a call key.

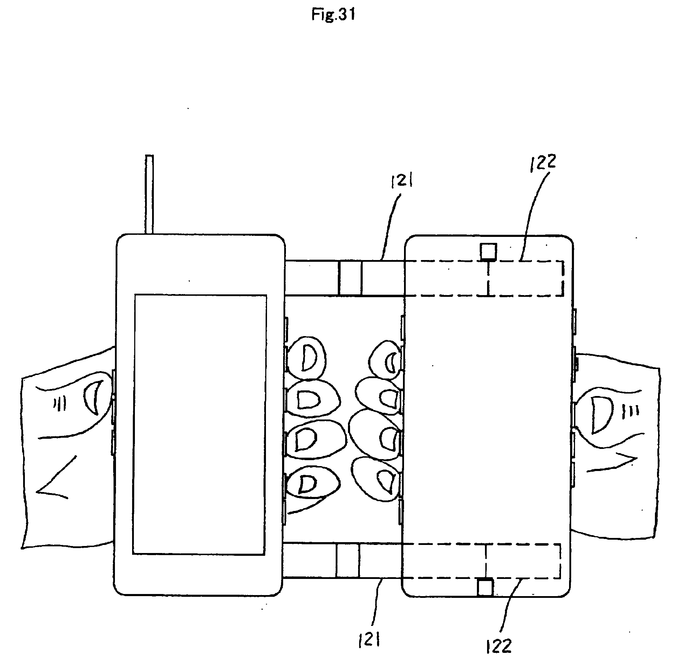

Fig. 31 illustrates a schematic view of the cell phone of Fig. 30 which is being inputted with letters by the ten fingers of both hands.

Fig. 31 also schematically illustrates the cell phone being held by both hands, wherein ten fingers of both hands are positioned at home positions of the letter input means.

Except for the case where the cell phone is used by both hands, the letter input means takes a folded-configuration by allowing a user to apply a compressive force to the main housing 01 from left and right sides to push a bar 121 into a bar storage groove 122 and to subsequently allow the hinge mechanism 14 to oppose the back faces to each other as shown in Fig. 30. As a result, the two displays 02 face outside. The cell phone may be folded so as to oppose the two displays 02 to each other. In this case, rear side of the display 02 is equipped with the loudspeaker 04, the microphone 05 and an auxiliary display, and the information restricted to telephone information may be displayed by the auxiliary display.

When being folded, the letter input means also can be used as a usual telephone in which the display 02 can display information, and reception and transmission of information can be provided by a limited number of keys as compared to the number for the use by both hands.

Fig. 31 illustrates the appearance of the cell phone of Fig. 30 being used. Two keys 477 are a power key and a call key.

As shown in Fig. 31, the left hand thumb operates nine keys in three rows and three columns 462, 463 and 464 on the left side face of the left housing 01; the left hand forefinger operates six keys in two rows and three columns 465 and 466, the left hand middle finger operates three keys 467, the left hand fourth finger operates three keys 468, and left hand little finger operates three keys 469 and a shift key 470 on the right side face of the left housing 01.

The right hand forefinger operates six keys in two rows and three columns 471 and 472, the right hand middle finger operates three keys 473, the right hand fourth finger operates three keys 474, and right hand little finger operates three keys 475 and a shift key 476 on the left side face of the right housing 01; the right hand thumb operates the joy key 461 and nine keys in three rows and three columns 478, 479 and 480 on the right side face of the right housing 01 respectively.

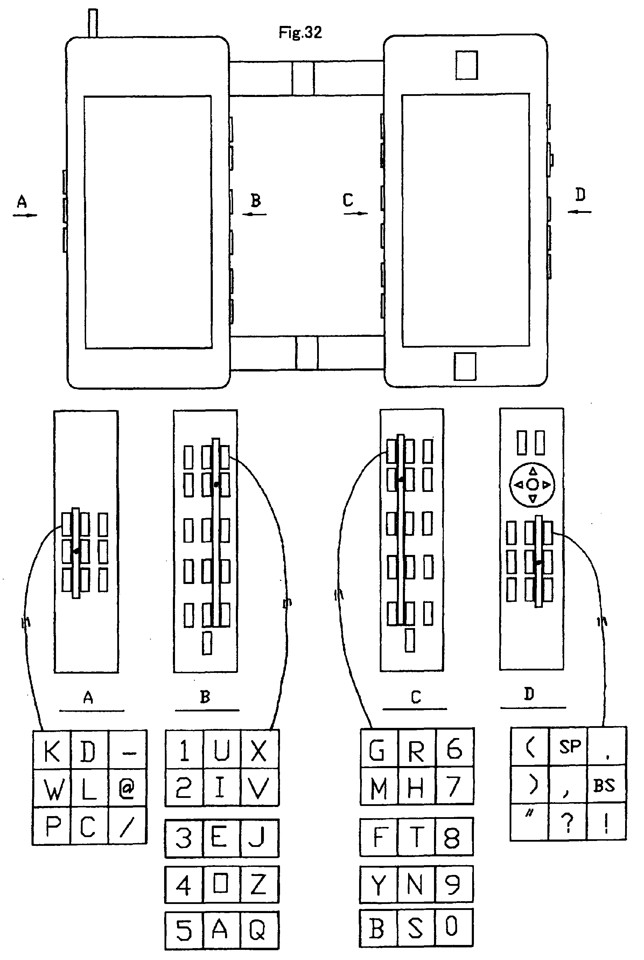

Fig. 32 illustrates the cell phone which is allocated twenty-six alphabet and ten numerical characters etc. to the keys of the cell phone of Fig. 30.

When an alphabet lower case "c" is inputted, the key 464-2 on the left side face of the left housing 01 may be pushed one time by the left hand thumb while no keys are pushed with the other finger. And when a capital letter "C" is inputted, as shown in Fig. 31, the key 464-2 on the left side face of the left housing 01 may be pushed one time by the left hand thumb while the shift key 476 on the left side face of the right housing 01 is being pushed by the right hand little finger.

Similarly, when an alphabet lower case "r" is inputted, the key 471-2 on the left side face of the right housing 01 may be pushed one time by the right hand forefinger while no keys are pushed with the other finger. And when a capital letter "R" is inputted, as shown in Fig. 31, the key 471-2 on the left side face of the right housing 01 may be pushed one time by the right hand forefinger while the shift key 470 on the right side face of the left housing 01 is being pushed by the left hand little finger.

When the ten fingers depress any of twenty-six keys while the other finger does not push any key, then it is possible to input any of the twenty-six alphabetical lower cases from alphabet letters of "a" to "z". Then, when the fingers depress the same key while the shift key 470 or 476 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 465-3, 466-3, 467-3, 468-3, 469-3, 471-3, 472-3, 473-3, 474-3 or 475-3 is depressed.

The other remaining three keys 462-3, 463-3 and 464-3 which are not assigned numeric characters can be allocated signs.

Any of thirteen signs can be inputted when any of ten numeric character keys or three keys 462-3, 463-3 or 464-3 is depressed while the shift key 470 or 476 is being pushed.

Shift key 470 or 476 may be also assigned to the forefinger, middle finger or fourthfinger instead of the little finger by shifting the position of the keys.

It is convenient to use for operating the shift key the little finger of the other side hand different from the hand for inputting the characters even when inputting alphabetical capital letter as well as inputting the thirteen signs described above.

When one key for one character is specified as a representative key for the collection of special signs, then a specific one character is inputted by the key and then a number of special signs can be subsequently selected by repeatedly moving the joy key 461, and the selected character can be fixed by depressing a button of the center part of the joy key 461. The representative key can be increased up to sixteen keys.

Moreover, since nine keys of 478, 479 and 480 on the right side face are not allocated any alphabet, the function keys of "DEL", "BS", "RT", or "Space", ".", ",", "?", "!", etc. that are frequently used can be allocated to the keys.

The present invention has a particularly superior characteristic in that it is not required to switch the shift key when the ten fingers are used to push twenty-six keys, thereby allowing any one letter of at least twenty-six alphabet letters, ten numeric characters, function keys and signs to be inputted.

In this way, the present invention can be applied to make normal English including numeric characters and signs, by using two shift keys properly.

Thus, the present invention allows one key to have limited one role, thereby allowing a user to perform touch typing with an extreme ease.

How to use others is the same as that of Embodiment 4, therefore thus will not be further described.

### Embodiment 10

Fig.33 illustrates one example of the input device of the communication equipment provided on the steering handle of the automobile according to the present invention which can be gripped by both hands so that the ten fingers of both hands can be used for letter input of English and the other languages, for communicating while driving.

Fig.33 also shows the state of the handle angle at the time of going straight while driving the automobile.

The equipment includes: a handle 20; a display 02; keys in five rows and two columns 302, 303, 304, 305 and 306 in the manner of one row and two columns key 302-1 and 302-2 on the surface of left side of the handle gripped by left hand forefinger, middle finger, fourth finger and little finger; keys in three rows and two columns 307, 308 and 309 on the surface of the handle gripped by left hand thumb, in total of sixteen keys in eight rows and two columns, and keys in five rows and two columns 310, 311, 312, 313 and 314 on the surface of right side of the handle gripped by right hand forefinger, middle finger, fourth finger and little finger; a joy key 301 and keys in four rows and two columns 318, 315, 316 and 317 on the surface of the handle gripped by right hand thumb, in total of eighteen keys in nine rows and two columns on the right side; a finger 201; concavities 206 provided on the frame 319 to know the home position for the fingers; a projection 207 provided on the frame which can be tactilely felt by fingers so that a user can know where the user's finger position is; and a frame 319 allowing fingers to be positioned while no key is depressing.

Since the handle is inserted between the thumb and the other four fingers and gripped, the position of the keys which the thumb takes charge of and the position of the keys which the other four fingers take charge of are substantially opposite side face mutually in the holding portion of the handle.

Fig. 34 illustrates a schematic view of the communication equipment of Fig. 33 which is being inputted with letters by the ten fingers of both hands.

Fig. 34 also schematically illustrates the communication equipment being held by both hands, wherein ten fingers of both hands are positioned at home positions of the letter input means.

The user inputs the keys by gripping and inserting the handle between the thumb and the other four fingers of both hands while watching the display provided on the position near the driver's seat. Two keys 318 are a power key and a call key.

As shown in Fig. 34, the right hand thumb operates the joy key 301, eight keys in four rows and two columns 318, 315, 316 and 317 on the right side of the handle 20; the right hand forefinger operates four keys in two rows and two columns 310 and 311 on the right side of the handle; the right hand middle finger operates two keys of 312; the right hand fourth finger operates two keys of 313; the right hand little finger operates two keys of 314 respectively.

Similarly, the left hand thumb operates six keys in three rows and two columns 307, 308 and 309 on the left side of the handle 20; the left hand forefinger operates four keys in two rows and two columns 302 and 303 on the left side of the handle; the left hand middle finger operates two keys of 304; the left hand fourth finger operates two keys of 305; the left hand little finger operates two keys of 306 respectively.

Fig. 35 illustrates the communication equipment which is allocated twenty-six alphabet and ten numerical characters to the keys of the communication equipment of Fig. 33.

When an alphabet lower case "c" is inputted, the key 309-2 on the left side may be pushed one time by the left hand thumb while no keys are pushed with the other finger. And when a capital letter "C" is inputted, as shown in Fig. 33, the key 309-2 on the left side may be pushed one time by the left hand thumb while the shift key 315-2 on the right side is being pushed by the right hand thumb.

Similarly, when an alphabet lower case "r" is inputted, the key 310-2 on the right side may be pushed one time by the right hand forefinger while no keys are pushed with the other finger. And when a capital letter "R" is inputted, the key 310-2 on the right side may be pushed one time by the right hand forefinger while the shift key 315-2 on the right side is being pushed by the right hand thumb.

When the ten fingers depress any of twenty-six keys while the other finger does not push any key, then it is possible to input any of the twenty-six alphabetical lower cases from alphabet letters of "a" to "z". Then, when the fingers depress the same key while the shift keys 315-2 on the right side is being pushed by the right hand thumb, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted when any of the keys 302-2, 303-2, 304-2, 305-2, 306-2, 310-2, 311-2, 312-2, 313-2 and 314-2 is pushed while the shift key 315-1 is being depressed,

The other remaining sixteen keys which are not assigned numeric characters can be allocated signs.

Moreover, since four keys of 316 and 317 on the right side are not allocated any alphabet, the function keys of "DEL" or "Space", ".", "," that are frequently used can be allocated to the keys.

The present invention has a particularly superior characteristic in that it is not required to switch the shift key when the ten fingers are used to push twenty-six keys, thereby allowing any one letter of at least twenty-six alphabet letters to be inputted.

In this way, the present invention can be applied to make normal English including numeric characters and signs, by using two shift keys properly.

Thus, the present invention allows one key to have limited two roles (e.g., alphabet and numeric character • sign), thereby allowing a user to perform touch typing with an extreme ease.

In case of inputting Japanese language, when it is required to use the Roman character input method, the user changes the mode into the Roman character input mode by the joy key 301, and then if the key which is having the alphabet of twenty-six characters assigned is depressed, the alphabet will be automatically changed into the "Hiragana".

And the "Hiragana" characters can be converted into Kanji (Chinese character) or Japanese "Katakana" by the joy key 301, and then the converted characters can be fixed.

This is fundamentally the same as how to use the "Japanese Roman character input method" which is used for a conventional personal computer except for key arrangements.

Use method of the Roman character input method in Japanese described above and use method of Chinese and Hangul of Asia are fundamentally the same as those of Embodiment 4, therefore thus will not be further described.

Cross-sections X-X and Looking Y shown in Fig. 33 illustrates the letter input means designed to provide an accurate letter input by neighboring two columns keys without input errors.

The cross-section X-X in Fig. 33 includes a finger 201, a frame 319, keys 308-1 and 308-2, and a handle 20.

The cross-section X-X includes the frame 319 which is provided between the neighboring keys 308-1 and 308-2 and which is higher than the height of these keys. The frame 319 is a frame for putting fingers which accepts a reaction force caused by the pushing force to a key on the opposite side face by a finger. The reason why the frame 319 is higher than the height of the keys 308-1 and 308-2 is that, allowing the finger 201 to be provided on the frame 319 prevents the keys 308-1 and 308-2 from being erroneously pushed even when the reaction force to the key on the opposite side face is accepted by the finger 201 on the frame 319. While being positioned on the frame 319, the finger 201 can push any of the neighboring keys 308-1 and 308-2 without departing from the frame 319.

The frame shown in Fig. 33 also has, on a specific position thereon, a projection shown by a solid circle 207 which can be tactilely felt by fingers so that a user can know where the home position is for the input by touch typing. There are also concavities 206 as shown in the cross section Y of Fig. 33 by which a user can know the home position for the fingers for the input by touch typing. The concavities 206 are provided at home positions for at least ten fingers on the surface of the frame 319 to accept the fingers. By the concavities 206, a user can tactilely feel the concavities 206 by the ten fingers to guide the ten fingers to the home positions.

In Fig. 33, the communication equipment always has, on the front surface of the main body, printed letters associated with the keys of the communication equipment so that input letters corresponding to the key are guided. Such a printed guide is convenient when a user inputs letter to the communication equipment according to the present invention.

Fig. 34 shows the communication equipment of Fig. 33 having on the display thereof input letters corresponding to the keys selected by the thumb in order to show the letters corresponding to the keys selected by the thumb. When a user pushes the key 310-1 on the top of the right rear side while the display is as shown in Fig. 34, for example, then an alphabet letter of "G" on the right top of the display can be inputted. When the thumb selects another key, then the details of a letter indicated on the display are changed accordingly.

In this invention, there is no necessity of embedding the letter input means (a joy stick and keys) on the handle body directly and manufacturing the handle.

A letter input means can be manufactured independently apart from the handle body, and the letter input means can be also attached by covering the handle of the automobile which have not equipped this equipment.

Therefore, when the letter input means breaks down, it can be exchanged easily by removing only the letter input means from the handle.

### Embodiment 11

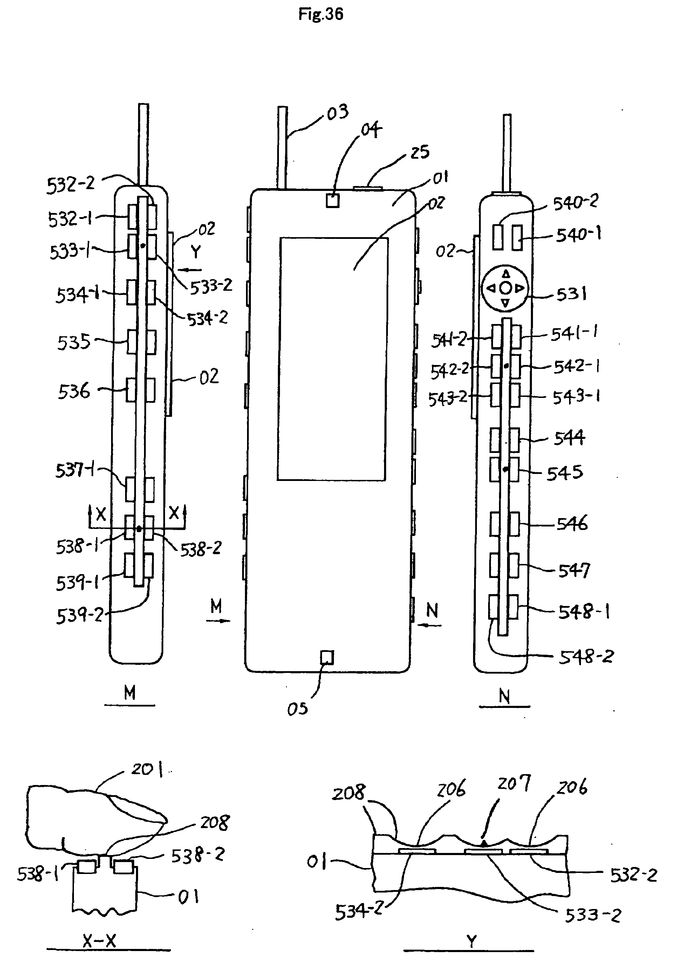

Fig. 36 illustrates one example of a super-high rate letter input device for a cell phone according to the present invention which can be held by both hands so that the ten fingers of both hands can be used for letter input of English or other language.

The cell phone includes: a main body 01; a display 02; an antenna 03; a loudspeaker 04; a microphone 05; a light transmitter 25; left side face keys consists of such as 532-1, 532-2 in one row and two columns; total of sixteen left side face keys in eight rows and two columns 532, 533, 534, 535, 536, 537, 538 and 539, and on right side face, a joy key 531; total of eighteen right side face keys in nine rows and two columns 540, 541, 542, 543, 544, 545, 546, 547 and 548; and fingers 201; concavities 206 provided on the frame 208 to guide the fingers to the home positions; projections 207 provided on the frame 208 which a user tactilely felt the finger's position by fingers; and a frame 208 for fingers rest while no key is being depressed.

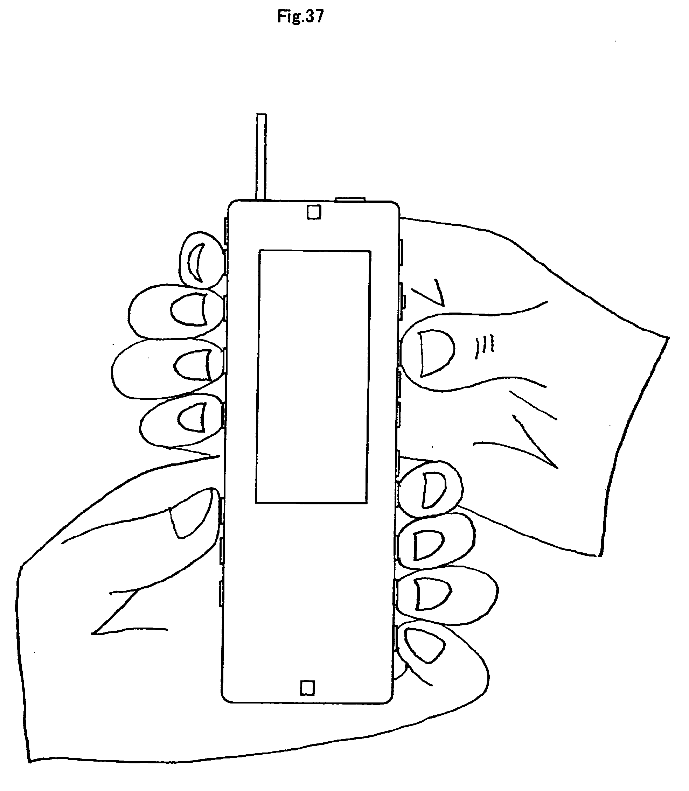

Fig. 37 illustrates a schematic view of the cell phone of Fig. 36 which is being inputted with letters by the ten fingers of both hands.

Fig. 37 also schematically illustrates the cell phone being held by both hands, wherein ten fingers of both hands are positioned at home positions of the letter input means. Two keys 540 are a power key and a call key.

As shown in Fig. 37, the right hand thumb operates the joy key 531 and six keys in three rows and two columns 541, 542 and 543 on the right side face; the right hand forefinger operates four keys in two rows and two columns 532 and 533 on the left side face; the right hand middle finger operates two keys 534 on the left side face; the right hand fourth finger operates two keys 535 on the left side face; and right hand little finger operates two keys 536 on the left side face respectively.

The left hand thumb operates six keys in three rows and two columns 537, 538 and 539 on the left side face; the left hand forefinger operates four keys in two rows and two columns 544 and 545 on the right side face; the left hand middle finger operates two keys 546 on the right side face; the left hand fourth finger operates two keys 547 on the right side face; and left hand little finger operates two keys 548 on the right side face respectively.

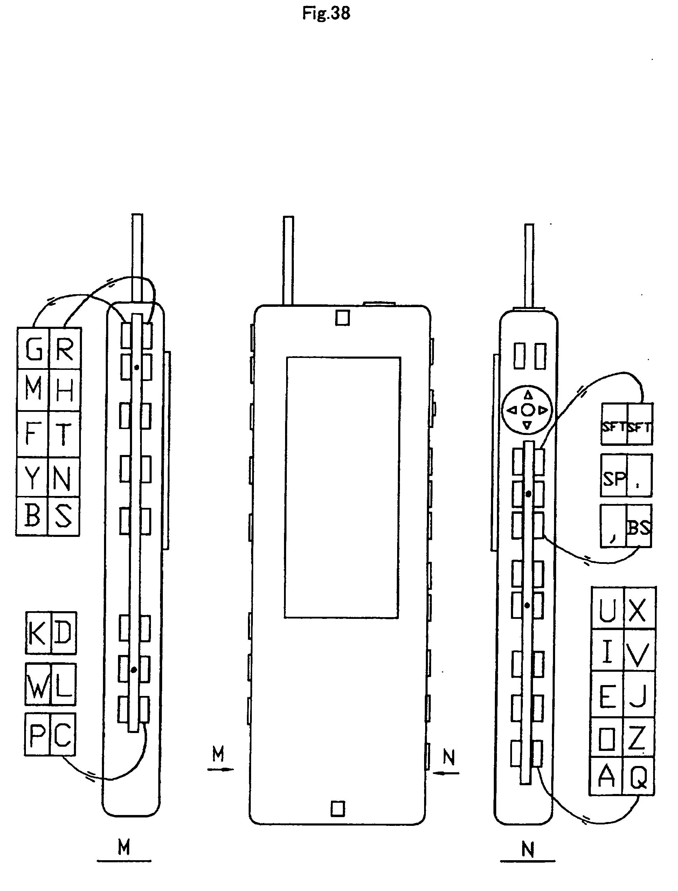

Fig. 38 illustrates the cell phone which is allocated twenty-six alphabet and ten numerical characters to the keys of the cell phone of Fig. 36.

When an alphabet lower case "c" is inputted, the key 539-2 on the left side face may be pushed one time by the left hand thumb while no keys are pushed with the other finger. And when a capital letter "C" is inputted, as shown in Fig. 37, the key 539-2 on the left side face may be pushed one time by the left hand thumb while the shift key 541-2 on the right side face is being pushed by the right hand thumb.

Similarly, when an alphabet lower case "r" is inputted, the key 532-2 on the left side face may be pushed one time by the right hand forefinger while no keys are pushed with the other finger. And when a capital letter "R" is inputted, as shown in Fig. 37, the key 532-2 on the left side face may be pushed one time by the right hand forefinger while the shift key 541-2 on the right side face is being pushed by the right hand thumb.

When the ten fingers depress any of twenty-six keys while the other finger does not push any key, then it is possible to input any of the twenty-six alphabetical lower cases from alphabet letters of "a" to "z". Then, when the fingers depress the same key while the shift key 541-2 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 532-2, 533-2, 534-2, 535-2, 536-2, 544-2, 545-2, 546-2, 547-2 or 548-2 is pushed while the shift key 541-1 is being depressed.

The other remaining sixteen keys which are not assigned numeric characters can be allocated signs.

When one key for one sign is specified as a representative key for the collection of special signs, then a specific one character is inputted by the key and then a number of special signs can be subsequently selected by repeatedly moving the joy key 531, and the selected character can be fixed by depressing a button of the center part of the joy key 531. The representative key can be increased up to sixteen keys.

Moreover, since four keys of 542 and 543 on the right side face are not allocated any alphabet, the function keys of "DEL", or "Space", ".", "," that are frequently used can be allocated to the keys.

How to use others is the same as that of Embodiment 4, therefore thus will not be further described.

The following is the description of the communication equipment according to the present invention which excluded a display 02, a loudspeaker 04 and a microphone 05 from this cell phone.

An external equipment including display can be remotely controlled in real time by inputting characters to the communication equipment according to the present invention. The information of the characters can be sent with electric waves or lights through an antenna 03 or a light transmitter 25 from the communication equipment, and the information can be received by the external display while a user looks at the external display (the display of the driver's seat of a automobile, a television screen or an outdoor large-sized display screen, etc.) which it had within the limits of a user's field of view apart from the communication equipment body.

### Embodiment 12

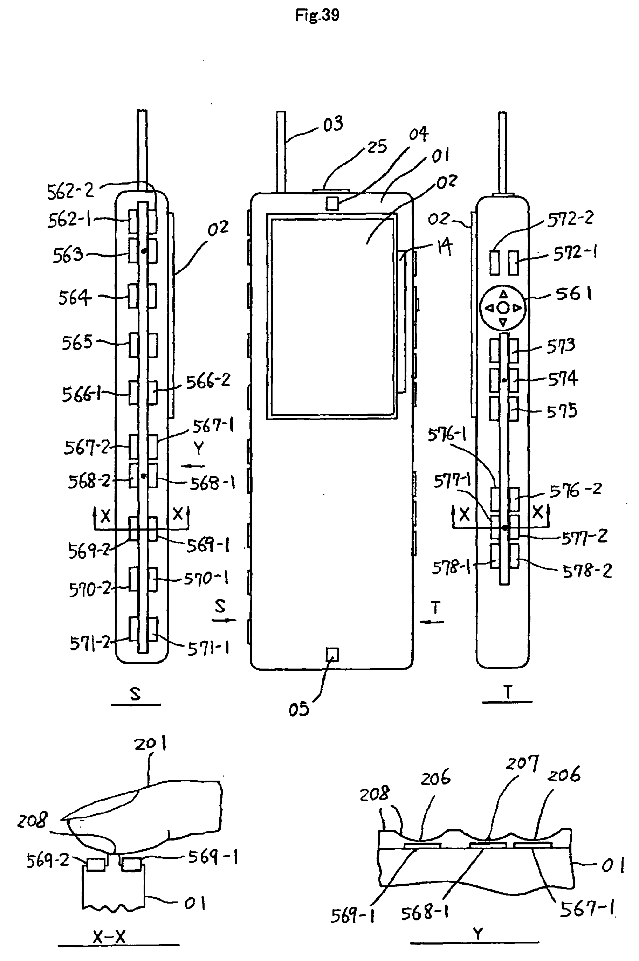

Fig. 39 illustrates one example of a super-high rate letter input device for a cell phone according to the present invention which can be held by both hands so that the ten fingers of both hands can be used for letter input of English or other language.

The cell phone according to the present invention includes: a main body 01; a display 02; an antenna 03; a loudspeaker 04; a microphone 05; a hinge mechanism 14; a light transmitter 25; left side face keys consists of such as 562-1, 562-2 in one row and two columns; total of twenty left side face keys in ten rows and two columns 562, 563, 564, 565, 566, 567, 568, 569, 570 and 571, and on right side face, a joy key 561; total of fourteen right side face keys in seven rows and two columns 572, 573, 574, 575, 576, 577 and 578; and fingers 201; concavities 206 provided on the frame 208 to guide the fingers to the home positions; projections 207 provided on the frame 208 which a user tactilely felt the finger's position by fingers; and a frame 208 for fingers rest while no key is being depressed.

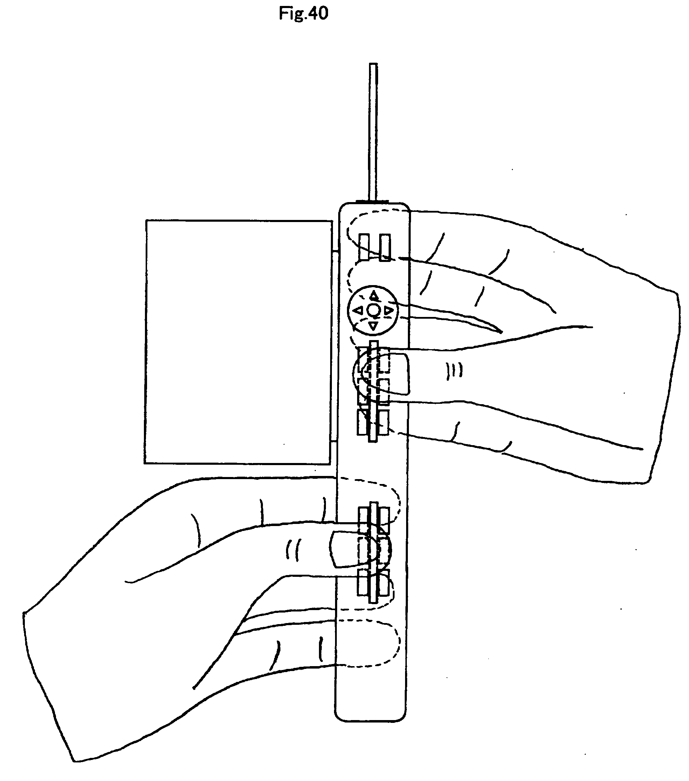

Fig. 40 illustrates a schematic view of the cell phone of Fig. 39 which is being inputted with letters by the ten fingers of both hands.

Fig. 40 also schematically illustrates the cell phone being held by both hands, wherein ten fingers of both hands are positioned at home positions of the letter input means.

In the method of holding the cell phone, the hands are placed naturally to give very little fatigue to a user while the user is operating the cell phone.

When the cell phone is used for the input by both hands, then the right side face shown in Fig. 39 is moved to the position in front of user. When the display 02 positioned as shown in Fig. 39 is rotated by 90 degrees around the hinge mechanism 14 and then the display 02 as shown in Fig. 40 is obtained. Two keys 572 are a power key and a call key.

As shown in Fig. 40, the right hand thumb operates the joy key 561 and six keys in three rows and two columns 573, 574 and 575 on the right side face; the left hand thumb operates six keys in three rows and two columns 576, 577 and 578 on the right side face; the right hand forefinger operates four keys in two rows and two columns of 562 and 563 on the left side face; the right hand middle finger operates two keys of 564; the right hand fourth finger operates two keys of 565; and right hand little finger operates two keys of 566 on the left side face respectively.

The left hand forefinger operates four keys in two rows and two columns of 567 and 568 on the left side face; the left hand middle finger operates two keys of 569; the left hand fourth finger operates two keys of 570; and left hand little finger operates two keys of 571 on the left side face respectively.

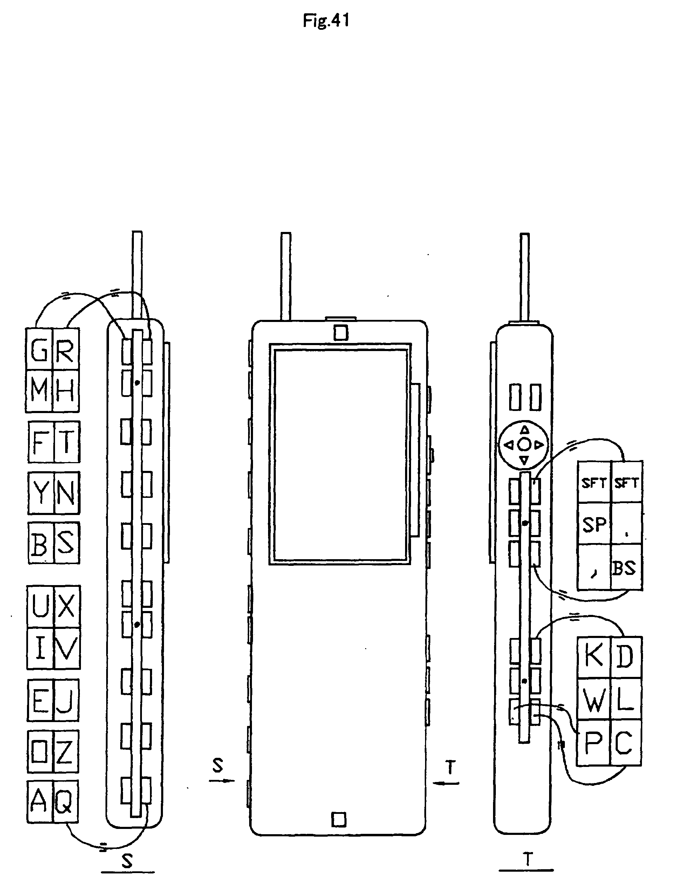

Fig. 41 illustrates the cell phone which is allocated twenty-six alphabet and ten numerical characters to the keys of the cell phone of Fig. 39.

When an alphabet lower case "c" is inputted, the key 578-2 on the right side face may be pushed one time by the left hand thumb while no keys are pushed with the other finger. And when a capital letter "C" is inputted, as shown in Fig. 40, the key 578-2 on the right side face may be pushed one time by the left hand thumb while the shift key 573-2 on the right side face is being pushed by the right hand thumb.

Similarly, when an alphabet lower case "r" is inputted, the key 562-2 on the left side face may be pushed one time by the right hand forefinger while no keys are pushed with the other finger. And when a capital letter "R" is inputted, as shown in Fig. 40, the key 562-2 on the left side face may be pushed one time by the right hand forefinger while the shift key 573-2 on the right side face is being pushed by the right hand thumb.

When the ten fingers depress any of twenty-six keys while the other finger does not push any key, then it is possible to input any of the twenty-six alphabetical lower cases from alphabet letters of "a" to "z". Then, when the fingers depress the same key while the shift key 573-2 is being pushed, it is possible to input any of the twenty-six alphabetical capital letters from alphabet letters of "A" to "Z".

Next, any of ten numeric characters from "1", "2", "3", "4", "5", "6", "7", "8", "9", to "0" can be inputted respectively when any of the keys 562-2, 563-2, 564-2, 565-2, 566-2, 567-2, 568-2, 569-2, 570-2 or 571-2 is pushed while the shift key 573-1 is being depressed.

Moreover, since four keys of 574 and 575 on the right side face are not allocated any alphabet, the function keys of "DEL", or "Space", ".", "," that are frequently used can be allocated to the keys.

How to use others is the same as that of Embodiment 4, therefore thus will not be further described.

The following is the description of the communication equipment according to the present invention which excluded a display 02, a loudspeaker 04, a microphone 05 and a hinge mechanism 14 from this cell phone.

An external equipment including display can be remotely controlled in real time by inputting characters to the communication equipment according to the present invention. The information of the characters can be sent with electric waves or lights through an antenna 03 or a light transmitter 25 from the communication equipment, and the information can be received by the external display while a user looks at the external display (the display of the driver's seat of a automobile, a television screen or an outdoor large-sized display screen, etc.) which it had within the limits of a user's field of view apart from the communication equipment body.

### INDUSTRIAL APPLICABILITY

According to the present invention, keys of a cell phone have the key layouts as shown in the above embodiments and when the keys are operated by all of the ten fingers of both hands, the letter input rate obtained is about five times faster than that obtained by the input by only one thumb. Since any one letter of about forty-eight Japanese "Hiragana" letters can be inputted by a single key push operation, the present invention requires a far shorter period for the training of a user during which the user learns how to perform a touch typing with the key layout.

When the user can do a touch typing with the present invention, then a further faster letter input rate can be obtained.

Since a display area of the front surface can be increased, the amount of information also can be increased.

The present invention provides a cell phone with a letter input rate equal to that obtained by a personal computer on a desk, providing new innovative communication means for a cell phone.

According to the present invention, any one letter of about forty-eight Japanese "Hiragana" letters can be inputted by a single key push operation by any one finger of the fingers of both hands, without changing the input conditions by a mode key or the like. This allows a remarkable reduction of input errors by users. Also according to the present invention, one key is mainly allocated with one Japanese "Hiragana" letter and one alphabet, numeric character/sign/function, thereby allowing fingers to recognize a key with an ease.

Due to the above reasons, fatigue caused to a user is significantly alleviated.

When a user must use only one hand, then the user can use the key of letter input with the one hand. While in the one hand mode, the present invention provides about two times faster letter input rate than that obtained by a conventional cell phone.

Time for receiving and transmitting the information from/to the exterior can be utilized effectively at the time zone under the automatic steering of the automobile in the future, or at the parking time of the automobile.

It is estimated that the number of people in the world using a cell phone for letter input will exceed 500 million. Thus, the letter input device for a cell phone according to the present invention has an industrial applicability.

## Claims

1. A cell phone or a small PDA device (hereinafter a cell phone or a small PDA device is referred to as "cell phone" up to claim 19), **characterized in that**:
the cell phone obtained by connecting two left and right housings having a substantially rectangular parallelepiped shape, wherein:
the cell phone comprises:
about fifteen keys in five rows and three columns provided on the left side face of the left housing to the display provided on the broadest face of the substantially rectangular parallelepiped;
about fifteen keys in five rows and three columns provided on the right side face of the left housing;
about eighteen keys in six rows and three columns provided on the left side face of the right housing; and
about nine keys including at least two shift keys and one set of joy key, or joy stick, or arrow direction key, or cogwheel-type or ball rotation-type input means for taking the task (hereinafter, joy key, a joy stick, an arrow direction key or cogwheel-type or ball rotation-type input means for taking the task is referred to as "joy stick" up to claim 19) provided on the right side face of the right housing,
wherein the cell phone is **characterized in that**:
the thumbs and the respective remaining four fingers of both hands sandwich the cell phone so that ten fingers of both hands are always placed at the joy stick and the keys (hereinafter a joy stick and keys are referred to as "letter input means" up to claim 19),
left hand thumb is used to operate the keys provided on the left side face of the left housing, left hand's forefinger, middle finger, fourth finger and little finger are used to operate the keys provided on the right side face of the left housing, right hand thumb is used to operate a joy stick and keys provided on the right side face of the right housing, and right hand's forefinger, middle finger, fourth finger and little finger are used to operate the keys provided on the left side face of the right housing,
a total of about fifty-seven keys and one set of joy stick are provided so that each of the fingers are provided at home positions which provide pressing/operation to a targeted letter input means,
of ten fingers, any one finger or a simultaneous input of right hand thumb and the remaining nine fingers can provide a input of the letter input means, and
a single key pushing operation by any one finger of the fingers of both hands also can provide, without switching of the conditions such as a shift key, the input of any one letter of about forty-eight letters.

2. A cell phone **characterized in that**:
the cell phone obtained by connecting two left and right housings having a substantially rectangular parallelepiped shape, wherein:
the cell phone comprises:
about eighteen keys in six rows and three columns provided on the left side face of the left housing to the display provided on the broadest face of the substantially rectangular parallelepiped;
about fifteen keys in five rows and three columns provided on the right side face of the left housing;
about fifteen keys in five rows and three columns provided on the left side face of the right housing; and
about nine keys including at least two shift keys and one set of joy stick provided on the right side face of the right housing,
wherein the cell phone is **characterized in that**:
the thumbs and the respective remaining four fingers of both hands sandwich the cell phone so that ten fingers of both hands are always placed at the letter input means,
left hand thumb is used to operate the keys provided on the left side face of the left housing, left hand's forefinger, middle finger, fourth finger and little finger are used to operate the keys provided on the right side face of the left housing, right hand thumb is used to operate a joy stick and keys provided on the right side face of the right housing, and right hand's forefinger, middle finger, fourth finger and little finger are used to operate the keys provided on the left side face of the right housing,
a total of about fifty-seven keys and one set of joy stick are provided so that each of the fingers are provided at home positions which provide pressing/operation to a targeted letter input means,
of ten fingers, any one finger or a simultaneous input of right hand thumb and the remaining nine fingers can provide a input of the letter input means, and
a single key pushing operation by any one finger of the fingers of both hands also can provide, without switching of the conditions such as a shift key, the input of any one letter of about forty-eight letters.

3. A cell phone **characterized in that**:
the cell phone obtained by connecting two left and right housings having a substantially rectangular parallelepiped shape, wherein:
the cell phone comprises:
about fifteen keys in five rows and three columns provided on the left side face of the left housing to the display provided on the broadest face of the substantially rectangular parallelepiped;
about eighteen keys in six rows and three columns provided on the right side face of the left housing;
about fifteen keys in five rows and three columns provided on the left side face of the right housing; and
about nine keys including at least two shift keys and one set of joy stick provided on the right side face of the right housing,
wherein the cell phone is **characterized in that**:
the thumbs and the respective remaining four fingers of both hands sandwich the cell phone so that ten fingers of both hands are always placed at the letter input means,
left hand thumb is used to operate the keys provided on the left side face of the left housing, left hand's forefinger, middle finger, fourth finger and little finger are used to operate the keys provided on the right side face of the left housing, right hand thumb is used to operate a joy stick and keys provided on the right side face of the right housing, and right hand's forefinger, middle finger, fourth finger and little finger are used to operate the keys provided on the left side face of the right housing,
a total of about fifty-seven keys and one set of joy stick are provided so that each of the fingers are provided at home positions which provide pressing/operation to a targeted letter input means,
of ten fingers, any one finger or a simultaneous input of right hand thumb and the remaining nine fingers can provide a input of the letter input means, and
a single key pushing operation by any one finger of the fingers of both hands also can provide, without switching of the conditions such as a shift key, the input of any one letter of about forty-eight letters.

4. A cell phone, **characterized in that**:
the main body of the cell phone having a substantially rectangular parallelepiped shape has, on one face of the faces having narrower widths including the longest edge line, about twenty-four keys in eight rows and three columns including at least two shift keys and one set of joy stick,
the main body has, on the other face having narrower widths, about thirty-three keys in eleven rows and three columns,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of said face having a broad width and a straight line running from the user's front teeth to a center point between the eyebrows are provided in a substantially parallel manner,
one face having the joy stick has thereon one hand's thumb, the other hand's forefinger, middle finger, fourth finger and little finger, and the other face has thereon the other hand's thumb, one hand's forefinger, middle finger, fourth finger and little finger, thereby allowing the ten fingers of both hands to input letters,
the cell phone is held so that one (other) hand's thumb and the other (one) hand's forefinger and the other (one) hand's thumb and one (other) hand little finger are shifted so that the former and the latter approach to each other, thereby allowing palms of both hands to face the user's face,
ten fingers of both hands are placed at the home positions so that the pressing/operation by one hand's thumb to about nine keys including the shift keys and the joy stick, by the respective remaining four fingers to about eighteen keys in six rows and three columns, by the other hand's thumb to about fifteen keys in five rows and three columns, by the respective remaining four fingers to about fifteen keys in five rows and three columns are provided,
of ten fingers, any one finger or a simultaneous input of one thumb and the remaining nine fingers can provide the input of the letter input means, and
a single key pushing operation by any one finger of the fingers of both hands can provide, without switching of the conditions such as a shift key, the input of any one letter of about forty-eight letters.

5. A cell phone, **characterized in that**:
the main body of the cell phone having a substantially rectangular parallelepiped shape has, on one face of the faces having narrower widths including the longest edge line, about twenty-four keys in eight rows and three columns including at least two shift keys and one set of joy stick,
the main body has, on the other face having narrower widths, about thirty-three keys in eleven rows and three columns,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of said face having a broad width and a straight line running from the user's front teeth to a center point between the eyebrows are provided in a substantially parallel manner,
one face having the joy stick has thereon one hand's thumb, the other hand's forefinger, middle finger, fourth finger and little finger, and the other face has thereon the other hand's thumb, one hand's forefinger, middle finger, fourth finger and little finger, thereby allowing the ten fingers of both hands to input letters,
the cell phone is held so that one (other) hand's thumb and the other (one) hand's forefinger and the other (one) hand's thumb and one (other) hand little finger are shifted so that the former and the latter approach to each other, thereby allowing palms of both hands to face the user's face,
ten fingers of both hands are placed at the home positions so that the pressing/operation by one hand's thumb to about nine keys including the shift keys and the joy stick, by the respective remaining four fingers to about fifteen keys in five rows and three columns, by the other hand's thumb to about eighteen keys in six rows and three columns, by the respective remaining four fingers to about fifteen keys in five rows and three columns are provided,
of ten fingers, any one finger or a simultaneous input of one thumb and the remaining nine fingers can provide the input of the letter input means, and
a single key pushing operation by any one finger of the fingers of both hands can provide, without switching of the conditions such as a shift key, the input of any one letter of about forty-eight letters.

6. A cell phone, **characterized in that**:
the main body of the cell phone having a substantially rectangular parallelepiped shape has, on one face of the faces having narrower widths including the longest edge line, about twenty-seven keys in nine rows and three columns including at least two shift keys and one set of joy stick,
the main body has, on the other face having narrower widths, about thirty keys in ten rows and three columns,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of said face having a broad width and a straight line running from the user's front teeth to a center point between the eyebrows are provided in a substantially parallel manner,
one face having the joy stick has thereon one hand's thumb, the other hand's forefinger, middle finger, fourth finger and little finger, and the other face has thereon the other hand's thumb, one hand's forefinger, middle finger, fourth finger and little finger, thereby allowing the ten fingers of both hands to input letters,
the cell phone is held so that one (other) hand's thumb and the other (one) hand's forefinger and the other (one) hand's thumb and one (other) hand little finger are shifted so that the former and the latter approach to each other, thereby allowing palms of both hands to face the user's face,
ten fingers of both hands are placed at the home positions so that the pressing/operation by one hand's thumb to about nine keys including the shift keys and the joy stick, by the respective remaining four fingers to about fifteen keys in five rows and three columns, by the other hand's thumb to about fifteen keys in five rows and three columns, by the respective remaining four fingers to about eighteen keys in six rows and three columns are provided,
of ten fingers, any one finger or a simultaneous input of one thumb and the remaining nine fingers can provide the input of the letter input means, and
a single key pushing operation by any one finger of the fingers of both hands can provide, without switching of the conditions such as a shift key, the input of any one letter of about forty-eight letters.

7. A cell phone, **characterized in that**:
the main body of the cell phone having a substantially rectangular parallelepiped shape has, on one face of the faces having narrower widths including the longest edge line, about twenty-four keys in eight rows and three columns including at least two shift keys and one set of joy stick,
the main body has, on the other face having narrower widths, about thirty-three keys in eleven rows and three columns,
the thumbs and the respective remaining four fingers of both hands sandwich the cell phone,
a main body of the cell phone having a substantially rectangular parallelepiped shape has one face having the joy stick and narrower widths including the longest edge line, and the face is provided in front of a user's face,
the longitudinal direction of said face and a straight line running from the user's front teeth to a center point between the eyebrows are provided in a substantially parallel manner,
while the entirety of a display substantially rotated by 90 degrees from the storage position is being provided substantially in front of the user's face, ten fingers of both hands are used for input,
flat faces of the nails of both hand's thumbs and ball faces of the remaining eight fingers (which are provided to the opposite side of the flat face of the nail) are provided substantially in front of the user's face,
the cell phone is held so that a side section of a nail of one (other) hand little finger and a side section of a nail of the other (one) hand's forefinger are shifted so that the former and the latter approach to each other, thereby allowing palms of both hands to be opposed to both faces of the broadest face of the cell phone main body,
ten fingers of both hands are always placed at the letter input means,
ten fingers of both hands are provided at home positions so that the pressing/operation by one hand's thumb to about nine keys including the shift keys and the joy stick, by the respective remaining four fingers to about eighteen keys in six rows and three columns, by the other hand's thumb to about fifteen keys in five rows and three columns, by the respective remaining four fingers to about fifteen keys in five rows and three columns are provided,
of ten fingers, any one finger or a simultaneous input of one thumb and the remaining nine fingers can provide the input of the letter input means, and
a single key pushing operation by any one finger of the fingers of both hands can provide, without switching of the conditions such as a shift key, the input of any one letter of about forty-eight letters.

8. A cell phone, **characterized in that**:
the main body of the cell phone having a substantially rectangular parallelepiped shape has, on one face of the faces having narrower widths including the longest edge line, about twenty-four keys in eight rows and three columns including at least two shift keys and one set of joy stick,
the main body has, on the other face having narrower widths, about thirty-three keys in eleven rows and three columns,
the thumbs and the respective remaining four fingers of both hands sandwich the cell phone,
a main body of the cell phone having a substantially rectangular parallelepiped shape has one face having the joy stick and narrower widths including the longest edge line, and the face is provided in front of a user's face,
the longitudinal direction of said face and a straight line running from the user's front teeth to a center point between the eyebrows are provided in a substantially parallel manner,
while the entirety of a display substantially rotated by 90 degrees from the storage position is being provided substantially in front of the user's face, ten fingers of both hands are used for input,
flat faces of the nails of both hand's thumbs and ball faces of the remaining eight fingers (which are provided to the opposite side of the flat face of the nail) are provided substantially in front of the user's face,
the cell phone is held so that a side section of a nail of one (other) hand little finger and a side section of a nail of the other (one) hand's forefinger are shifted so that the former and the latter approach to each other, thereby allowing palms of both hands to be opposed to both faces of the broadest face of the cell phone main body,
ten fingers of both hands are always placed at the letter input means,
ten fingers of both hands are provided at home positions so that the pressing/operation by one hand's thumb to about nine keys including the shift keys and the joy stick, by the respective remaining four fingers to about fifteen keys in five rows and three columns, by the other hand's thumb to about fifteen keys in five rows and three columns, by the respective remaining four fingers to about eighteen keys in six rows and three columns are provided,
of ten fingers, any one finger or a simultaneous input of one thumb and the remaining nine fingers can provide the input of the letter input means, and
a single key pushing operation by any one finger of the fingers of both hands can provide, without switching of the conditions such as a shift key, the input of any one letter of about forty-eight letters.

9. A cell phone, **characterized in that**:
the main body of the cell phone having a substantially rectangular parallelepiped shape has, on one face of the faces having narrower widths including the longest edge line, about twenty-seven keys in nine rows and three columns including at least two shift keys and one set of joy stick,
the main body has, on the other face having narrower widths, about thirty keys in ten rows and three columns,
the thumbs and the respective remaining four fingers of both hands sandwich the cell phone,
a main body of the cell phone having a substantially rectangular parallelepiped shape has one face having the joy stick and narrower widths including the longest edge line, and the face is provided in front of a user's face,
the longitudinal direction of said face and a straight line running from the user's front teeth to a center point between the eyebrows are provided in a substantially parallel manner,
while the entirety of a display substantially rotated by 90 degrees from the storage position is being provided substantially in front of the user's face, ten fingers of both hands are used for input,
flat faces of the nails of both hand's thumbs and ball faces of the remaining eight fingers (which are provided to the opposite side of the flat face of the nail) are provided substantially in front of the user's face,
the cell phone is held so that a side section of a nail of one (other) hand little finger and a side section of a nail of the other (one) hand's forefinger are shifted so that the former and the latter approach to each other, thereby allowing palms of both hands to be opposed to both faces of the broadest face of the cell phone main body,
ten fingers of both hands are always placed at the letter input means,
ten fingers of both hands are provided at home positions so that the pressing/operation by one hand's thumb to about nine keys including the shift keys and the joy stick, by the respective remaining four fingers to about fifteen keys in five rows and three columns, by the other hand's thumb to about eighteen keys in six rows and three columns, by the respective remaining four fingers to about fifteen keys in five rows and three columns are provided,
of ten fingers, any one finger or a simultaneous input of one thumb and the remaining nine fingers can provide the input of the letter input means, and
a single key pushing operation by any one finger of the fingers of both hands can provide, without switching of the conditions such as a shift key, the input of any one letter of about forty-eight letters.

10. The cell phone according to any one of claims 1 to 9, **characterized in that**, while any one of said shift keys is being pushed, a single key pushing operation by any one finger of the remaining nine fingers of both hands or a single simultaneous key pushing operation by any one of said shift keys and any one finger of the remaining nine fingers of both hands newly provides the input of any one letter of about forty-eight letters other than the forty-eight letters.

11. The cell phone according to any one of claims 1 to 10, wherein:
when one hand is not available, input means which can be operated only by five fingers of one available hand are enabled and the remaining input means are disabled, thereby allowing the right to control the input of letters to be transferred to the input means which can be operated only by five fingers of one hand,
the cell phone is held by one hand so that five fingers of the one hand holding the cell phone are always placed at the home positions of the letter input means, and
of five fingers, any one finger or a simultaneous input of one thumb and the other four fingers can provide a input of the letter input means.

12. The cell phone according to any one of claims 4 to 9, **characterized in that** the cell phone can be folded into two at a substantially center position in the longitudinal direction for providing a small shape which can be conveniently carried.

13. The cell phone according to any one of claims 1 to 3, wherein a single key depressing operation by a finger provides the input of any one letter of at least forty-eight characters of Hiragana " 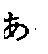 ", " 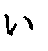 ", " 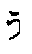 ", " 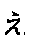 ", " 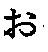 ", " 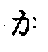 ", " 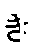 ", • • • •, " 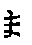 ", " 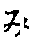 ", " 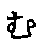 ", " 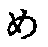 ", " 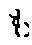 ", " 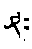 ", " 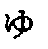 ", " 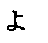 ", " 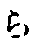 ", " 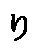 ", " 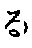 ", " 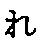 ", " 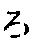 ", " 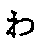 ", " 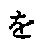 ", " 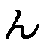 ", a voiced sound " 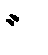 " and a voiceless sound "° ", by the keys arranged in the left and right side face of the left housing and the left side face of the right housing, and
while the one shift key is being pushed by right hand thumb, a single key depressing operation of said same key by other finger also provides the input of any one of at least nine Japanese lowercase of " 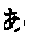 ", " 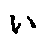 ", " 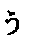 ", " 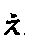 ", " 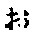 ", " 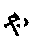 ", " 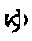 ", " 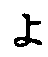 ", " 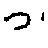 ", and
while the other shift key is being pushed by one hand thumb, a single key depressing operation by other finger also provides the input of any one of at least twenty-six alphabet letters and ten numeric characters from "1", "2", "3", • • • •, to "0".

14. The cell phone according to any one of claims 1 to 3, wherein the cell phone has, on the left and right side face of the left housing and the left side face of the right housing, keys for inputting at least forty Hiragana characters of " 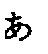 ", " 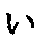 ", " 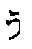 ", " 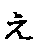 ", " 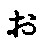 " and " 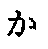 ", " 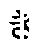 ", • • • •, " 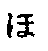 " and " 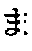 ", " 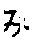 ", " 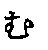 ", " 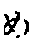 ", " 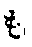 " and " 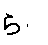 ", " 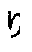 ", " 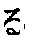 ", " 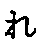 ", " 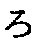 ", which are arranged in 50 sound arrangement in a sequential order of each five characters on one column.

15. The cell phone according to any one of claims 4 to 9, wherein a single key depressing operation by other nine fingers except for one thumb provides the input of any one letter of at least forty-eight characters of Hiragana " 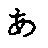 ", " 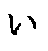 ", " 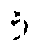 ", " 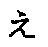 ", " 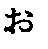 ", " 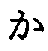 ", " 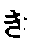 ", • • • •, " 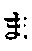 ", " 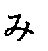 ", " 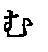 ", " 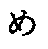 ", " 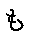 ", " 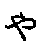 ", " 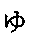 ", " 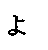 ", " 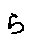 ", " 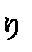 ", " 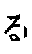 ", " 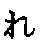 ", " 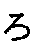 ", " 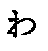 ", " 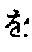 ", " 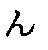 ", a voiced sound " 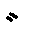 " and a voiceless sound "^{°}", and
while the one shift key is being pushed by one hand thumb, a single key depressing operation of said same key by other finger also provides the input of any one of at least nine Japanese lowercase of " 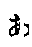 ", " 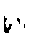 ", " 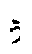 ", " 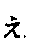 ", " 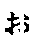 ", " 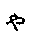 ", " 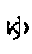 ", " 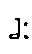 ", " 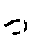 ", and
while the other shift key is being pushed by one hand thumb, a single key depressing operation by other finger also provides the input of any one of at least twenty-six alphabet letters and ten numeric characters from "1", "2", "3", • • • •, to "0".

16. The cell phone according to any one of claims 4 to 9, wherein the cell phone has, on the keys inputed by other nine fingers except for one thumb, at least forty Hiragana characters of " 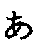 ", " 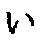 ", " 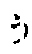 ", " 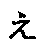 ", " 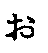 " and " 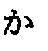 ", " 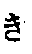 ", • • • •, " 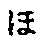 " and " 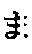 ", " 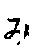 ", " 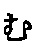 ", " 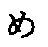 ", " 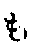 " and " 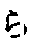 ", " 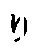 ", " 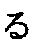 ", " 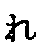 ", " 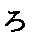 ", which are arranged in 50 sound arrangement in a sequential order of each five characters on one column.

17. A cell phone, **characterized in that**:
the cell phone is obtained by connecting two housings at left and right,
the cell phone comprises:
at least six keys provided on the left side face of the left housing;
at least ten keys provided on the right side face of the left housing;
at least ten keys provided on the left side face of the right housing;
at least two keys and at least one set of joy stick provided on the right side face of the right housing;
the thumbs and the respective remaining four fingers of both hands sandwich the cell phone,
left hand thumb is used to operate the keys provided on the left side face of the left housing, left hand's forefinger, middle finger, fourth finger and little finger are used to operate the keys provided on the right side face of the left housing, right hand thumb is used to operate a joy stick and keys provided on the right side face of the right housing, and right hand's forefinger, middle finger, fourth finger and little finger are used to operate the keys provided on the left side face of the right housing,
ten fingers of both hands are always placed at the letter input means,
wherein the cell phone has, on the position which can be operated by any one finger of the left hand, function key (different from said keys) which can be performed by cooperating with the joy key, for performing copying, cutting and pasting of e-mail sentence etc. which is already made in the display of the cell phone.

18. A cell phone, **characterized in that**:
the main body of the cell phone having a substantially rectangular parallelepiped shape has, on one face of faces having narrower widths including the longest edge line, at least twelve keys including at least two shift keys and one set of joy stick,
the main body has, on the other face having narrower widths, at least sixteen keys,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of the face having a broad width and a straight line running from the front teeth to a center point between the eyebrows are provided in a substantially parallel manner,
one face having the joy sticks has thereon one hand's thumb, the other hand's forefinger, middle finger, fourth finger, and little finger, and the other face has thereon the other hand's thumb, one hand's forefinger, middle finger, fourth finger, and little finger, thereby allowing the ten fingers of both hands to input,
the cell phone is held so that one (other) hand's thumb and the other (one) hand's forefinger and the other (one) hand's thumb and one (other) hand little finger are shifted so that the former and the latter approach to each other, thereby allowing palms of both hands to face the user's face,
ten fingers of both hands are always placed at the letter input means,
wherein the cell phone has, on the position which can be operated by any one finger of hand which is not operating the joy stick, function key (different from said keys) which can be performed by cooperating with the joy key, for performing copying, cutting and pasting of e-mail sentence etc. which is already made in the display of the cell phone.

19. A cell phone, **characterized in that**:
the main body of the cell phone having a substantially rectangular parallelepiped shape has, on one face of faces having narrower widths including the longest edge line, at least eight keys including at least two shift keys and one set of joy stick,
the main body has, on the other face having narrower widths, at least twenty keys,
the cell phone is held so that side section of the hand are shifted so that each side approach to each other, thereby allowing palms of both hands to be opposed to both faces of the broadest face of the cell phone main body,
ten fingers of both hands are always placed at the letter input means,
wherein the cell phone has, on the position which can be operated by any one finger of hand which is not operating the joy stick, function key (different from said keys) which can be performed by cooperating with the joy key, for performing copying, cutting and pasting of e-mail sentence etc. which is already made in the display of the cell phone.

20. A cell phone or a small PDA device (hereinafter a cell phone or a small PDA device is referred to as "cell phone" up to claim 31), **characterized in that**:
a main body of the cell phone is held by both hands,
the main body of the cell phone having a substantially rectangular parallelepiped shape has, on both faces having narrower widths including the longest edge line, at least four shift keys, at least one set of joy key, or joy stick, or arrow direction key, or cogwheel-type or ball rotation-type input means for taking the task (hereinafter, joy key, or joy stick, or arrow direction key, or cogwheel-type or ball rotation-type input means for taking the task is referred to as "joy stick" up to claim 31), and at least twenty-six keys,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of the face having a broad width and a straight line running from the front teeth to a center point between the eyebrows are provided in a substantially parallel manner,
one face having the joy sticks has thereon one hand's thumb, the other hand's forefinger, middle finger, fourth finger, and little finger, and the other face has thereon the other hand's thumb, one hand's forefinger, middle finger, fourth finger, and little finger, thereby allowing the ten fingers of both hands to input,
the cell phone is held so that one hand's thumb and the other hand's forefinger and the other hand's thumb and one hand little finger or one hand thumb and the other hand's little finger and the other hand's thumb and one hand's forefinger are shifted so that the former and the latter approach to each other, thereby allowing palms of both hands to face the user's face,
ten fingers of both hands are always placed at the joy stick and the keys (hereinafter joy stick and keys are referred to as "letter input means" up to claim 31), shift keys are assigned to any two fingers of each forefinger, middle finger, fourthfinger or little finger so that the fingers are placed at home positions for providing the pressing/operation of a targeted letter input means,
at least a total of thirty keys including said shift keys and said joy stick are provided so that the pressing/operation by one hand's thumb to the shift keys and the joy stick, the pressing/operation by the both hand's thumb to at least six keys, the pressing/operation by each of two forefingers to at least four keys, and the pressing/operation by each of the remaining six fingers to at least two keys are performed,
of ten fingers, any one finger or a simultaneous input of one finger for shift key and the remaining nine fingers can provide the input of the letter input means, and
a single key pushing operation by any one finger of the fingers of both hands can provide, without switching of the conditions such as a shift key, the input of any one letter of at least twenty-six alphabet letters or at least twenty-six letters of other kinds.

21. A cell phone, **characterized in that**:
a main body of the cell phone is held by both hands,
the main body of the cell phone having a substantially rectangular parallelepiped shape has, on both faces having narrower widths including the longest edge line, at least four shift keys, at least one set of joy stick, and at least twenty-six keys,
the thumbs and the respective remaining four fingers of both hands sandwich the cell phone,
a main body of the cell phone having a substantially rectangular parallelepiped shape has one face having the joy stick and narrower widths including the longest edge line, and the face is provided in front of a user's face,
the longitudinal direction of the face and a straight line running from the front teeth to a center point between the eyebrows are provided in a substantially parallel manner,
while the entirety of a display substantially rotated by 90 degrees from the storage position is being provided substantially in front of the user's face, ten fingers of both hands are used for input,
flat faces of the nails of both hand's thumbs and ball faces of the remaining eight fingers (which are provided to the opposite side of the flat face of the nail) are provided substantially in front of the user's face,
the cell phone is held so that a side section of a nail of one hand little finger and a side section of a nail of the other hand's forefinger are shifted so that the former and the latter approach to each other, thereby allowing palms of both hands to be opposed to both faces of the broadest face of the cell phone main body,
ten fingers of both hands are always placed at the letter input means, shift keys are assigned to any two fingers of each forefinger, middle finger, fourthfinger or little finger so that the fingers are placed at home positions for providing the pressing/operation of a targeted letter input means,
at least a total of thirty keys including said shift keys and said joy stick are provided so that the pressing/operation by one hand's thumb to the shift keys and the joy stick, the pressing/operation by the both hand's thumb to at least six keys, the pressing/operation by each of two forefingers to at least four keys, and the pressing/operation by each of the remaining six fingers to at least two keys are performed,
of ten fingers, any one finger or a simultaneous input of one finger for shift key and the remaining nine fingers can provide the input of the letter input means, and
a single key pushing operation by any one finger of the fingers of both hands can provide, without switching of the conditions such as a shift key, the input of any one letter of at least twenty-six alphabet letters or at least twenty-six letters of other kinds.

22. A cell phone, **characterized in that**:
the cell phone is obtained by connecting two housings at left and right,
the cell phone comprises:
total of at least ten keys and at least one set of joy stick provided on both the left side face of the left housing and the right side face of the right housing;
at least ten keys provided on the right side face of the left housing;
at least ten keys provided on the left side face of the right housing, or
total of at least six keys and at least one set of joy stick provided on both the left side face of the left housing and the right side face of the right housing;
at least twelve keys provided on the right side face of the left housing;
at least twelve keys provided on the left side face of the right housing,
the thumbs and the respective remaining four fingers of both hands sandwich the cell phone,
a right hand is used to operate only letter input means provided on the right housing and a left hand is used to operate only letter input means provided on the left housing,
ten fingers of both hands are always placed at the letter input means,
total of at least thirty keys including four shift keys and the joy stick are provided so that left hand thumb is used to operate the letter input means provided on the left side face of the left housing, remaining left hand's four fingers are used to operate the letter input means provided on the right side face of the left housing, right hand thumb is used to operate the letter input means provided on the right side face of the right housing, and remaining right hand's four fingers are used to operate the letter input means provided on the left side face of the right housing,
the shift keys are assigned to any two fingers of each forefinger, middle finger, fourthfinger or little finger so that the fingers are placed at home positions for providing the pressing/operation of a targeted letter input means,
of ten fingers, any one finger or a simultaneous input of one finger for shift key and the remaining nine fingers can provide the input of the letter input means, and
a single key pushing operation by any one finger of the fingers of both hands can provide, without switching of the conditions such as a shift key, the input of any one letter of at least twenty-six alphabet letters or at least twenty-six letters of other kinds.

23. A cell phone, **characterized in that**:
a main body of the cell phone is held by both hands,
the main body of the cell phone having a substantially rectangular parallelepiped shape has, on both faces having narrower widths including the longest edge line, at least two shift keys, at least one set of joy stick, and thirty-nine to forty-eight keys,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of said face having a broad width and a straight line running from the user's front teeth to a center point between the eyebrows are provided in a substantially parallel manner,
one face having the joy stick has thereon one hand's thumb, the other hand's forefinger, middle finger, fourth finger, and little finger, and the other face has thereon the other hand's thumb, one hand's forefinger, middle finger, fourth finger, and little finger, thereby allowing the ten fingers of both hands to input letters,
the cell phone is held so that one hand's thumb and the other hand's forefinger and the other hand's thumb and one hand little finger or one hand thumb and the other hand's little finger and the other hand's thumb and one hand's forefinger are shifted so that the former and the latter approach to each other, thereby allowing palms of both hands to face the user's face,
ten fingers of both hands are always placed at the letter input means,
total of forty-one to fifty keys including said shift keys, and said joy stick are provided so that the pressing/operation by one hand's thumb to the joy stick, by the both hand's thumbs to at least nine keys, by each of two forefingers to at least six keys, by each of the remaining six fingers to at least three keys are provided,
shift keys are assigned to any two fingers of each forefinger, middle finger, fourthfinger or little finger so that the fingers are placed at home positions for providing the pressing/operation of a targeted letter input means,
of ten fingers, any one finger or a simultaneous input of one finger for shift key and the remaining nine fingers can provide the input of the letter input means, and
a single key pushing operation by any one finger of the fingers of both hands can provide, without switching of the conditions such as a shift key, the input of any one letter of about thirty-nine letters.

24. A cell phone, **characterized in that**:
a main body of the cell phone is held by both hands,
the main body of the cell phone having a substantially rectangular parallelepiped shape has, on both faces having narrower widths including the longest edge line, at least two shift keys, at least one set of joy stick, and thirty-nine to forty-eight keys,
the thumbs and the respective remaining four fingers of both hands sandwich the cell phone,
a main body of the cell phone having a substantially rectangular parallelepiped shape has one face having the joy stick and narrower widths including the longest edge line, and the face is provided in front of a user's face,
the longitudinal direction of said face and a straight line running from the user's front teeth to a center point between the eyebrows are provided in a substantially parallel manner,
while the entirety of a display substantially rotated by 90 degrees from the storage position is being provided substantially in front of the user's face, ten fingers of both hands are used for input,
flat faces of the nails of both hand's thumbs and ball faces of the remaining eight fingers (which are provided to the opposite side of the flat face of the nail) are provided substantially in front of the user's face,
the cell phone is held so that a side section of a nail of one hand little finger and a side section of a nail of the other hand's forefinger are shifted so that the former and the latter approach to each other, thereby allowing palms of both hands to be opposed to both faces of the broadest face of the cell phone main body,
ten fingers of both hands are always placed at the letter input means,
total of forty-one to fifty keys including said shift keys, and said joy stick are provided so that the pressing/operation by one hand's thumb to the joy stick, by the both hand's thumbs to at least nine keys, by each of two forefingers to at least six keys, by each of the remaining six fingers to at least three keys are provided,
shift keys are assigned to any two fingers of each forefinger, middle finger, fourthfinger or little finger so that the fingers are placed at home positions for providing the pressing/operation of a targeted letter input means,
of ten fingers, any one finger or a simultaneous input of one finger for shift key and the remaining nine fingers can provide the input of the letter input means, and
a single key pushing operation by any one finger of the fingers of both hands can provide, without switching of the conditions such as a shift key, the input of any one letter of about thirty-nine letters.

25. A cell phone, **characterized in that**:
the cell phone is obtained by connecting two housings at left and right,
the cell phone comprises:
total of at least eleven keys and at least one set of joy stick provided on both the left side face of the left housing and the right side face of the right housing;
at least fifteen keys provided on the right side face of the left housing;
at least fifteen keys provided on the left side face of the right housing, or
total of at least nine keys and at least one set of joy stick provided on both the left side face of the left housing and the right side face of the right housing;
at least sixteen keys provided on the right side face of the left housing;
at least sixteen keys provided on the left side face of the right housing,
the thumbs and the respective remaining four fingers of both hands sandwich the cell phone,
a right hand is used to operate only letter input means provided on the right housing and a left hand is used to operate only letter input means provided on the left housing,
ten fingers of both hands are always placed at the letter input means, and
forty-one to fifty keys including at least two shift keys, and said joy stick are provided so that left hand thumb is used to operate the letter input means provided on the left side face of the left housing, remaining left hand's four fingers are used to operate the letter input means provided on the right side face of the left housing, right hand thumb is used to operate the letter input means provided on the right side face of the right housing, and remaining right hand's four fingers are used to operate the letter input means provided on the left side face of the right housing,
the shift keys are assigned to any two fingers of each forefinger, middle finger, fourthfinger or little finger so that the fingers are placed at home positions for providing the pressing/operation of a targeted letter input means,
of ten fingers, any one finger or a simultaneous input of one finger for shift key and the remaining nine fingers can provide the input of the letter input means, and
a single key pushing operation by any one finger of the fingers of both hands can provide, without switching of the conditions such as a shift key, the input of any one letter of about thirty-nine letters.

26. A cell phone, **characterized in that**:
a main body of the cell phone is held by both hands,
the main body of the cell phone having a substantially rectangular parallelepiped shape has, on both faces having narrower widths including the longest edge line, at least one set of joy stick, and at least twenty-six keys in total,
the thumbs and the respective remaining four fingers of both hands sandwich the cell phone,
the main body of the cell phone having a substantially rectangular parallelepiped shape has a face having a broad width including the longest edge line which is provided with the entirety of a display so that the entirety of the display is provided in substantially front of a user's face while the longitudinal direction of said face having a broad width and a straight line running from the user's front teeth to a center point between the eyebrows are provided in a substantially parallel manner,
one face having the joy stick has thereon one hand's thumb, the other hand's forefinger, middle finger, fourth finger, and little finger, and the other face has thereon the other hand's thumb, one hand's forefinger, middle finger, fourth finger, and little finger, thereby allowing the ten fingers of both hands to input,
the cell phone is held so that one hand's thumb and the other hand's forefinger and the other hand's thumb and one hand little finger or one hand thumb and the other hand's little finger and the other hand's thumb and one hand's forefinger are shifted so that the former and the latter approach to each other, thereby allowing palms of both hands to face the user's face,
ten fingers of both hands are always placed at the letter input means, and
a single key pushing operation by any one finger of the fingers of both hands can provide, without switching of the conditions such as a shift key, the input of any one letter of at least twenty-six alphabet letters or at least twenty-six letters of other kinds.

27. A cell phone, **characterized in that**:
a main body of the cell phone is held by both hands,
the main body of the cell phone having a substantially rectangular parallelepiped shape has, on both faces having narrower widths including the longest edge line, at least one set of joy stick, and at least twenty-six keys in total,
the thumbs and the respective remaining four fingers of both hands sandwich the cell phone,
a main body of the cell phone having a substantially rectangular parallelepiped shape has one face having the joy sticks and narrower widths including the longest edge line, and said face is provided in front of a user's face,
the longitudinal direction of said face and a straight line running from the user's front teeth to a center point between the eyebrows are provided in a substantially parallel manner,
while the entirety of a display substantially rotated by 90 degrees from the storage position is being provided substantially in front of the user's face, ten fingers of both hands are used for input,
flat faces of the nails of both hand's thumbs and ball faces of the remaining eight fingers (which are provided to the opposite side of the flat face of the nail) substantially turns to the user's face,
the cell phone is held so that a side section of a nail of one hand little finger and a side section of a nail of the other hand's forefinger are shifted so that the former and the latter approach to each other, thereby allowing palms of both hands to be opposed to both faces of the broadest face of the cell phone main body,
ten fingers of both hands are always placed at the letter input means, and
a single key pushing operation by any one finger of the fingers of both hands can provide, without switching of the conditions such as a shift key, the input of any one letter of at least twenty-six alphabet letters or at least twenty-six letters of other kinds.

28. A communication equipment, **characterized in that**:
a main body of the communication equipment is held by both hands,
the main body of the communication equipment having a substantially rectangular parallelepiped shape has, on both faces having narrower widths including the longest edge line, at least one set of joy stick, and at least twenty-six keys in total,
the thumbs and the respective remaining four fingers of both hands sandwich the communication equipment,
a front face having a broad width including the longest edge line of the main body of the communication equipment is turned upwards when the user looks at a display provided within the limits of user's field of view apart from the communication equipment while the longitudinal direction of said face having a broad width and a straight line running from the user's body to the display are provided in a substantially parallel manner,
one face having the joy stick has thereon one hand's thumb, the other hand's forefinger, middle finger, fourth finger, and little finger, and the other face has thereon the other hand's thumb, one hand's forefinger, middle finger, fourth finger, and little finger, thereby allowing the ten fingers of both hands to input,
the communication equipment is held so that one hand's thumb and the other hand's forefinger and the other hand's thumb and one hand little finger or one hand thumb and the other hand's little finger and the other hand's thumb and one hand's forefinger are shifted so that the former and the latter approach to each other, thereby allowing palms of both hands to face the rear face of the communication equipment,
ten fingers of both hands are always placed at the letter input means, and
a single key pushing operation by any one finger of the fingers of both hands can provide, without switching of the conditions such as a shift key, the input of any one letter of at least twenty-six alphabet letters or at least twenty-six letters of other kinds.

29. A communication equipment, **characterized in that**:
a main body of the communication equipment is held by both hands,
the main body of the communication equipment having a substantially rectangular parallelepiped shape has, on both faces having narrower widths including the longest edge line, at least one set of joy stick, and at least twenty-six keys in total,
the thumbs and the respective remaining four fingers of both hands sandwich the communication equipment,
one face having the joy stick and narrower widths including the longest edge line of the main body of the communication equipment is turned upwards when the user looks at a display provided within the limits of user's field of view apart from the communication equipment while the longitudinal direction of said face having the narrower widths and a straight line running from the user's body to the display are provided in a substantially parallel manner,
flat faces of the nails of both hand's thumbs and ball faces of the remaining eight fingers (which are provided to the opposite side of the flat face of the nail) are substantially turned upwards,
the communication equipment is held so that a side section of a nail of one hand little finger and a side section of a nail of the other hand's forefinger are shifted so that the former and the latter approach to each other, thereby allowing palms of both hands to be opposed to both faces of the broadest face of the communication equipment main body,
ten fingers of both hands are always placed at the letter input means, and
a single key pushing operation by any one finger of the fingers of both hands can provide, without switching of the conditions such as a shift key, the input of any one letter of at least twenty-six alphabet letters or at least twenty-six letters of other kinds.

30. A communication equipment for receiving and transmitting the information while driving the automobile
**characterized in that**:
the input device of the communication equipment is provided on the steering handle of the automobile which can be gripped by both hands so that the input device can be used for letter input,
In the state of the handle angle at the time of going straight while driving the automobile,
at least six keys in three rows and two columns provided on the contact surface by the ball face (which is provided to the opposite side of the flat face of the nail) of the left hand thumb on the left side of the gripping handle,
at least ten keys in five rows and two columns provided on the contact surface by the ball faces (which are provided to the opposite side of the flat face of the nail) of the left hand forefinger, middle finger, fourth finger and little finger on the left side of the gripping handle,
at least one set of joy key and at least six keys in three rows and two columns including at least two shift keys provided on the contact surface by the ball face (which is provided to the opposite side of the flat face of the nail) of the right hand thumb on the right side of the gripping handle,
at least ten keys in five rows and two columns provided on the contact surface by the ball faces (which are provided to the opposite side of the flat face of the nail) of the right hand forefinger, middle finger, fourth finger and little finger on the right side of the gripping handle,
ten fingers of both hands are always placed at the letter input means, and
while said handle is being provided substantially in front of the user's body, both hands are used for input by gripping and inserting the handle between the thumb and the other four fingers of both hands while watching the display provided on the position near the driver's seat.
a single key pushing operation by any one finger of the fingers of both hands can provide, without switching of the conditions such as a shift key, the input of any one letter of at least twenty-six alphabet letters or at least twenty-six letters of other kinds.

31. The communication equipment according to claim 30, **characterized in that**,
said letter input means can be manufactured independently apart from the handle body for driving, and said letter input means can be also attached by covering the handle of the automobile,
said letter input means can be exchanged easily by removing only said letter input means from the handle.

32. The communication equipment according to claim 30, **characterized in that**, for allowing a reaction force of pressing/operation by letter input means on thumb side to be accepted by forefinger, middle finger, fourth finger and little finger, and for allowing a reaction force of pressing/operation by letter input means on forefinger, middle finger, fourth finger and little finger side to be accepted by thumb, and for preventing keys from being erroneously pushed, neighboring keys have thereamong a frame higher than height of the keys.

33. The communication equipment according to claim 32, **characterized in that** a specific position of said frame according to claim 32 has thereon a projection, thereby allowing a user to tactilely know where a current position of user's finger is.

34. The communication equipment according to 32, **characterized in that** home positions for at least ten fingers on the frame according to claim 32 are provided with concavities for accepting the fingers, thereby allowing a user's ten fingers to tactilely know where the home positions are so as to guide the ten fingers to the home positions.

35. The communication equipment according to claim 30, wherein for indicating the correspondence between the letter input means and letters to be inputted, the communication equipment always has a print, on the surface of the handle thereof, near the key, showing the key corresponding to the letters to be inputted.

36. The communication equipment according to claim 30, wherein for indicating the letters selected by a shift key, the communication equipment has, on the display thereof, an indication to guide the letter keys corresponding to the state at the time of shift key.

37. The cell phone or the communication equipment according to any one of claims 1 to 9, 17 to 30, wherein: one set of two-way joy key is used instead of neighboring two keys, or
one set of two-way joy key and one key are used instead of neighboring three keys.

38. The cell phone or the communication equipment according to any one of claims 1 to 9, 17 to 30, wherein:
the cell phone can restrict the input means only to the letter input means of the range which can be operated by one hand, and said input means can be switched to the mode in which the letter input of a sentence is possible.
